# EUROPEAN PATENT APPLICATION

(11) **EP 4 571 414 A1**
(43) Date of publication of application: **18.06.2025**
(21) Application number: 23852702.2
(22) Date of filing: 12.06.2023
(51) Int. Cl.: G03B 3/10, G03B 13/36, G03B 5/04, G03B 17/12, H04N 23/54, H04N 23/55, G02B 27/64, H02K 41/035

(54) **LENS DRIVING DEVICE, CAMERA DEVICE, AND OPTICAL DEVICE**

(30) Priority: 09.08.2022 KR 20220099581; 11.01.2023 KR 20230004329
(71) Applicant: LG INNOTEK CO. LTD, Gangseo-gu Seoul 07796 (KR)
(72) Inventor: LEE, Sung Guk, Seoul 07796 (KR)
(74) Representative: DREISS Patentanwälte PartG mbB
(86) International application number: PCT/KR2023/008002
(87) International publication number: WO 2024/034815

(57) **Abstract**

A first embodiment of the present invention relates to a lens driving device comprising: a stationary part; a first movable part which is disposed within the stationary part; a second movable part which is disposed within the first movable part; a first drive part which moves the first movable part in a direction perpendicular to the optical axis; and a second drive part which moves the second movable part in the optical-axis direction, wherein the second drive part comprises: a first magnet which is disposed in the second movable part; and a first coil which is arranged to be opposite to the first magnet and is disposed in the stationary part.

## Description

### [Technical Field]

The present embodiment relates to a lens driving device, a camera device and an optical device.

### [Background Arts]

A camera device is a device that takes pictures or videos of a subject and is installed in optical devices such as smartphones, drones, and vehicles.

The camera device is equipped with an autofocus function that automatically adjusts the focus depending on the distance of the subject. In addition, the camera device is equipped with a hand-shake correction function that prevents the focus from being blurred by the user's hand shake.

In the past, the image stabilization module that performs the image stabilization function was placed within the autofocus module that performs the autofocus function.

In this case, the size and weight of the magnet for autofocus operation increases because the image stabilization module must be moved along with the lens to operate the autofocus.

In particular, the problem is being exacerbated by the increase in lens diameter and weight due to the recent increase in the resolution of image sensors.

In addition, in order to place the magnets and coils required for the autofocus and image stabilization functions, the optical axis requires a size larger than the thickness of the smartphone, which causes the camera device mounted on the smartphone to protrude from the rest of the smartphone.

(Patent Document One) KR 10-2015-0118005 A

### [Summary of the Invention]

### [Technical Subject]

The first embodiment of the present invention provides a lens driving device in which an autofocus module is placed within a handshake correction module. In other words, the handshake correction module provides a lens driving device that does not move when the autofocus is activated.

A second embodiment of the present invention provides a camera device that has an autofocus function and an image stabilization function, while having a size that is minimized in the optical axis direction.

### [Technical Solution]

A lens driving device according to a first embodiment of the present invention may comprise: a stationary part; a first movable part which is disposed within the stationary part; a second movable part which is disposed within the first movable part; a first drive part which moves the first movable part in a direction perpendicular to the optical axis; and a second drive part which moves the second movable part in the optical-axis direction, wherein the second drive part comprises: a first magnet which is disposed in the second movable part; and a first coil which is arranged to be opposite to the first magnet and is disposed in the stationary part.

A lens driving device according to a first embodiment of the present invention may comprise: a stationary part; a first movable part comprising a first carrier movable in the X-axis perpendicular to the optical axis direction and a second carrier movable in the Y-axis perpendicular to the optical axis direction; a second movable part disposed in the first movable part and movable in the optical axis direction; a first magnet disposed in the second movable part; a second magnet disposed in the first carrier; a third magnet disposed on the second carrier; a first coil disposed to face the first magnet; a second coil disposed to face the second magnet in the optical axis direction; and a third coil disposed to face the third magnet in the optical axis direction, wherein the first coil may be disposed on the first side of the stationary part.

A lens driving device according to a first embodiment of the present invention may comprise: a coil part; a housing disposed on the coil part; a first carrier moveable in the X-axis direction perpendicular to the optical axis; a second carrier moveable in the Y-axis direction perpendicular to the optical axis; a bobbin disposed within the second carrier; a first magnet disposed on the bobbin; a second magnet disposed on the first carrier; a third magnet disposed on the second carrier; a first ball disposed between the housing and the first carrier; and a second ball disposed between the first carrier and the second carrier, wherein the coil part may comprise a second coil disposed to face the second magnet in the optical axis direction and a third coil disposed to face the third magnet in the optical axis direction.

Preferably, but not necessarily, the third magnet may be disposed between the second carrier and the third coil, and may be disposed lower than the second ball.

Preferably, but not necessarily, the housing may not move.

Preferably, but not necessarily, the lens driving device may further comprise a first coil disposed in the housing and that is disposed opposite the first magnet.

Preferably, but not necessarily, the lens driving device may comprise a third ball disposed between the bobbin and the second carrier.

Preferably, but not necessarily, the second carrier may comprise a protrusion that protrudes in the direction of the third coil, and the third magnet may be disposed on the protrusion.

Preferably, but not necessarily, the first carrier may comprise a groove into which the protrusion is inserted.

Preferably, but not necessarily, the second magnet and the third magnet may be overlapped on a virtual plane perpendicular to the optical axis direction.

Preferably, but not necessarily, the virtual plane and the first magnet may not overlap.

Preferably, but not necessarily, the lens driving device may comprise a first substrate disposed in the housing, and the first coil may be disposed on the first substrate.

Preferably, but not necessarily, the first coil may be disposed on an inner surface of the first substrate, a yoke may be disposed on an outer surface of the first substrate, and an attraction force may act between the first magnet and the yoke.

Preferably, but not necessarily, when the second carrier is moved by the third magnet and the third coil, the bobbin may also move with the second carrier, changing the distance between the first magnet and the first coil.

Preferably, but not necessarily, when the bobbin is moved by the first magnet and the first coil, the distance between the first magnet and the first coil in the y-axis direction may remain constant, and when the first carrier, the second carrier, and the bobbin are moved together by the second magnet and the second coil, the distance between the first magnet and the first coil in the y-axis direction may remain constant.

Preferably, but not necessarily, the lens driving device may comprise a base, the coil part may comprise a second substrate disposed on the base, and the second coil and the third coil may be disposed on the second substrate.

Preferably, but not necessarily, the second coil and the third coil may be disposed on an upper surface of the second substrate, and a yoke may be at a position corresponding to the second coil and the third coil on a lower surface of the second substrate, and the base may comprise a groove in which the yoke is disposed, which is concave on the upper surface of the base.

Preferably, but not necessarily, the first magnet may comprise an outer surface facing the first coil, an inner surface opposite the outer surface, an upper surface and a lower surface, two side surfaces, and a chamfer surface connecting the inner surface and the two side surfaces.

A camera device according to a first embodiment of the present invention may comprise: a printed circuit board; an image sensor disposed on the printed circuit board; a lens driving device disposed on the printed circuit board; and a lens coupled to the lens driving device.

An optical device according to a first embodiment of the present invention may comprise: a main body; a camera device disposed in the main body; and a display disposed in the main body and outputting one or more of images and videos captured by the camera device.

A lens driving device according to a second embodiment of the present invention may comprise: a stationary part; a second movable part disposed on the stationary part; a first movable part disposed within the second movable part; a first coil and a first magnet that move the first movable part in the optical axis direction; a second coil and a second magnet that move the second movable part in a first direction perpendicular to the optical axis direction; and a first yoke disposed in a position corresponding to the first magnet, wherein the first magnet may be disposed in the first movable part, and the first yoke may be disposed in the second movable part.

The lens driving device may comprise a first ball that is disposed between the first movable part and the second movable part, and the first ball can be pressed between the first movable part and the second movable part by the attraction between the first magnet and the first yoke.

Preferably, but not necessarily, the first magnet may be overlapped with the first yoke in the first direction.

Preferably, but not necessarily, the first yoke may comprise a first unit yoke and a second unit yoke that are spaced apart from each other, and the first magnet may be disposed between the first unit yoke and the second unit yoke in the first direction.

Preferably, but not necessarily, the first magnet may comprise a first surface facing the first coil and a second surface opposite the first surface, and in the first direction, the width of the first surface of the first magnet may be smaller than the width of the second surface of the first magnet.

The lens driving device may comprise: a third movable part that is disposed between the stationary part and the second movable part; and a third coil and a third magnet that move the third movable part in a second direction perpendicular to the optical axis direction and the first direction.

Preferably, but not necessarily the first magnet may not overlap the first yoke in the second direction.

Preferably, but not necessarily, the first movable part may comprise a first surface, the second movable part may comprise a first surface facing the same direction as the first surface, the first magnet may be disposed on the first surface of the first movable part, and the first yoke may be disposed on the first surface of the second movable part.

Preferably, but not necessarily, the second movable part may comprise a groove formed concave on the first surface of the second movable part, and the first yoke may be disposed in the groove.

Preferably, but not necessarily, the second magnet may be overlapped with the second coil in the optical axis direction.

Preferably, but not necessarily, the third magnet may be overlapped with the third coil in the optical axis direction.

The lens driving device may comprise: a second ball that is disposed between the second movable part and the third movable part; and a second yoke that acts on attraction with the second magnet, wherein the second magnet may be disposed on the second movable part, and the second yoke may be disposed on the stationary part.

The lens driving device may comprise: a third ball disposed between the stationary part and the third movable portion; and a third yoke with which the third magnet attracts the force of attraction, wherein the third magnet may be disposed in the third movable part, and the third yoke may be disposed in the second movable part.

The lens driving device may comprise a fourth yoke that acts on the attraction with the third magnet, and the fourth yoke may be disposed on the stationary part.

The lens driving device may comprise: a fourth magnet disposed in the second movable part; and a fifth yoke that acts on the attraction with the fourth magnet, and the fifth yoke may be disposed in the stationary part.

A camera device according to a second embodiment of the present invention may comprise: a printed circuit board; an image sensor disposed on the printed circuit board; a lens driving device disposed on the printed circuit board; and a lens coupled to the lens driving device.

An optical device according to a second embodiment of the present invention may comprise a main body; a camera device disposed in the main body; and a display disposed in the main body and outputting one or more of images and videos captured by the camera device.

### [Advantageous Effects]

In the first embodiment of the present invention, the autofocus module is disposed within the image stabilization (handshake correction) module, so that the image stabilization module does not move when the autofocus is activated.

This reduces the electromagnetic force required for autofocus operation, which in turn reduces the size and weight of the magnet for autofocus operation. As a result, lenses with larger diameters and weights can be mounted.

More specifically, since the AF stroke length is longer than the OIS stroke length, reducing the weight of the AF moving part that moves the relatively longer AF stroke section can lead to a reduction in power consumption.

Furthermore, in the first embodiment of the present invention, the coil for compensating for handshake can be placed on the bottom, thereby reducing the size in the direction perpendicular to the optical axis of the lens driving device. The coil for image stabilization can be placed below the magnet.

In the second embodiment of the present invention, an autofocus function and a shake-compensation function can be performed in a camera device with a size minimized in the optical axis direction.

The camera device according to the second embodiment of the present invention may not protrude from the smartphone. Alternatively, the camera device according to the second embodiment of the present invention may protrude from the smartphone to a minimum extent.

According to a second embodiment of the present invention, a camera device that does not protrude from a smartphone or protrudes minimally can perform both the autofocus function and the image stabilization function.

Furthermore, the second embodiment of the present invention can provide a camera device with a minimized size in both the horizontal and vertical directions perpendicular to the optical axis.

In addition, since both the N-pole region and the S-pole region of the magnet are used, the Hall sensor has the advantage of making the most of the linear section of the Hall output.

### [Brief Description of Drawings]

FIG. 1 is a perspective view of the lens driving device according to a first embodiment of the present invention.
FIG. 2 is a cross-sectional view of FIG. 1 from A-A.
FIG. 3 is a cross-sectional view of FIG. 1 from B-B.
FIG. 4 is a cross-sectional view of FIG. 1 from C-C.
FIG. 5 is a cross-sectional view of FIG. 1 from D-D.
FIG. 6 is a cross-sectional view of the lens driving device according to the first embodiment of the present invention, cut in a direction perpendicular to the optical axis.
FIGS. 7 to 9 are exploded perspective views of the lens driving device according to a first embodiment of the present invention, viewed from mutually different directions.
FIG. 10 is a perspective view of the lens driving device of the first embodiment of the present invention with the cover omitted.
FIG. 11 is an exploded perspective view of the lens driving device of the first embodiment of the present invention, showing the combined structure of the base, the OIS board, and the related configuration.
FIG. 12 is a perspective view of a portion of a stationary part of the lens driving device according to the first embodiment of the present invention and related configuration.
FIG. 13 is a bottom perspective view showing the OIS-x carrier and related configuration that is coupled with the stationary part of FIG. 12.
FIG. 14 is a perspective view showing the OIS-x carrier disposed in the lens driving device in the state of FIG. 12.
FIG. 15a is a bottom perspective view showing the OIS-y carrier and related configuration that is coupled with the OIS-x carrier in FIG. 14.
FIG. 15b is an exploded perspective view of the OIS-x carrier and OIS-y carrier of the lens driving device according to the first embodiment of the present invention.
FIG. 15c is a bottom exploded perspective view of the OIS-x carrier and the OIS-y carrier of the lens driving device according to the first embodiment of the present invention.
FIG. 16 is a perspective view showing the OIS-y carrier disposed in the lens driving device in the state of FIG. 14.
FIG. 17 is a perspective view of the OIS-x carrier and OIS-y carrier of the lens driving device according to the first embodiment of the present invention and related configurations.
FIG. 18 is a perspective view showing the AF carrier and related configuration of the lens driving device according to the first embodiment of the present invention.
FIG. 19 is a perspective view of the lens driving device of the first embodiment of the present invention with the cover and housing removed.
FIG. 20 is a front view of the lens driving device in the state of FIG. 19 with the AF substrate removed.
FIG. 21 is a side view of the lens driving device in the state of FIG. 19, viewed from a different direction.
FIG. 22 is a side view of the lens driving device in the state of FIG. 21 viewed from the opposite direction to that of FIG. 20.
FIG. 23 is a perspective view of the lens driving device of the first embodiment of the present invention with the cover and the movable part removed.
FIG. 24 is a perspective view showing a drive part and related configuration of the lens driving device according to the first embodiment of the present invention.
FIG. 25a is a perspective view of the lens driving device in the state of FIG. 24 viewed from another direction.
FIG. 25b is a perspective view showing the shape of the AF magnet and related configuration according to the variant example.

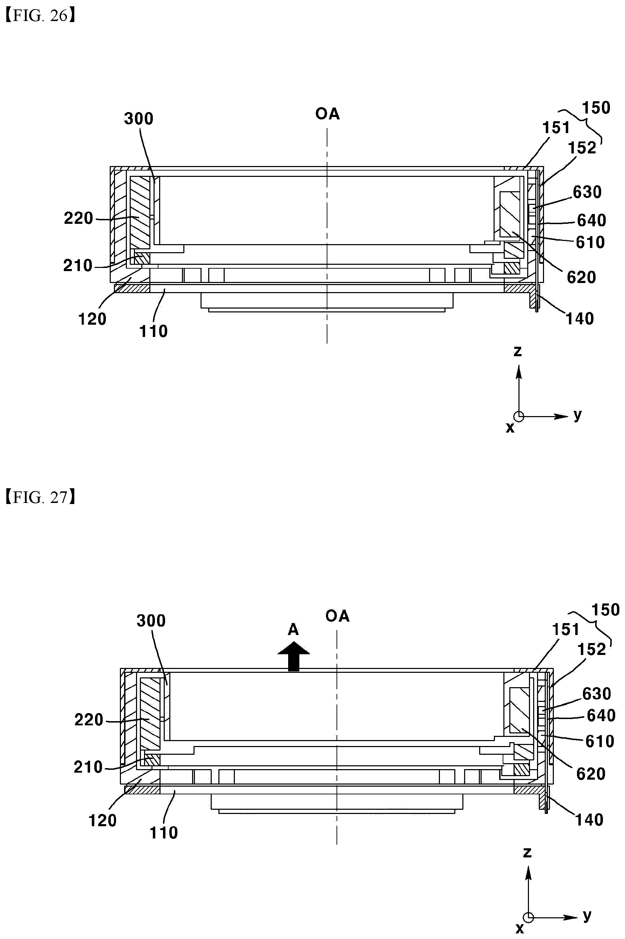

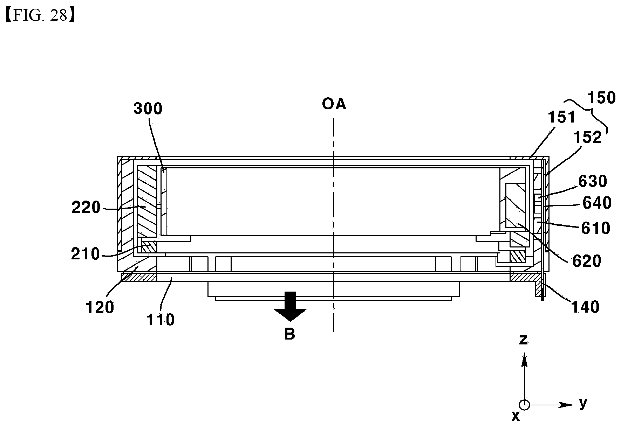

FIGS. 26 to 28 are drawings for explaining the autofocus operation of the lens driving device according to the first embodiment of the present invention. FIG. 26 is a cross-sectional view showing the state of the movable part in the initial state when no current is applied to the AF coil. FIG. 27 is a cross-sectional view showing that the movable part moves upward in the optical axis direction when a forward current is applied to the AF coil. FIG. 28 shows a cross-sectional view of the movable part moving to the lower side of the optical axis when the reverse current is applied to the AF coil.

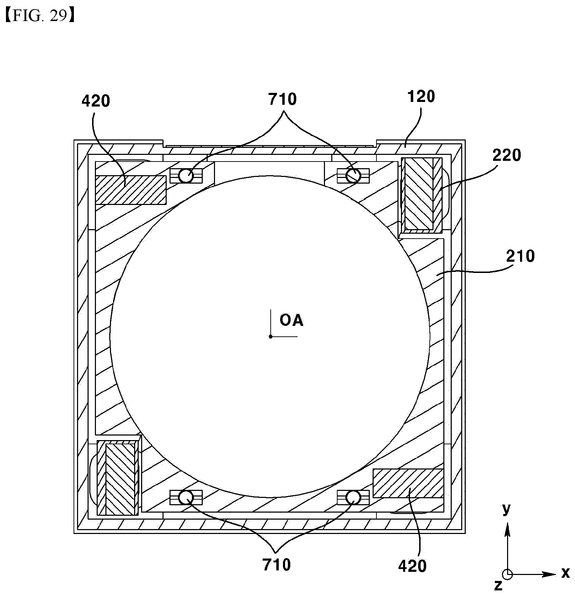

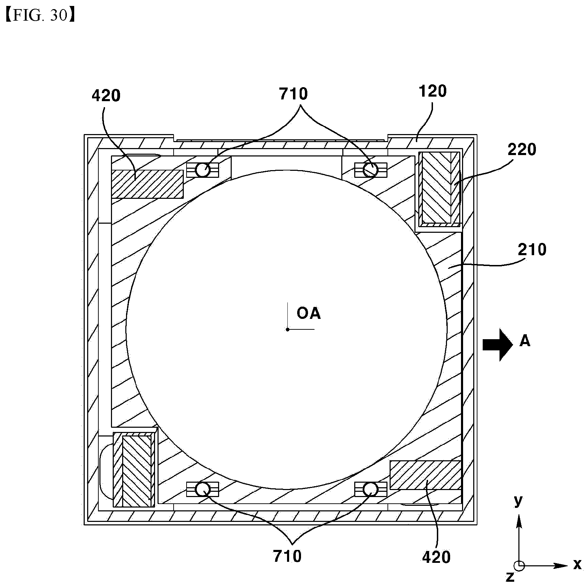

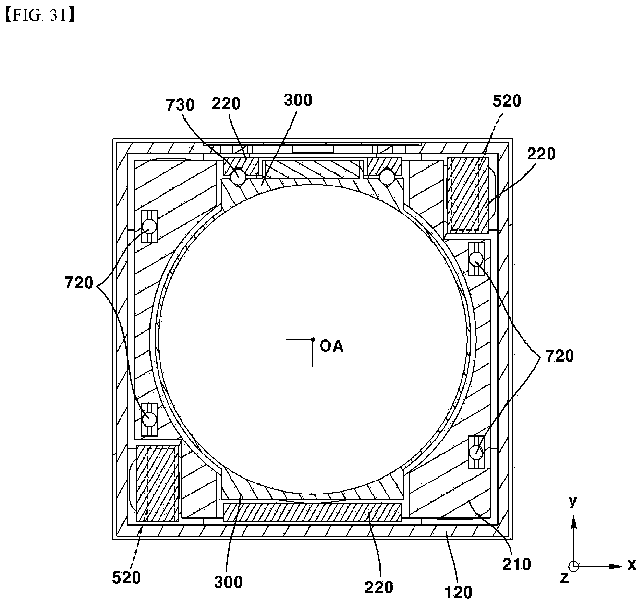

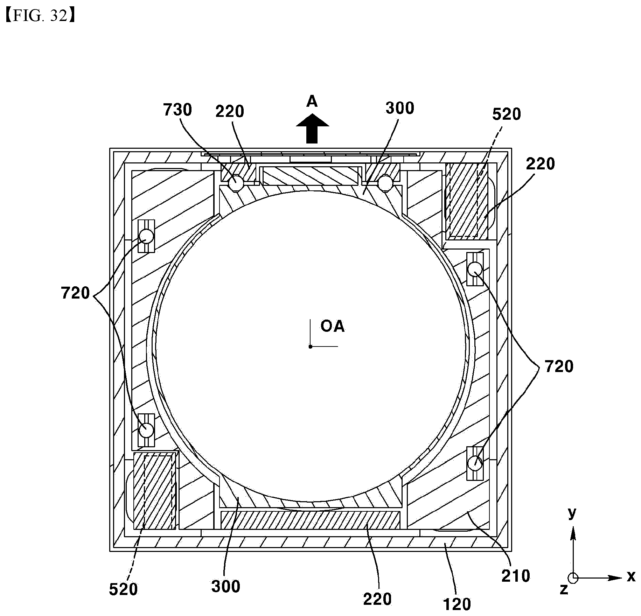

FIGS. 29 to 32 are drawings for explaining the image stabilization drive of the lens driving device according to the first embodiment of the present invention. FIGS. 29 and 31 are cross-sectional views showing the state of the movable part in the initial state when no current is applied to the OIS-x coil and the OIS-y coil. FIG. 30 is a cross-sectional view showing that the OIS-x coil is energized and the OIS-x carrier and the OIS-y carrier move in the x-axis direction perpendicular to the optical axis. FIG. 32 is a cross-sectional view showing the movement of the OIS-y carrier in the y-axis direction, which is perpendicular to both the optical axis and the x-axis, when current is applied to the OIS-y coil.
FIG. 33 is an exploded perspective view of the camera device according to a first embodiment of the present invention.
FIG. 34 is a perspective view of the optical device according to a first embodiment of the present invention.
FIG. 35 is a perspective view of the optical device according to a variant example.
FIG. 36 is a perspective view of the lens driving device according to a second embodiment of the present invention.
FIG. 37 is a cross-sectional view of FIG. 36 from a-a.
FIG. 38 is a cross-sectional view of FIG. 36 from b-b.
FIG. 39 is a cross-sectional view of FIG. 36 from c-c.
FIG. 40 is a cross-sectional view of FIG. 36 from d-d.
FIG. 41 is a cross-sectional view of FIG. 36 from E-E.
FIG. 42 is a cross-sectional perspective view of a lens driving device according to a second embodiment of the present invention, cut in a direction perpendicular to the optical axis.
FIG. 43a is an exploded perspective view of the lens driving device according to a second embodiment of the present invention.
FIG. 43b is an exploded perspective view of the lens driving device according to a first variant example.
FIG. 43c is an exploded perspective view of the lens driving device according to a second variant example.
FIG. 43d is an exploded perspective view of the lens driving device according to a third variant example.
FIG. 44 is an exploded perspective view of the lens driving device according to a second embodiment of the present invention, viewed from a different direction to that of FIG. 43a.
FIG. 45 is a perspective view of the lens driving unit of the second embodiment of the present invention with the cover removed.
FIG. 46 is a perspective view of the lens driving device of the second embodiment of the present invention in a state in which the cover is removed, viewed from a different direction to that of FIG. 45.
FIG. 47 is a perspective view showing a stationary part and related configuration of the lens driving device according to the second embodiment of the present invention.
FIG. 48 is a perspective view showing the OIS-x movable part of the lens driving device according to the second embodiment of the present invention and the related configuration.
FIG. 49 is a bottom perspective view of the OIS-x movable part and related configuration of the lens driving device according to the second embodiment of the present invention.
FIG. 50 is a perspective view showing the OIS-y movable part and related configuration of the lens driving device according to the second embodiment of the present invention.
FIG. 51 is a bottom perspective view showing the OIS-y movable part and related configuration of the lens driving device according to the second embodiment of the present invention.
FIG. 52 is a perspective view showing the AF movable part of the lens driving device and the related configuration according to the second embodiment of the present invention.
FIG. 53 is a bottom view of the lens driving device of the second embodiment of the present invention with the base and cover removed.
FIG. 54 is a perspective view showing a drive part and a guide member and related configuration of the lens driving device according to the second embodiment of the present invention, together with a base.
FIG. 55 is a partial perspective plan view showing the arrangement of the AF magnet and the AF attraction yoke of the lens driving device according to the second embodiment of the present invention.
FIG. 56 is a front view showing the arrangement of the AF magnet and the AF attraction yoke of the lens driving device according to the second embodiment of the present invention.

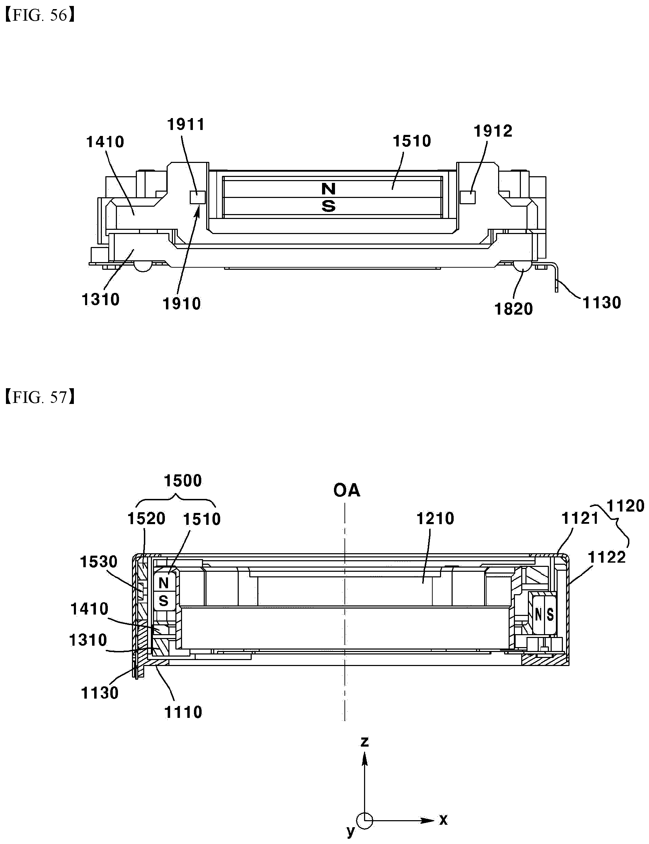

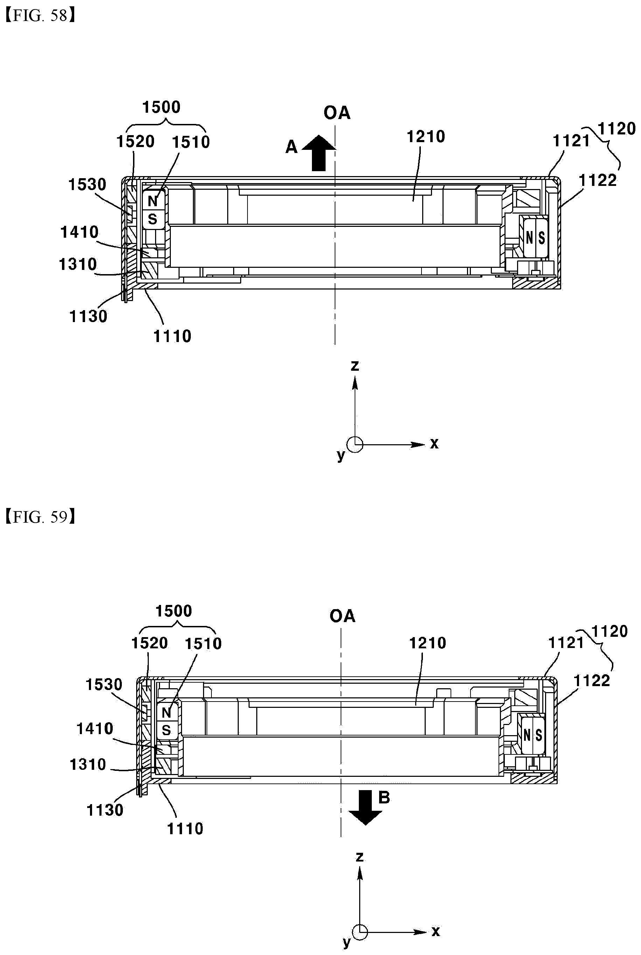

FIGS. 57 to 59 are drawings for explaining the autofocus operation of the lens driving device according to the second embodiment of the present invention. FIG. 57 is a cross-sectional view showing the AF movable part in the initial state when no current is applied to the AF coil. FIG. 58 is a cross-sectional view showing that the AF movable part has moved upward in the optical axis direction when a forward current is applied to the AF coil. FIG. 59 is a cross-sectional view showing that the AF movable part moves to the lower side of the optical axis when the reverse current is applied to the AF coil.

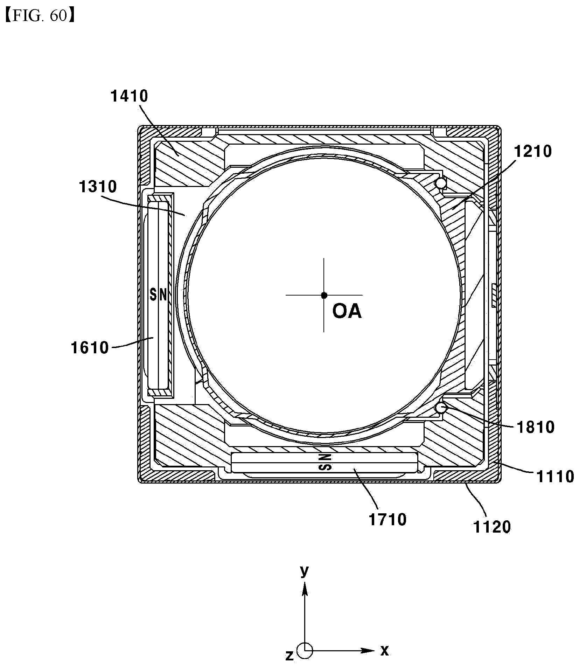

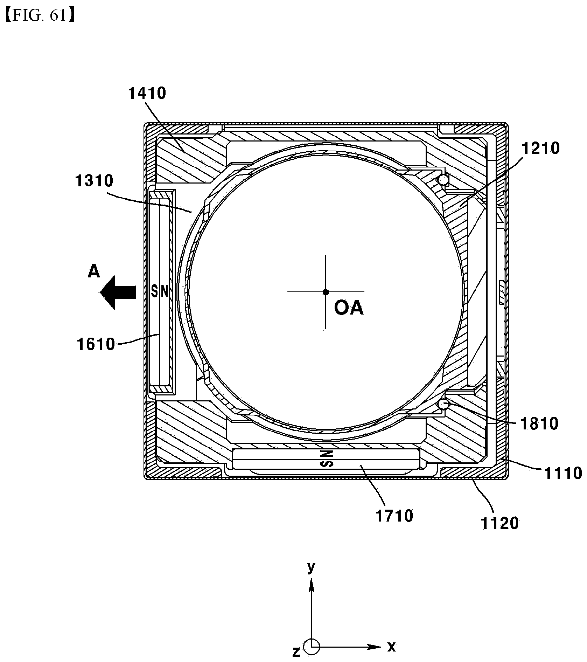

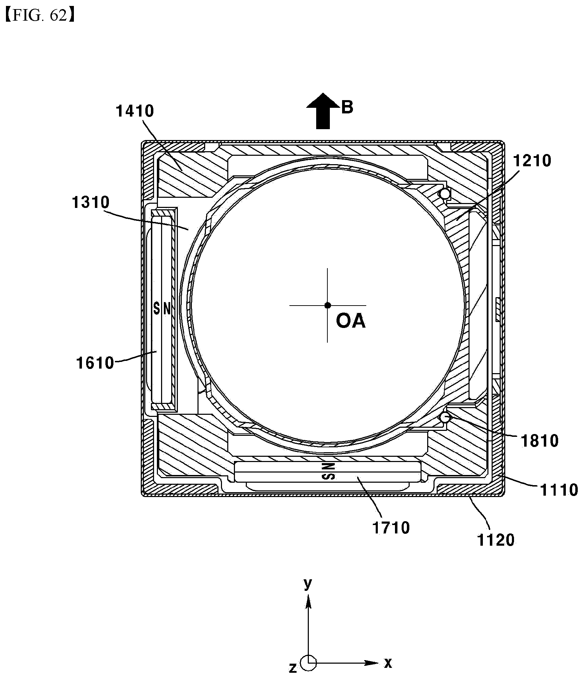

FIGS. 60 to 62 are drawings for explaining the image stabilisation drive of the lens driving device according to the second embodiment of the present invention. FIG. 60 is a cross-sectional view showing the state of the movable part in the initial state when no current is applied to the OIS-x coil and the OIS-y coil. FIG. 61 is a cross-sectional view showing that the OIS-x coil is energized and the OIS-x movable part, the OIS-y movable part and the AF movable part move in the x-axis direction perpendicular to the optical axis. FIG. 62 is a cross-sectional view that shows the movement of the OIS-y movable part and the AF movable part in the y-axis direction perpendicular to the optical axis when current is applied to the OIS-y coil.
FIG. 63 is an exploded perspective view of a camera device according to the second embodiment of the present invention.
FIG. 64 is a perspective view of an optical device according to a second embodiment of the present invention.
FIG. 65 is a perspective view of an optical device according to a variant example.

### [Best Mode]

Hereinafter, exemplary embodiments of the present invention will be described in detail with reference to the accompanying drawings.

However, the present invention is not limited to the given exemplary embodiments described, but may be implemented in a variety of different forms, and one or more of components among the exemplary embodiments may be optionally combined or substituted between embodiments within the scope of the present invention.

Furthermore, terms (comprising technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.

Furthermore, the terms used in the embodiments of the invention are intended to describe the embodiments and are not intended to limit the invention.

In this specification, the singular may comprise the plural unless the context otherwise requires, and references to "at least one (or more) of A and (or) B and C" may comprise one or more of any combination of A, B, and C that may be assembled.

In addition, the terms first, second, A, B, (a), (b), and the like may be used to describe components of embodiments of the invention. Such terms are intended only to distinguish one component from another, and are not intended to limit the nature or sequence or order of such components by such terms.

Furthermore, when a component is described as "connected," "coupled," or "attached" to another component, it can comprise cases where the component is "connected," "coupled," or "attached" to the other component directly, as well as cases where the component is "connected," "coupled," or "attached" to another component that is between the component and the other component.

Furthermore, when described as being formed or disposed "above" or "below" each component, "above" or "below" comprises not only when two components are in direct contact with each other, but also when one or more other components are formed or disposed between the two components. Furthermore, when expressed as "above" or "below", it may comprise the meaning of upward as well as downward with respect to a single component.

The 'optical axis (see OA of FIG. 26) direction' used herein below is defined as the optical axis direction of the lens and/or image sensor coupled to the lens driving device.

The 'vertical direction' used herein below may be parallel to or the same as the optical axis direction. The vertical direction may correspond to the 'z-axis direction'.

The vertical direction may correspond to the 'z-axis direction.'

The "horizontal direction" used herein below may be a direction perpendicular to the vertical direction. Therefore, the horizontal direction may comprise the 'x-axis direction' and the 'y-axis direction'.

The 'auto focus (AF) function' used herein below is defined as a function that automatically adjusts the focus on a subject by moving a lens in the optical axis direction according to the distance of the subject so that a clear image of the subject can be obtained on an image sensor and adjusting the distance from the image sensor. In addition, 'closed-loop auto focus (CLAF) control' is defined as the feedback control of the lens position in real time by detecting the distance between the image sensor and the lens to improve the accuracy of focus adjustment.

The 'optical image stabilization (OIS) function' used herein below is defined as a function that moves or tilts the lens in a direction perpendicular to the optical axis to offset hand shake to prevent images or videos from shaking due to the user's hand shake. In addition, closed-loop auto focus (CLAF) control is defined as the detection of the position of the lens relative to the image sensor and the real-time feedback control of the position of the lens to improve the accuracy of optical image stabilization.

Hereinafter, one of 'OIS carrier (200)' and 'AF carrier (300)' may be referred to as 'first carrier' and the other as 'second carrier.'

Hereinafter, one of 'OIS-x carrier (210)', 'OIS-y carrier (220)' and 'AF carrier (300)' may be referred to as 'first carrier', the other as 'second carrier' and the other as 'third carrier'.

Hereinafter, one of 'OIS movable part' and 'AF movable part' may be referred to as 'first movable part' and the other as 'second movable part.'

Hereinafter, one of 'OIS substrate (130)' and 'AF substrate (140)' may be referred to as 'first substrate' and the other as 'second substrate.'

Hereinafter, one of the 'OIS drive parts' and the 'AF drive parts' may be referred to as the 'first drive part' and the other as the 'second drive part.'

Hereinafter, one of 'OIS-x coil (410),' 'OIS-y coil (510)' and 'AF coil (610)' may be referred to as 'first coil," "second coil," and 'third coil," respectively.

Hereinafter, any of 'OIS-x magnet (420)', 'OIS-y magnet (520)' and 'AF magnet (620)' may be referred to as '1st magnet', the other as '2nd magnet' and the other as '3rd magnet'.

Hereinafter, one of 'OIS-x sensor (430)', 'OIS-y sensor (530)' and 'AF sensor (630)' may be referred to as 'first sensor', the other as 'second sensor' and the other as 'third sensor'.

Hereinafter, one of 'OIS-x yoke (440)', 'OIS-y yoke (540)' and 'AF yoke (640)' may be referred to as 'first yoke', the other as 'second yoke' and the other as 'third yoke'.

Hereinafter, one of 'OIS-x guide ball (710)', 'OIS-y guide ball (720)' and 'AF guide ball (730)' may be referred to as 'first ball', the other as 'second ball' and the other as 'third ball'.

Hereinafter, one of 'AF movable part (1200)', 'OIS-x movable part (1300)' and 'OIS-y movable part (1400)' is referred to as 'first movable part', the other as 'second movable part' and the other as 'third movable part'. In addition, 'movable part' may be referred to as 'moving body' or 'mover'.

Hereinafter, one of 'AF carrier (1210)', 'OIS-x carrier (1310)' and 'OIS-y carrier (1410)' may be referred to as '1st carrier', the other as '2nd carrier' and the other as '3rd carrier'. In addition, 'carrier' may be referred to as 'holder,' 'frame,' or 'spacer.'

Hereinafter, one of 'AF drive part (1500)', 'OIS-x drive part (1600)' and 'OIS-y drive part (1700)' may be referred to as '1st drive part', the other as '2nd drive part' and the other as '3rd drive part.

Hereinafter, one of 'AF magnet (1510)', 'OIS-x magnet (1610)', 'OIS-y magnet (1710)' and 'Attraction magnet (1955)' may be referred to as '1st magnet', another as '2nd magnet', another as '3rd magnet', and another as '4th magnet'. Meanwhile, 'magnet' may be referred to as 'magnet', 'magnet' or 'permanent magnet'.

Hereinafter, one of 'AF coil (1520)', 'OIS-x coil (1620)' and 'OIS-y coil (1720)' may be referred to as 'first coil', the other as 'second coil' and the other as 'third coil'.

Hereinafter, one of the 'AF sensor (1530)', 'OIS-x sensor (1630)' and 'OIS-y sensor (1730)' may be referred to as the '1st sensor', the other as the '2nd sensor' and the other as the '3rd sensor'.

Hereinafter, one of the 'AF guide ball (1810)', 'OIS-x guide ball (1820)' and 'OIS-y guide ball (1830)' may be referred to as 'first ball', the other as 'second ball' and the other as 'third ball'. Meanwhile, 'ball' may be referred to as 'guide ball.' For example, 'first ball' may be referred to as 'first guide ball.'

Hereinafter, one of the 'AF attraction yoke (1910)', 'OIS-x attraction yoke (1920)', 'OIS-y attraction yoke (1930)', '1st additional pressure attraction yoke (1940)' and '2nd additional pressure attraction yoke (1950)' may be referred to as '1st yoke', another as '2nd yoke', another as '3rd yoke', another as '4th yoke' and another as '5th yoke'.

Hereinafter, any of 'groove (1111)', 'groove (1211)', 'groove (1311)', 'groove (1312)', 'groove (1411)' and 'groove (1412)' may be referred to as 'first groove', any other may be referred to as 'second groove', any other may be referred to as 'third groove', any other may be referred to as 'fourth groove', any other may be referred to as 'fifth groove', and any other may be referred to as 'sixth groove'. Alternatively, 'groove (1211)' where the AF guide ball (1810) is placed and 'groove (1211)' may be referred to collectively as 'first groove,' 'groove (1311)' where the OIS-y guide ball (1830) is placed and 'groove' may be referred to collectively as 'second groove,' and 'groove (1111)' and 'groove (1312)' where the OIS-x guide ball (1820) is placed may be referred to collectively as 'third groove.'

Hereinafter, one of the 'side substrate (1130)' and the 'lower substrate (1140)' may be referred to as the 'first substrate' and the other as the 'second substrate.'

Hereinafter, one of 'x-axis direction' and 'y-axis direction' may be referred to as 'first direction' and the other as 'second direction.'

The following describes the configuration of the lens driving device according to a first embodiment of the present invention with reference to the drawings.

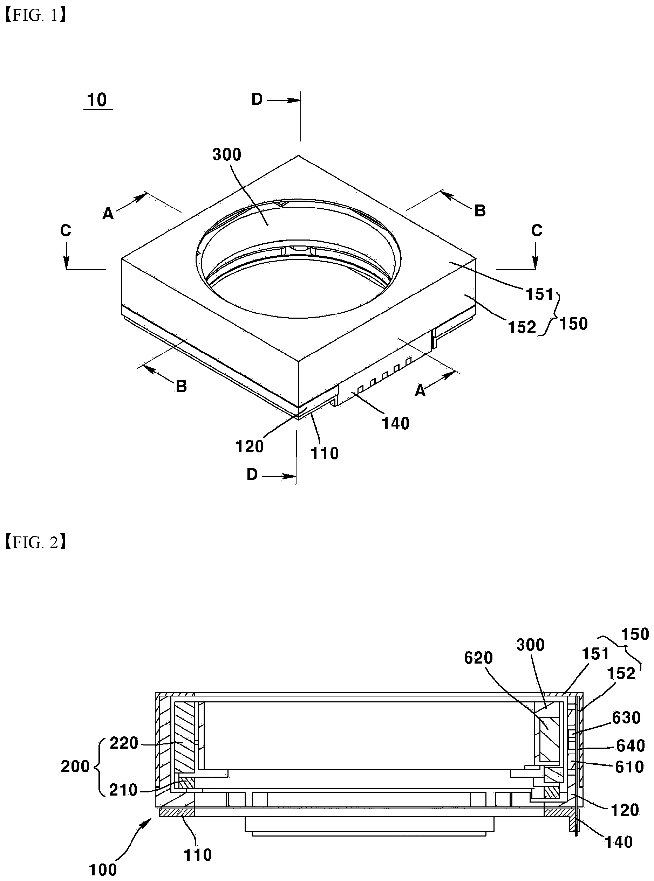

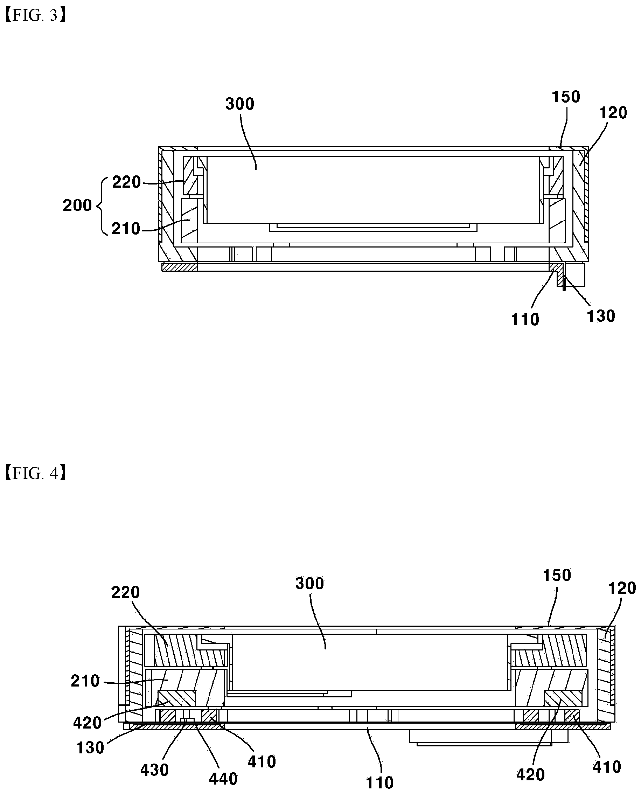

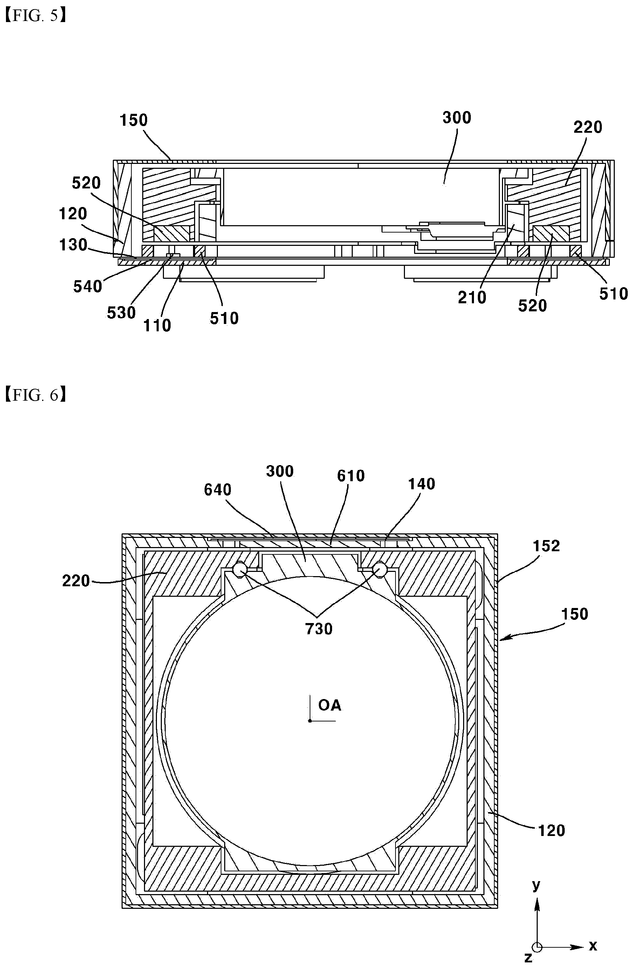

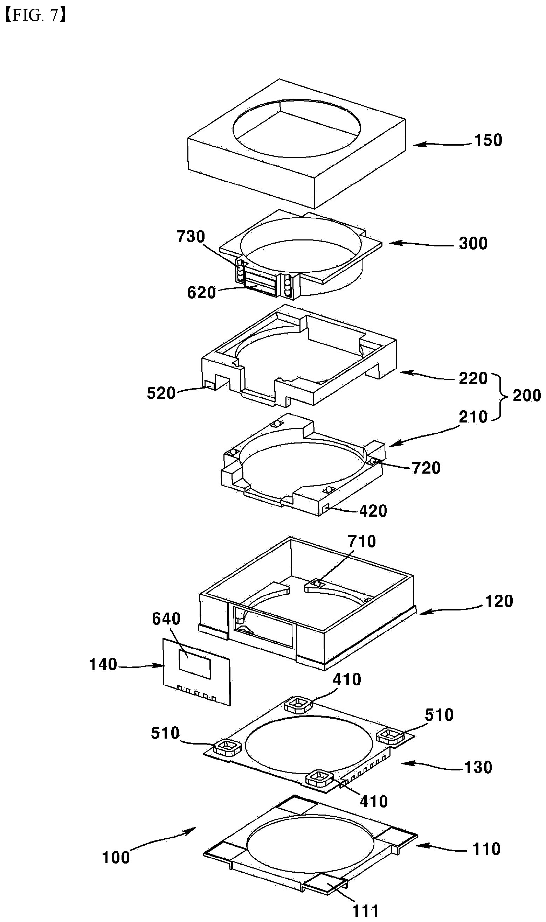

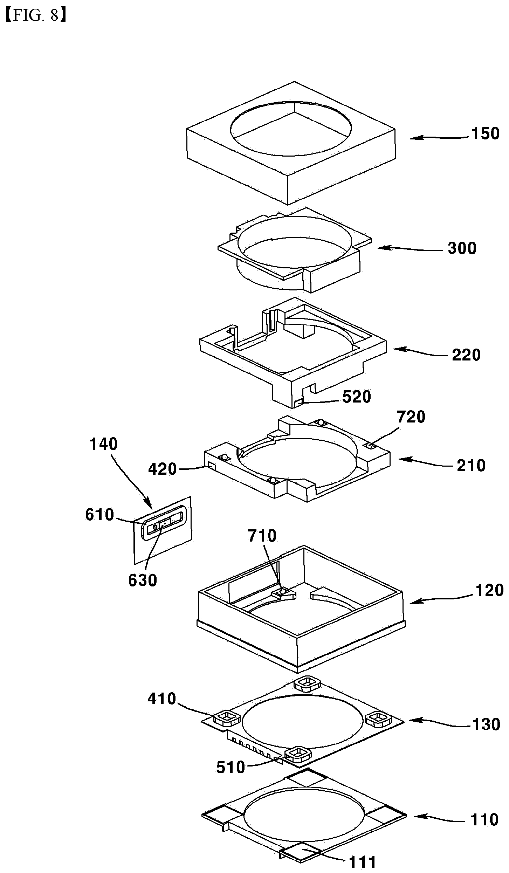

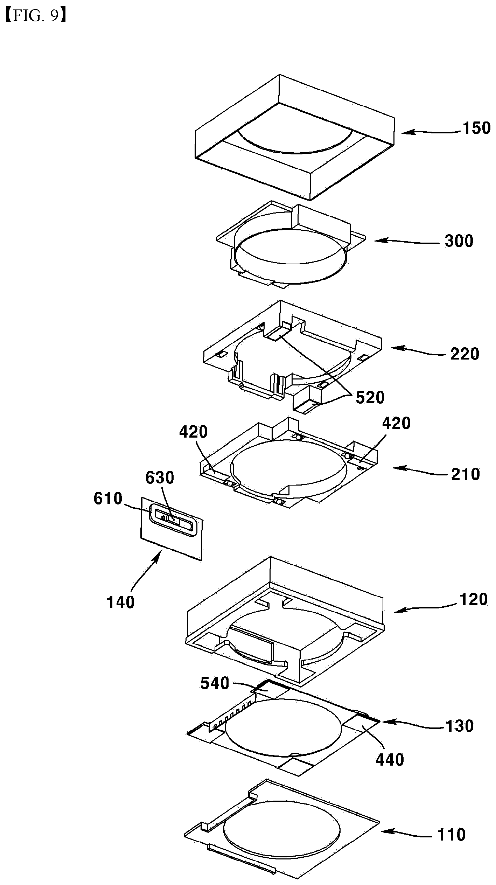

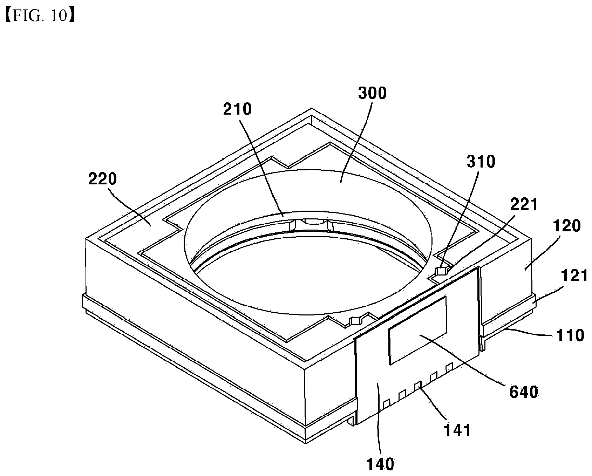

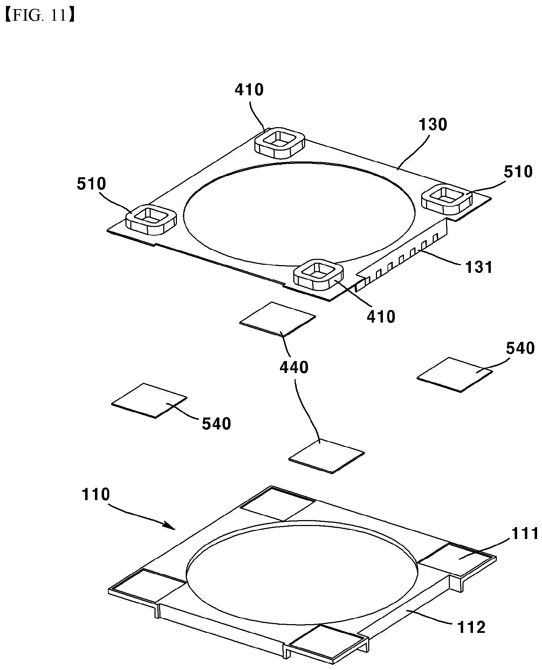

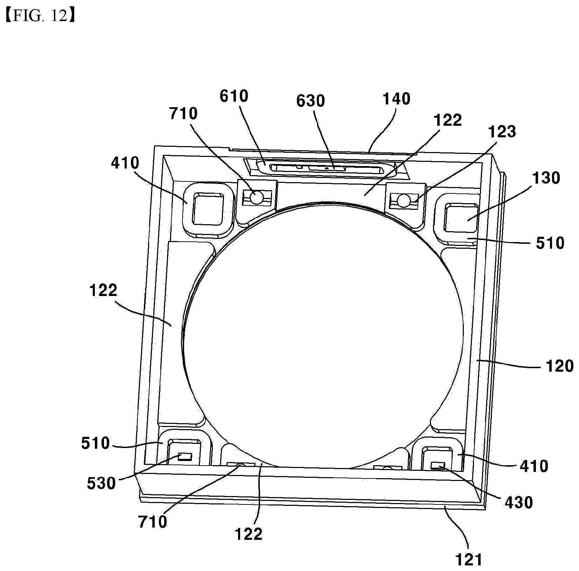

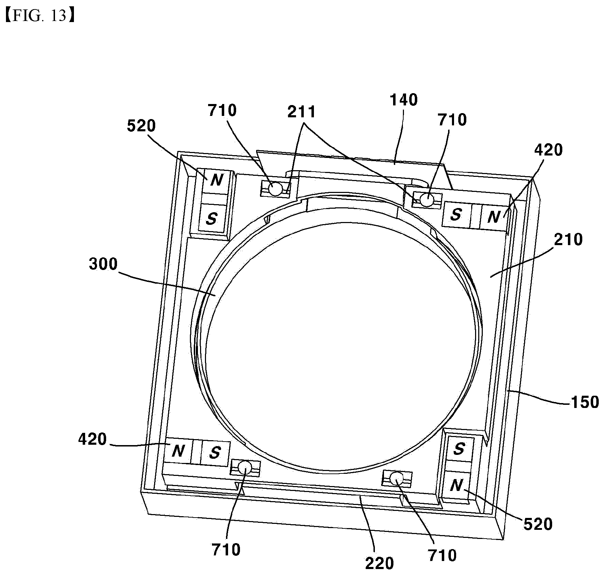

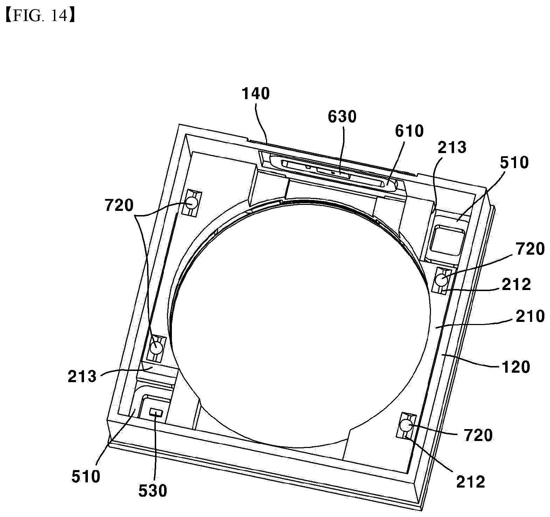

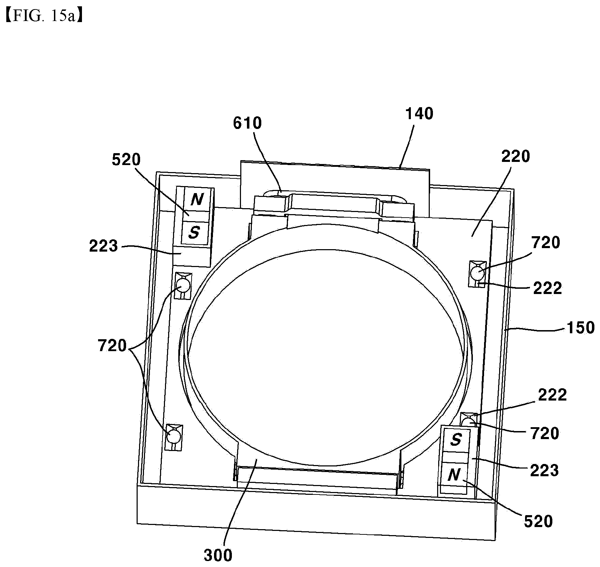

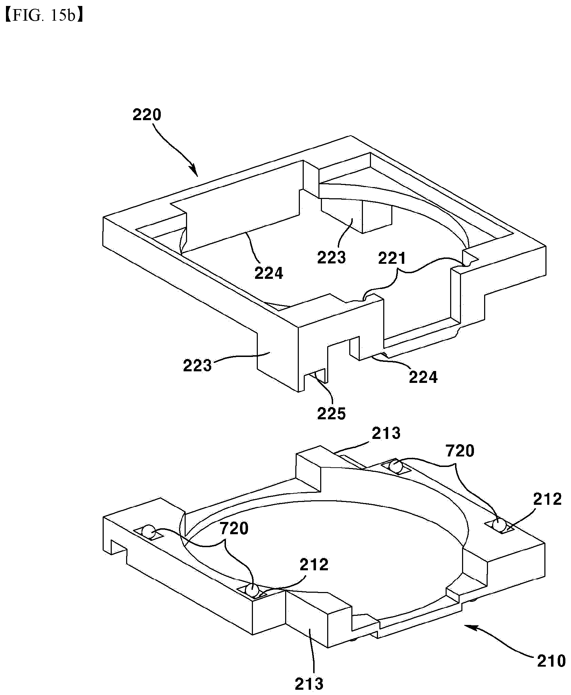

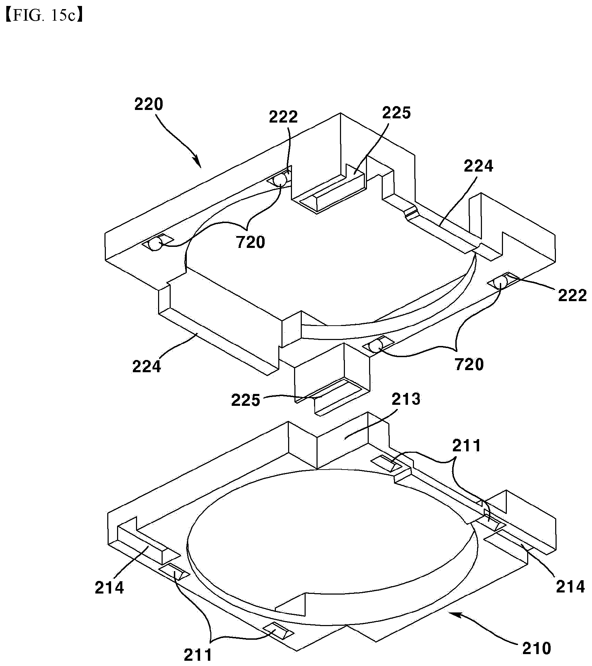

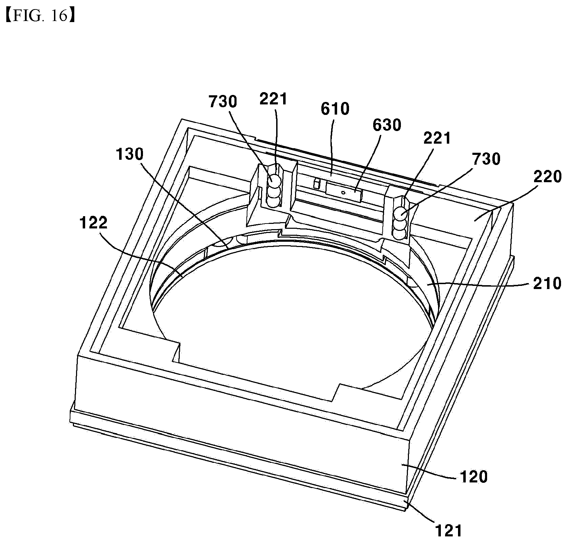

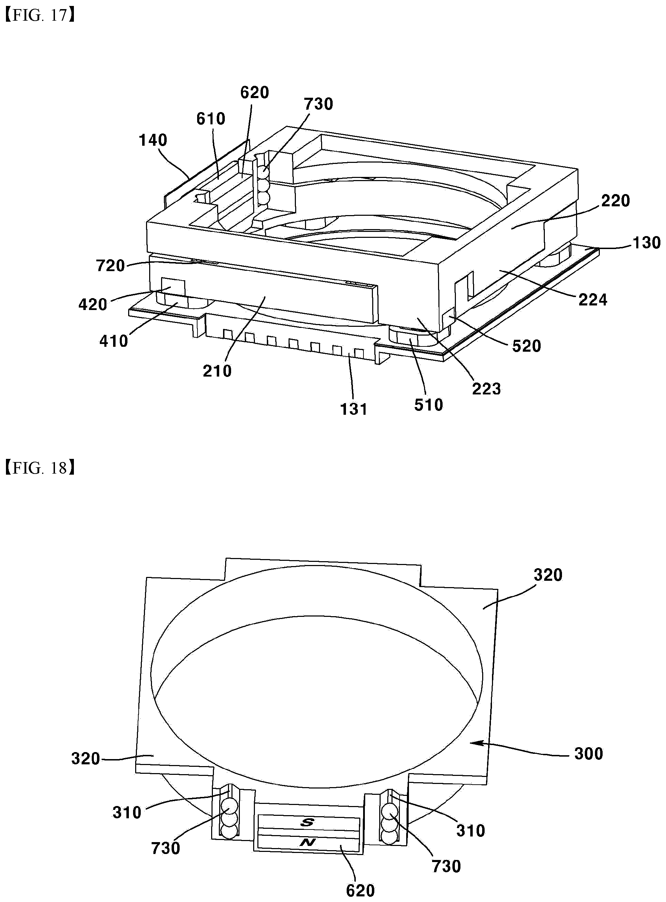

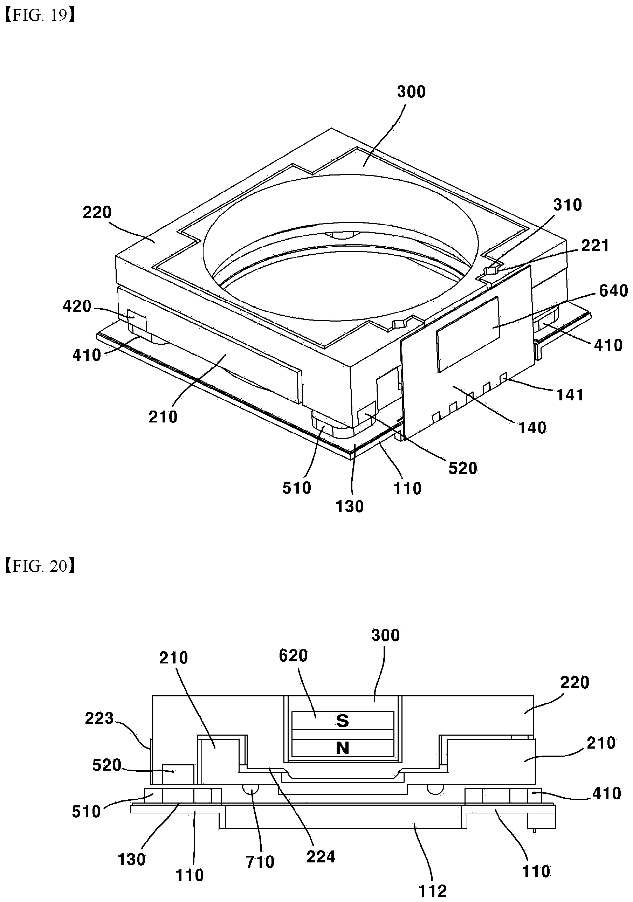

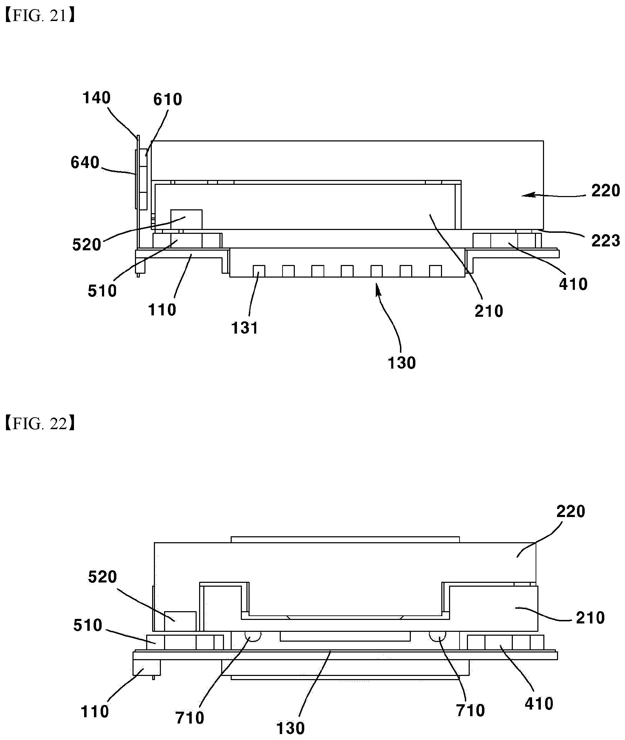

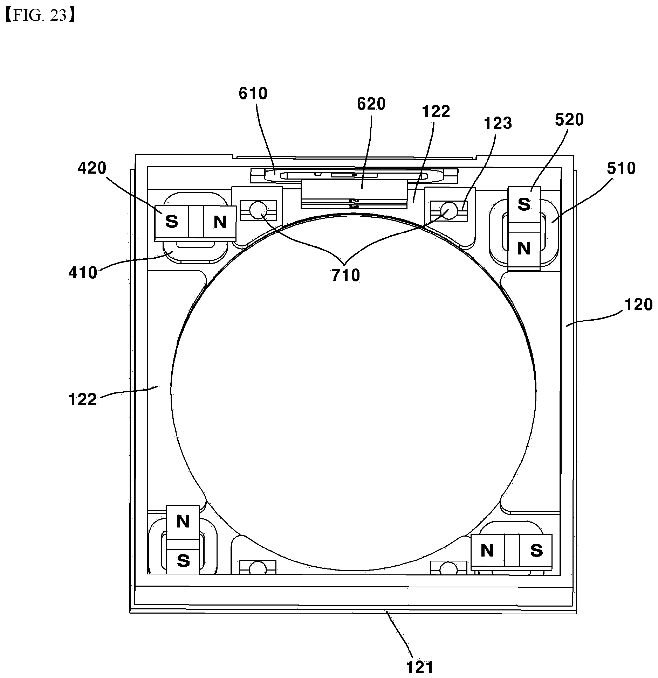

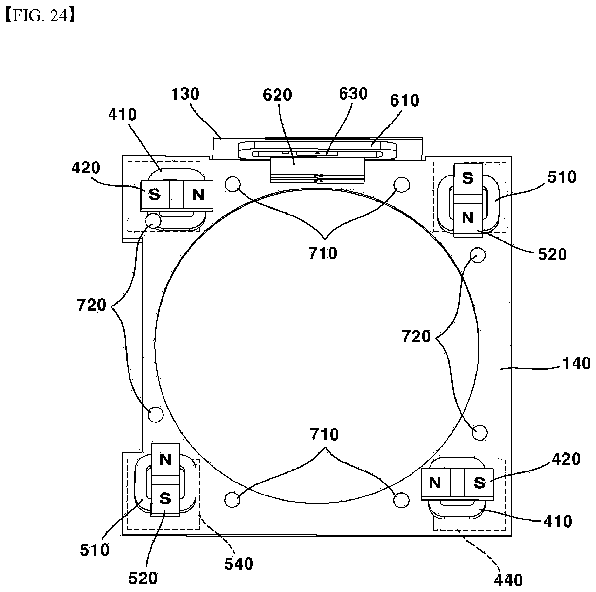

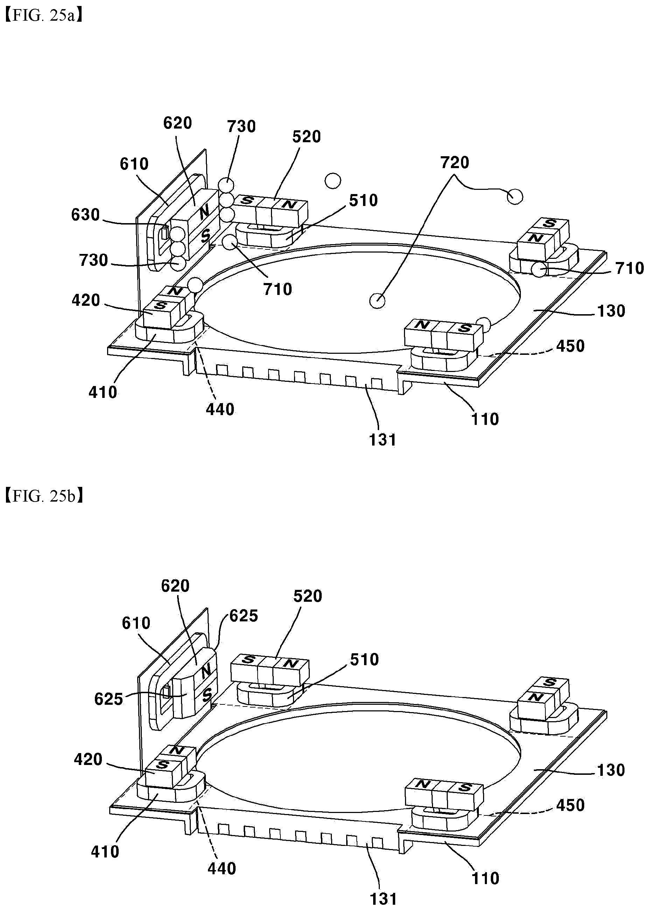

FIG. 1 is a perspective view of the lens driving device according to a first embodiment of the present invention, FIG. 2 is a cross-sectional view of FIG. 1 from A-A, FIG. 3 is a cross-sectional view of FIG. 1 from B-B, FIG. 4 is a cross-sectional view of FIG. 1 from C-C, FIG. 5 is a cross-sectional view of FIG. 1 from D-D, FIG. 6 is a cross-sectional view of the lens driving device according to the first embodiment of the present invention, cut in a direction perpendicular to the optical axis, FIGS. 7 to 9 are exploded perspective views of the lens driving device according to a first embodiment of the present invention, viewed from mutually different directions, FIG. 10 is a perspective view of the lens driving device of the first embodiment of the present invention with the cover omitted, FIG. 11 is an exploded perspective view of the lens driving device of the first embodiment of the present invention, showing the combined structure of the base, the OIS board, and the related configuration, FIG. 12 is a perspective view of a portion of a stationary part of the lens driving device according to the first embodiment of the present invention and related configuration, FIG. 13 is a bottom perspective view showing the OIS-x carrier and related configuration that is coupled with the stationary part of FIG. 12, FIG. 14 is a perspective view showing the OIS-x carrier disposed in the lens driving device in the state of FIG. 12, FIG. 15a is a bottom perspective view showing the OIS-y carrier and related configuration that is coupled with the OIS-x carrier in FIG. 14, FIG. 15b is an exploded perspective view of the OIS-x carrier and OIS-y carrier of the lens driving device according to the first embodiment of the present invention, FIG. 15c is a bottom exploded perspective view of the OIS-x carrier and the OIS-y carrier of the lens driving device according to the first embodiment of the present invention, FIG. 16 is a perspective view showing the OIS-y carrier disposed in the lens driving device in the state of FIG. 14, FIG. 17 is a perspective view of the OIS-x carrier and OIS-y carrier of the lens driving device according to the first embodiment of the present invention and related configurations, FIG. 18 is a perspective view showing the AF carrier and related configuration of the lens driving device according to the first embodiment of the present invention, FIG. 19 is a perspective view of the lens driving device of the first embodiment of the present invention with the cover and housing removed, FIG. 20 is a front view of the lens driving device in the state of FIG. 19 with the AF substrate removed, FIG. 21 is a side view of the lens driving device in the state of FIG. 19, viewed from a different direction, FIG. 22 is a side view of the lens driving device in the state of FIG. 21 viewed from the opposite direction to that of FIG. 20, FIG. 23 is a perspective view of the lens driving device of the first embodiment of the present invention with the cover and the movable part removed, FIG. 24 is a perspective view showing a drive part and related configuration of the lens driving device according to the first embodiment of the present invention, FIG. 25a is a perspective view of the lens driving device in the state of FIG. 24 viewed from another direction, and FIG. 25b is a perspective view showing the shape of the AF magnet and related configuration according to the variant example.

A lens driving device (10) may be a voice coil motor (VCM). The lens driving device (10) may be a lens drive motor. The lens driving device (10) may be a lens drive actuator. The lens driving device (10) may comprise an AF module. The lens driving device (10) may comprise an OIS module.

The lens driving device (10) may comprise a stationary part (100). The stationary part (100) may be a relatively fixed portion when a movable part moves. The movable part can move relative to the stationary part.

The lens driving device (10) may comprise a base (110). The stationary part (100) may comprise a base (110). The base (110) may be disposed under an OIS carrier. The base (110) may be disposed under an AF carrier (300). The base (110) may be coupled with a cover (150). The AF carrier (300) and the OIS carrier (200) may be disposed on the base (110). The AF carrier (300) and the OIS carrier (200) may be disposed on the bottom plate of the base (110). The AF carrier (300) and OIS carrier (200) may be disposed within the base (110). The AF carrier (300) and OIS carrier (200) may be disposed within the side plate of the base (110). The description of the OIS carrier (200) may be applied to the OIS-x carrier (210) and the OIS-y carrier (220), respectively.

The base (110) may comprise a groove (111). The groove (111) may be a 'yoke receiving groove'. The groove (111) may be formed concave on the upper surface of the base (110). The groove (111) can accommodate a yoke (440, 540). A yoke (440, 540) may be disposed in the groove (111). The groove (111) may be formed in a shape corresponding to the yoke (440, 540). The groove (111) may comprise multiple grooves. The groove (111) may comprise four grooves. The groove (111) may comprise first to fourth grooves.

The base (110) may comprise a groove (112). The groove (112) may be a 'terminal receiving groove'. The groove (111) may be formed concave on the outer surface of the base (110). The terminal part (131) of OIS substrate (130) may be disposed in the groove (111). At least a portion of the AF substrate (140) may be disposed in the groove (111). The terminal part of the AF substrate (140) may be disposed in the groove (111).

One of the grooves (111) and groove (112) of the base (110) may be referred to as 'first groove' and the other as 'second groove.'

The lens driving device (10) may comprise a housing (120). The stationary part (100) may comprise a housing (120). The housing (120) may be disposed on the base (110). The housing (120) may be disposed at the base (110). The housing (120) may be disposed on the outside of the OIS carrier (200). The housing (120) may be disposed on the outside of the OIS-x carrier (210). The housing (120) may be disposed outside the OIS-y carrier (220). The housing (120) may be disposed on the outside of the AF carrier (300). The housing (120) may be disposed between the cover (150) and the OIS carrier (200). The housing (120) may be disposed between the cover (150) and the AF carrier (300). The housing (120) may be disposed between the cover (150) and the base (110). The housing (120) may be disposed on the OIS substrate (130). The housing (120) may be disposed at the OIS substrate (130). The housing (120) may not move.

As a variant example, the housing (120) and the base (110) may be integrally formed. That is, only the integrated base (110) may be provided and the housing (120) may be omitted. Alternatively, only the integrated housing (120) may be provided, and the base (110) may be omitted.

Alternatively, only the base (110) may be omitted. In this case, the OIS substrate (130) may be disposed between a sensor base (40) and the housing (120).

The housing (120) may comprise a staircase part (121). The staircase part (121) may be formed on the outer circumference of the housing (120). The staircase part (121) may be formed as a protrusion at the lower end of the outer circumference of the housing (120). The staircase part (121) may be provided with a side plate (152) of the cover (150). The staircase part (121) may overlap with the side plate (152) of the cover (150) in the optical axis direction.

The housing (120) may comprise a lower plate (122). The lower plate (122) may be disposed on the base (110). The lower plate (122) may be placed under the OIS carrier (200).The lower plate (122) may be placed under the AF carrier (200).The lower plate (122) may be disposed between the base (110) and the OIS carrier (200). The lower plate (122) may support the OIS carrier (200). The lower plate (122) may support the AF carrier (300).

The housing (120) may comprise a groove (123). The groove (123) may be an 'OIS-x guide ball receiving groove.' The groove (123) may be formed on the upper surface of the lower plate (122) of the housing (120). The groove (123) may be formed concave on the upper surface of the lower plate (122) of the housing (120).

The groove (123) can accommodate at least a portion of the OIS-x guide ball (710). An OIS-x guide ball (710) may be disposed in the groove (123). The groove (123) may be formed as a V-shaped groove with a V-shaped cross-section. The groove (123) may be in contact with the OIS-x guide ball (710) at two points. The groove (123) may comprise multiple grooves. The groove (123) may comprise four grooves. The groove (123) may comprise first to fourth grooves.

The lens driving device (10) may comprise a substrate. The substrate may comprise an OIS substrate (130). The substrate may comprise an AF substrate (140). The OIS substrate (130) and the AF substrate (140) can be formed separately. In a variant example, the OIS substrate (130) and the AF substrate (140) may be integrally formed.

The lens driving device (10) may comprise an OIS substrate (130). The stationary part (100) may comprise an OIS substrate (130). The OIS substrate (130) may be a flexible printed circuit board (FPCB). The OIS substrate (130) may be disposed on the base (110).

An OIS-x coil (410) may be disposed on the OIS substrate (130). An OIS-y coil (510) may be disposed on the OIS substrate (130). An OIS-x sensor (430) may be disposed on the OIS substrate (130). An OIS-y sensor (530) may be disposed on the OIS substrate (130). An OIS-x yoke (440) may be disposed on the OIS substrate (130). An OIS-y yoke (540) may be disposed on the OIS substrate (130). On an upper surface of the OIS substrate (130), OIS-x coil (410), OIS-y coil (510), OIS-x sensor (430) and OIS-y sensor (530) may be disposed. OIS-x yoke (440) and OIS-y yoke (540) may be disposed on the lower surface of the OIS substrate (130).

The OIS substrate (130) can be electrically connected to the OIS-x coil (410), OIS-y coil (510), OIS-x sensor (430) and OIS-y sensor (530).

The OIS substrate (130) may comprise a body part. The body part may be disposed on the upper surface of the base (110). The body part may be arranged with OIS-x coil (410), OIS-y coil (510), OIS-x sensor (430), OIS-y sensor (530), OIS-x yoke (440), and OIS-y yoke (540). The body part may comprise a hollow hole.

The OIS substrate (130) may comprise a terminal part (131). The terminal part (131) may extend from the body part. The terminal part (131) may extend from the outer edge of the body part. The terminal part (131) may extend downward from the outer edge of the body part. The terminal part (131) may be bent from the body part. The terminal part (131) may be disposed on the side surface of the base (110). A terminal part (131) may be provided with a terminal. A plurality of terminals may be disposed on the outer surface of the terminal part (131). The terminals of the OIS substrate (130) can be electrically connected to the OIS-x coil (410), OIS-y coil (510), OIS-x sensor (430) and OIS-y sensor (530).

The lens driving device (10) may comprise an AF substrate (140). The stationary part (100) may comprise an AF substrate (140). The AF substrate (140) may be a flexible printed circuit board (FPCB). The AF substrate (140) may be disposed in the housing (120). An AF coil (610) may be disposed on the AF substrate (140). An AF sensor (630) may be disposed on the AF substrate (140). AF substrate (140) may comprise AF yoke (640). On the inner surface of the AF substrate (140), the AF coil (610) and the AF sensor (630) may be disposed. AF yoke (640) may be disposed on the outer surface of the AF substrate (140). The AF substrate (141) can be electrically connected to the AF coil (610) and the AF sensor (630).

The AF substrate (140) may comprise a terminal (141). The terminal (141) of the AF substrate (140) can be electrically connected to the AF coil (610) and the AF sensor (630). The terminal (141) may be formed at the lower portion of the outer surface of the AF substrate (140). The terminal (141) may comprise multiple terminals.

The lens driving device (10) may comprise a cover (150). The stationary part (100) may comprise a cover (150). The cover (150) may be disposed on the base (110).

The cover (150) may be disposed on the base (110). The cover (150) may be coupled to the base (110). The cover (150) may be fixed to the base (110). The cover (150) may be disposed in the housing (120). The cover (150) can be coupled to the housing (120). The cover (150) can be fixed to the housing (120). The cover (150) can accommodate the AF carrier (300) inside. The cover (150) can accommodate the OIS carrier (200) inside. The cover (150) may be a shield member. The cover (150) may be a shield can.

The cover (150) may comprise an upper plate (151). The upper plate (151) may be disposed on the movable part. The upper side movement of the movable part may be limited by the movable part contacting the upper plate (151). The upper plate (151) may comprise a hole through which light passes.

The cover (150) may comprise a side plate (152). The side plate (152) may extend from the upper plate (151). The side plate (152) may be disposed in the housing (120).

The side plate (152) can extend from the upper plate (151). The side plate (152) may be disposed in the staircase part (121) that protrudes at the lower part of the outer side surface of the housing (120). The side plate (152) may comprise multiple side plates. The side plate (152) may comprise four side plates. The side plate (152) may comprise a first side plate and a second side plate disposed on opposite sides of each other, and a third side plate and a fourth side plate disposed on opposite sides of each other.

The lens driving device (10) may comprise a movable part. The movable part may be disposed in the stationary part (100). The movable part may be disposed within the stationary part (100).

The movable part may be disposed on the stationary part (100). The movable part can be disposed movably in the stationary part (100). The movable part can be moved relative to the stationary part (100) by the drive part. The movable part can be moved when the AF is driven. The movable part can be moved when the OIS is driven. A lens can be coupled to the movable part.

The movable part may comprise an OIS movable part. The movable part may comprise an OIS-x movable part. The movable part may comprise an OIS-y movable part. The movable part may comprise an AF movable part.

The lens driving device (10) may comprise an OIS movable part. The OIS movable part may be disposed in the stationary part (100). The OIS movable part may be disposed within the stationary part (100). The OIS movable part may be disposed on the stationary part (100). The OIS movable part may be disposed between the stationary part (100) and the AF movable part. The OIS movable part may be disposed movably. The OIS movable part may be moved in a direction perpendicular to the optical axis by the OIS drive part. The OIS movable part may be moved when the OIS is driven.

The lens driving device (10) may comprise an OIS carrier (200). The OIS carrier (200) may be an 'OIS holder'. The OIS carrier (200) may be disposed in the stationary part (100). The OIS carrier (200) may be disposed within the stationary part (100). The OIS carrier (200) may be disposed on the stationary part (100). The OIS carrier (200) may be disposed between the stationary part (100) and the AF movable part. The OIS carrier (200) can be placed movably.

The OIS carrier (200) can be moved in a direction perpendicular to the optical axis by the OIS drive part. The OIS carrier (200) can be moved when the image stabilization (OIS) is in operation.

The lens driving device (10) may comprise an OIS-x movable part. The OIS movable part may comprise an OIS-x movable part. The OIS-x movable part may be disposed in the stationary part (100). The OIS-x movable part may be disposed within the stationary part (100). The OIS-x movable part may be disposed on the stationary part (100). The OIS-x movable part may be disposed between the stationary part (100) and the OIS-y movable par. The OIS-x movable part may be disposed between the stationary part (100) and the AF movable part. The OIS-x movable part may be movably disposed. The OIS-x movable par can be moved in the x-axis direction perpendicular to the optical axis by the OIS-x drive part.

The lens driving device (10) may comprise an OIS-x carrier (210). The movable part may comprise an OIS-x carrier (210). The OIS-x movable part may comprise an OIS-x carrier (210). The OIS carrier (200) may comprise an OIS-x carrier (210). The OIS-x carrier (210) may be an 'OIS-x holder'. The OIS-x carrier (210) may be disposed in the stationary part (100). The OIS-x carrier (210) may be disposed in the housing (120). The OIS-x carrier (210) may be disposed within the stationary part (100). The OIS-x carrier (210) may be disposed within the housing (120). The OIS-x carrier (210) may be disposed on the stationary part (100).

The OIS-x carrier (210) may be disposed on the housing (120). The OIS-x carrier (210) may be disposed between the stationary part (100) and the OIS-y carrier (220).

The OIS-x carrier (210) may be disposed between the stationary part (100) and AF carrier (300). The OIS-x carrier (210) can be placed movably. The OIS-x carrier (210) can be moved in the x-axis direction perpendicular to the optical axis by the OIS-x drive part.

The OIS-x carrier (210) can move to both sides of the x-axis until it contacts the housing (120). The point where the OIS-x carrier (210) and the housing (120) make contact may be the maximum travel range. The OIS-x carrier (210) can move within the maximum travel range. In other words, the limit of the movement distance in the x-axis direction of the OIS-x carrier (210) can be determined by the contact with the housing (120). In other words, the OIS-x carrier (210) can contact the housing (120) without contacting the OIS-y carrier (220) during the movement process in the x-axis direction. The OIS-x carrier (210) may comprise a stopper that contacts the housing (120). The housing (120) may comprise a stopper that contacts the stopper of the OIS-x carrier (210).

The OIS-x carrier (210) may comprise a groove (211). The groove (211) may be an 'OIS-x guide ball receiving groove'. The groove (211) may be formed on the lower surface of the OIS-x carrier (210). The groove (211) may be formed concave on the lower surface of the OIS-x carrier (210). The groove (211) can accommodate at least a portion of the OIS-x guide ball (710). The OIS-x guide ball (710) can be disposed in the groove (211). The groove (211) may be formed as a V-shaped groove with a V-shaped cross-section. The groove (211) may be in contact with the OIS-x guide ball (710) at two points. The groove (211) may comprise multiple grooves. The groove (211) may comprise four grooves. The groove (211) may comprise first to fourth grooves.

The groove (211) of the OIS-x carrier (210) can be formed in a position corresponding to the groove (123) of the housing (120). The groove (211) of the OIS-x carrier (210) can be formed in a position corresponding to the groove (123) of the housing (120) in the optical axis direction. The groove (211) of the OIS-x carrier (210) may overlap the groove (123) of the housing (120) in the optical axis direction. The groove (211) of the OIS-x carrier (210) can be positioned opposite the groove (123) of the housing (120).

The OIS-x carrier (210) may comprise a groove (212). The groove (212) may be an 'OIS-y guide ball receiving groove'. The groove (212) may be formed on the upper surface of the OIS-x carrier (210). The groove (212) may be formed concave on the upper surface of the OIS-x carrier (210). The groove (212) can accommodate at least a portion of the OIS-y guide ball (720). The OIS-y guide ball (720) can be disposed in the groove (212). The groove (212) may be formed as a V-shaped groove with a V-shaped cross-section. The groove (212) may be in contact with the OIS-y guide ball (720) at two points. The groove (212) may comprise multiple grooves. The groove (212) may comprise four grooves. The groove (212) may comprise first to fourth grooves.

The OIS-x carrier (210) may comprise a groove (213). The groove (213) may be an 'OIS-y carrier protrusion avoidance groove.' The groove (213) may be formed in the corner region of the OIS-x carrier (210). The groove (213) may be formed in two of the four corner regions of the OIS-x carrier (210). The two corner regions may be arranged in a diagonal direction to each other. A protrusion (223) of the OIS-y carrier (220) may be disposed in the groove (213). The groove (213) can be formed so that the protrusions (223) of the OIS-x carrier (210) and the OIS-y carrier (220) do not interfere with each other. The protrusion (223) of the OIS-y carrier (220) can be inserted into the groove (213). The groove (213) may be larger than the protrusion (223). Even when the OIS-y carrier (220) moves, the protrusion (223) may not come into contact with the groove (213).

One of the grooves (211), grooves (212), and grooves (213) of the OIS-x carrier (210) may be referred to as the 'first groove,' the other as the 'second groove,' and the other as the 'third groove.'

The lens driving device (10) may comprise an OIS-y movable part. The OIS movable part may comprise an OIS-y movable part. The OIS-y movable part may be disposed in the stationary part (100). The OIS-y movable part ma be disposed within the stationary part (100). The OIS-y movable part may be disposed on the stationary part (100). The OIS-y movable part may be disposed between the OIS-x movable part and the AF movable part. The OIS-y movable part may be disposed between the stationary part (100) and the AF movable part. The OIS-y movable part may be disposed movably. The OIS-y movable part can be moved in the y-axis direction perpendicular to the optical axis by the OIS-x drive part.

The lens driving device (10) may comprise an OIS-y carrier (220). The movable part may comprise an OIS-y carrier (220). The OIS-y movable part may comprise an OIS-y carrier (220). The OIS carrier (200) may comprise the OIS-y carrier (220). The OIS-y carrier (220) may be an 'OIS-y holder'. The OIS-y carrier (220) may be disposed in the stationary part (100). The OIS-y carrier (220) may be dispose within the stationary part (100). The OIS-y carrier (220) may be disposed within the housing (120). The OIS-y carrier (220) may be disposed on the stationary part (100). The OIS-y carrier (220) may be disposed on the base (110). The OIS-y carrier (220) may be disposed in OIS-x carrier (210). The OIS-y carrier (220) may be disposed on OIS-x carrier (210). The OIS-y carrier (220) may be disposed between the stationary part (100) and the AF carrier (300). The OIS-y carrier (220) may be disposed between the OIS-x carrier (210) and AF carrier (300). The OIS-y carrier (220) may be disposed movably. The OIS-y carrier (220) may be moved in the y-axis direction perpendicular to the optical axis by the OIS-y drive part.

The OIS-y carrier (220) may comprise a groove (221). The groove (221) may be an 'AF guide ball receiving groove'. The groove (221) may be formed on the inner side of the OIS-y carrier (220). The groove (221) may be formed concave on the inner side of the OIS-y carrier (220). The groove (221) can accommodate at least portion of the AF guide ball (730). The AF guide ball (730) may be disposed in the groove (221). The groove (221) may be formed as a V-shaped groove with a V-shaped cross-section. The groove (221) may be in contact with the AF guide ball (730) at two points. The groove (221) may comprise multiple grooves. The groove (221) may comprise two grooves. The groove (221) may comprise a first groove and a second groove. Three balls can be disposed in each of the two grooves.

The OIS-y carrier (220) may comprise a groove (222). The groove (222) may be an 'OIS-y guide ball receiving groove'. The groove (222) may be formed on the lower surface of the OIS-y carrier (220). The groove (222) may be formed concave on the lower surface of the OIS-y carrier (220). The groove (222) can accommodate at least a portion of the OIS-y guide ball (720). An OIS-y guide ball (720) may be disposed in the groove (222). The groove (222) may be formed as a V-shaped groove with a V-shaped cross-section. The groove (222) may be in contact with the OIS-y guide ball (720) at two points. The groove (222) may comprise multiple grooves. The groove (222) may comprise four grooves. The groove (222) may comprise first to fourth grooves.

The groove (222) of the OIS-y carrier (220) may be formed in a position corresponding to the groove (212) of the OIS-x carrier (210). A groove (222) of the OIS-y carrier (220) may be formed in a position corresponding to a groove (212) of an OIS-x carrier (210) in the optical axis direction. The groove (222) of the OIS-y carrier (220) may overlap the groove (212) of the OIS-x carrier (210) in the optical axis direction. The groove (222) of the OIS-y carrier (220) may be positioned facing the groove (212) of the OIS-x carrier (210).

The OIS-y carrier (220) may comprise a protrusion (223). The protrusion (223) may be a 'magnet placement part'. The protrusion (223) may be a 'protruder'. An OIS-y magnet (520) may be disposed in the protrusion (223). The protrusion (223) may comprise a groove in which the OIS-y magnet (520) is placed. The protrusion (223) may overlap with the OIS-x carrier (210) in a direction perpendicular to the optical axis. The protrusion (223) may protrude in the direction of the OIS-y coil (510). The protrusion (223) may protrude downward.

The OIS-y carrier (220) may comprise a protrusion (224). The protrusion (224) may be shaped to conform to the groove of the OIS-x carrier (210). However, the protrusion (224) may not be in contact with the OIS-x carrier (210).

One of the grooves (221) and groove (222) of the OIS-y carrier (220) may be referred to as 'first groove' and the other as 'second groove.' One of the protrusions (223) and protrusions (224) of the OIS-y carrier (220) may be referred to as the 'first protrusion' and the other as the 'second protrusion.'

The lens driving device (10) may comprise an AF movable part. The movable part may comprise an AF movable part. The AF movable part may be disposed in the stationary part (100). The AF movable part may be disposed within the stationary part (100). The AF movable part may be disposed on the stationary part (100). The AF movable part may be disposed in the OIS movable part. The AF movable part may be disposed within the OIS movable part. The AF movable part may be disposed on the OIS movable part. The AF movable part may be disposed movably in the stationary part (100). The AF movable part may be disposed movably in the OIS movable part. The AF movable part may be moved in the optical axis direction with respect to the stationary part (100) and the OIS movable part by the AF drive part. The AF movable part can be moved when the autofocus (AF) is activated.

The lens driving device (10) may comprise an AF carrier (300). The movable part may comprise an AF carrier (300). The AF carrier (300) may be an 'AF holder'. The AF carrier (300) may be a 'bobbin'. The AF carrier (300) may be disposed within the housing (120). The AF carrier (300) may be disposed on the base (110). The AF carrier (300) may be disposed within the cover (150). The AF carrier (300) may be disposed on the OIS carrier (200). The AF Carrier (300) may be disposed within the OIS carrier (200). The AF carrier (300) may be disposed on the OIS-x carrier (210). The AF carrier (300) may be disposed on the OIS-y carrier (220). The AF carrier (300) may be disposed on the OIS-y carrier (220). The AF carrier (300) may be movably disposed to the optical axis direction.

The AF carrier (300) may be moved together with the OIS carrier (200). The AF carrier (300) may be moved together with OIS-x carrier (210). The AF carrier (300) may be moved with the OIS-y carrier (220). When the OIS carrier (200) is moved by the OIS drive part, the AF carrier (300) can also move together with the OIS carrier (200).

The AF carrier (300) may comprise a groove (310). The groove (310) may be an 'AF guide ball receiving groove.' The groove (310) may be formed on the outer surface of the AF carrier (300).

The groove (310) may be formed concave on the outer surface of the AF carrier (300). The groove (310) can accommodate at least a portion of the AF guide ball (730). The AF guide ball (730) may be disposed in the groove (310). The groove (310) may be formed as a V-shaped groove with a V-shaped cross-section. The groove (310) may be in contact with the AF guide ball (730) at two points. The groove (310) may comprise multiple grooves. The groove (310) may comprise two grooves. The groove (310) may comprise a first groove and a second groove. Three balls may be disposed in each of the two grooves.

The groove (310) of the AF carrier (300) may be formed in a position corresponding to the groove (221) of the OIS-y carrier (220). The groove (310) of the AF carrier (300) may be formed in a position corresponding to the groove (221) of the OIS-y carrier (220) in a direction perpendicular to the optical axis. The groove (310) of the AF carrier (300) may overlap the groove (221) of the OIS-y carrier (220) in a direction perpendicular to the optical axis. The groove (310) of the AF carrier (300) may overlap the groove (221) of the OIS-y carrier (220) in the y-axis direction perpendicular to the optical axis. The groove (310) of the AF carrier (300) may be disposed opposite the groove (221) of the OIS-y carrier (220).

The AF carrier (300) may comprise an upper plate (320). The upper plate (320) of the AF carrier (300) may be disposed on the OIS-y carrier (220). The upper plate (320) of the AF carrier (300) may overlap the OIS-y carrier (220) in the optical axis direction. The upper plate (320) of the AF carrier (300) may be disposed between the OIS-y carrier (220) and the upper plate (151) of the cover (150).

The lens driving device (10) may comprise a drive part. The drive part can move the movable part with respect to the stationary part (100). The drive part may comprise an AF drive part. The drive part may comprise an OIS drive part. The drive part may comprise a coil and a magnet.

The OIS drive part can move the lens in a direction perpendicular to the optical axis. The OIS drive part can move the OIS carrier (200) perpendicular to the optical axis with respect to the stationary part (100). The OIS drive part may comprise an OIS-x drive part. The OIS drive part may comprise an OIS-y drive part.

The lens driving device (10) may comprise an OIS-x drive part. The OIS-x drive part can move the OIS-x carrier (210) in the x-axis direction perpendicular to the optical axis. The OIS-x drive part can move the OIS-x carrier (210) in the x-axis direction perpendicular to the optical axis through electromagnetic force. The OIS-x drive part may comprise a coil and a magnet. The OIS-x drive part may comprise an OIS-x magnet (420) and an OIS-x coil (410) that can move the OIS carrier (200) in the x-axis direction perpendicular to the optical axis. The OIS-x drive part may comprise an OIS-x magnet (420) and an OIS-x coil (410) that move the OIS-x carrier (210) in the x-axis direction perpendicular to the optical axis. The OIS-x drive part may comprise an OIS-x magnet (420) and an OIS-x coil (410) that can move the OIS-x carrier (210) and the OIS-y carrier (220) in the x-axis direction perpendicular to the optical axis.

The lens driving device (10) may comprise an OIS-x coil (410). The OIS-x drive part may comprise an OIS-x coil (410). The OIS-x coil (410) can interact with the OIS-x magnet (420). The OIS-x coil (410) can move the OIS-x magnet (420) in the x-axis direction perpendicular to the optical axis. The OIS-x coil (410) can move the OIS-x magnet (420) in the x-axis direction perpendicular to the optical axis through interaction with the OIS-x magnet (420). The OIS-x coil (410) may be opposite to the OIS-x magnet (420). The OIS-x coil (410) may face the OIS-x magnet (420). The OIS-x coil (410) may be disposed in a position corresponding to the OIS-x magnet (420). The OIS-x coil (410) can overlap with the OIS-x magnet (420) in the optical axis direction. The OIS-x coil (410) may be disposed on the OIS substrate (130). The OIS-x coil (410) may be disposed on the upper surface of the OIS substrate (130). The OIS-x coil (410) may be disposed in the body part of the OIS substrate (130). The OIS-x coil (410) may be disposed on the base (110). The OIS-x coil (410) may be disposed in the stationary part (100).

The lens driving device (10) may comprise an OIS-x magnet (420). The OIS-x drive part may comprise an OIS-x magnet (420). The OIS-x magnet (420) may be disposed on the OIS-x carrier (210). The OIS-x magnet (420) may be disposed on the lower surface of the OIS-x carrier (210). The OIS-x magnet (420) may be fixed to the OIS-x carrier (210). The OIS-x magnet (420) may be coupled to the OIS-x carrier (210). The OIS-x magnet (420) may be bonded to the OIS-x carrier (210) with an adhesive. The OIS-x magnet (420) may be disposed within the cover (150). The OIS-x magnet (420) can interact with the OIS-x coil (410). The OIS-x magnet (420) can interact electromagnetically with the OIS-x coil (410). The OIS-x magnet (420) may be disposed in a position corresponding to the OIS-x coil (410). The OIS-x magnet (420) may face the OIS-x coil (410). The OIS-x magnet (420) may face the OIS-x coil (410). The OIS-x magnet (420) can overlap with the OIS-x coil (410) to the optical axis direction.

The OIS-x magnet (420) and the OIS-y magnet (520) can be overlapped on a virtual plane perpendicular to the optical axis. In this case, the virtual plane and the AF magnet (620) may not overlap. OIS-x magnet (420) and OIS-y magnet (520) can overlap each other in a direction perpendicular to the optical axis. OIS-x magnet (420) and OIS-y magnet (520) may not overlap with AF magnet (620) in a direction perpendicular to the optical axis.

The OIS-x magnet (420) may be a four-pole magnet. OIS-x magnet (420) may comprise a four-pole magnetized magnet. The OIS-x magnet (420) may comprise a first magnet part comprising an N pole and an S pole, and a second magnet part comprising an N pole and an S pole. The first magnet part and the second magnet part may be disposed in a horizontal direction. The first magnet part and the second magnet part are spaced apart in the horizontal direction, and a neutral zone may be disposed between the first magnet part and the second magnet part. The neutral zone may be disposed parallel to the optical axis.

The lens driving device (10) may comprise an OIS-x sensor (430). The OIS-x drive part may comprise the OIS-x sensor (430). The OIS-x sensor (430) may be disposed on the OIS substrate (130). The OIS-x sensor (430) may be disposed in the body part of the OIS substrate (130). The OIS-x sensor (430) may comprise a Hall sensor. The OIS-x sensor (430) can detect the OIS-x magnet (420). The OIS-x sensor (430) can detect the magnetic force of the OIS-x magnet (420). The OIS-x sensor (430) may be disposed within the OIS-x coil (410). The OIS-x sensor (430) may overlap with the OIS-x coil (410) in a direction perpendicular to the optical axis. The OIS-x sensor (430) may be opposite to the OIS-x magnet (420). The OIS-x sensor (430) may be disposed in a position corresponding to the OIS-x magnet (420). The OIS-x sensor (430) can detect the movement of the OIS-x magnet (420). The amount or position of movement of the OIS-x magnet (420) detected by the OIS-x sensor (430) can be used for feedback of the x-axis-direction-based image stabilization drive.

The lens driving device (10) may comprise an OIS-x yoke (440). The OIS-x yoke (440) may be disposed on the OIS substrate (130). The OIS-x yoke (440) may be disposed on the lower surface of the OIS substrate (130). OIS-x yoke (440) may be disposed in the groove (111) of the base (110). The OIS-x yoke (440) may be disposed in a position corresponding to the OIS-x coil (410). The OIS-x yoke (440) may be disposed in a position corresponding to the OIS-x magnet (420).

An attraction force may act between the OIS-x magnet (420) and the OIS-x yoke (440). The OIS-x magnet (420) can be pressed in the direction facing the OIS-x yoke (440). The OIS-x carrier (210) can be pressed in the direction of a lower plate (122) of the housing (120). The OIS-x carrier (210) can be pressed in the direction toward the lower late (122) of the housing (120) with the OIS-x guide ball (710) between the lower plate (122) of the housing (120) and the OIS-x carrier (210). This allows the OIS-x guide ball (710) to remain in contact with the OIS-x carrier (210) and the lower plate (122) of the housing (120).

The lens driving device (10) may comprise an OIS-y drive part. The OIS-y drive part may move the OIS-y carrier (220) to a y-axis direction perpendicular to the optical axis. The OIS-y drive part can move the OIS-y carrier (220) in the y-axis direction perpendicular to the optical axis through electromagnetic force. The OIS-y drive part may comprise a coil and a magnet. The OIS-y drive part may comprise an OIS-y magnet (520) and an OIS-y coil (510) that can move the OIS carrier (200) in the y-axis direction perpendicular to both the optical axis and the x-axis. The OIS-y drive part may comprise an OIS-y magnet (520) and an OIS-y coil (510) that can move the OIS-y carrier (220) in the y-axis direction perpendicular to both the optical axis and the x-axis.

The lens driving device (10) may comprise an OIS-y coil (510). The OIS-y drive part may comprise an OIS-y coil (510). The OIS-y coil (510) can interact with the OIS-y magnet (520). The OIS-y coil (510) can move the OIS-y magnet (520) in the y-axis direction perpendicular to the optical axis. The OIS-y coil (510) can move the OIS-y magnet (520) in the y-axis direction perpendicular to the optical axis through interaction with the OIS-y magnet (520). The OIS-y coil (510) may be opposite to the OIS-y magnet (520). The OIS-y coil (510) may face the OIS-y magnet (520). The OIS-y coil (510) may be disposed in a position corresponding to the OIS-y magnet (520). The OIS-y coil (510) can overlap with the OIS-y magnet (520) in the optical axis direction. The OIS-y coil (510) may be disposed on the OIS substrate (130). The OIS-y coil (510) may be disposed on the upper surface of the OIS substrate (130). The OIS-y coil (510) may be disposed in the body part of the OIS substrate (130). The OIS-y coil (510) may be disposed on the base (110). The OIS-y coil (510) may be disposed in the stationary part (100).

The lens driving device (10) may comprise an OIS-y magnet (520). The OIS-y drive part may comprise an OIS-y magnet (520). The OIS-y magnet (520) may be disposed on the OIS-y carrier (220). The OIS-y magnet (520) may be disposed on the lower surface of the OIS-y carrier (220). The OIS-y magnet (520) can be fixed to the OIS-y carrier (220). The OIS-y magnet (520) can be coupled to the OIS-y carrier (220). The OIS-y magnet (520) can be bonded to the OIS-y carrier (220) with an adhesive. The OIS-y magnet (520) may be disposed within the cover (150). The OIS-y magnet (520) can interact with the OIS-y coil (510). The OIS-y magnet (520) can interact electromagnetically with the OIS-y coil (510). The OIS-y magnet (520) may be disposed in a position corresponding to the OIS-y coil (510). The OIS-y magnet (520) may face the OIS-y coil (510). The OIS-y magnet (520) may face the OIS-y coil (510). The OIS-y magnet (520) may overlap with the OIS-y coil (510) in the optical axis direction. The OIS-y magnet (520) may be disposed between the OIS-y carrier (220) and the OIS-y coil (510). The OIS-y magnet (520) may be disposed lower than the OIS-x guide ball (710).

The OIS-y magnet (520) may be a four-pole magnet. OIS-y magnet (520) may comprise a four-pole magnetized magnet. The OIS-y magnet (520) may comprise a first magnet part comprising an N pole and an S pole, and a second magnet part comprising an N pole and an S pole. The first magnet part and the second magnet part may be disposed in a horizontal direction. The first magnet part and the second magnet part are spaced apart in the horizontal direction, and a neutral zone may be disposed between the first magnet part and the second magnet part. The neutral zone may be disposed parallel to the optical axis.

The lens driving device (10) may comprise an OIS-y sensor (530). The OIS-y drive part may comprise an OIS-y sensor (530). The OIS-y sensor (530) may be disposed on the OIS substrate (130). The OIS-y sensor (530) may be disposed in the body part of the OIS substrate (130). The OIS-y sensor (530) may comprise a Hall sensor. The OIS-y sensor (530) can detect the OIS-y magnet (520). The OIS-y sensor (530) can detect the magnetic force of the OIS-y magnet (520). The OIS-y sensor (530) may be disposed within the OIS-y coil (510). The OIS-y sensor (530) may overlap with the OIS-y coil (510) in a direction perpendicular to the optical axis. The OIS-y sensor (530) may be opposite to the OIS-y magnet (520). The OIS-y sensor (530) may be disposed in a position corresponding to the OIS-y magnet (520). The OIS-y sensor (530) can detect the movement of the OIS-y magnet (520). The amount of movement or position of the OIS-y magnet (520) detected by the OIS-y sensor (530) can be used for feedback of the y-axis-oriented image stabilization drive.

The lens driving device (10) may comprise an OIS-yoke (540). The OIS-yoke (540) may be disposed on the OIS substrate (130). OIS-y yoke (540) may be disposed on the lower surface of the OIS substrate (130). The OIS-y yoke (540) may be disposed in the groove (111) of the base (110). OIS-y yoke (540) may be disposed in a position corresponding to OIS-y coil (510). OIS-y yoke (540) may be disposed in a position corresponding to OIS-y magnet (520).

An attraction force may act between the OIS-y magnet (520) and the OIS-y yoke (540). The OIS-y magnet (520) can be pressed in the direction facing the OIS-y yoke (540). The OIS-y carrier (220) can be pressed in the direction facing the OIS-x carrier (210).

The OIS-y carrier (220) can be pressed in the direction facing the OIS-x carrier (210) with the OIS-y guide ball (720) between the OIS-x carrier (210) and the OIS-y carrier (220). This allows the OIS-y guide ball (720) to remain in contact with the OIS-y carrier (220) and the OIS-x carrier (210).

The lens driving device (10) may comprise an AF drive part. The AF drive part can move the AF carrier (300) in the optical axis direction with respect to the stationary part (100). The AF drive part can move the AF carrier (300) in the optical axis direction. The AF drive part can move the AF carrier (300) in the optical axis direction through electromagnetic force. The AF drive part may comprise a coil and a magnet.

The lens driving device (10) may comprise an AF coil (610). The AF drive part may comprise an AF coil (610). The AF coil (610) can interact with the AF magnet (620). The AF coil (610) can move the AF magnet (620) in the optical axis direction. The AF coil (610) can move the AF magnet (620) in the optical axis direction through interaction with the AF magnet (620). The AF coil (610) may face the AF magnet (620). The AF coil (610) may be opposite to the AF magnet (620). The AF coil (610) may be disposed in a position corresponding to the AF magnet (620). The AF coil (610) may overlap with the AF magnet (620) in a direction perpendicular to the optical axis. The AF coil (610) may be disposed on the AF substrate (140). The AF coil (610) may be disposed on the inner surface of the AF substrate (140). The AF coil (610) may be disposed on the inner side of the AF substrate (140). The AF coil (610) may be disposed in the housing (120).

In the first embodiment of the present invention, the AF coil (610) may be disposed in the stationary part (100). The AF coil (610) may be disposed in the housing (120). In other words, the AF coil (610) can be fixed. The AF coil (610) can be fixed without moving even when the AF is driven. Furthermore, the AF coil (610) can be fixed without moving even when the OIS is driven. This structure allows the distance between the AF coil (610) and the AF magnet (620) to be changed when the OIS is driven. When the OIS carrier (200) moves by the OIS drive, the AF carrier (300) can also move along with the OIS carrier (200). When the OIS carrier (200) is moved by the OIS-y magnet (520) and the OIS-y coil (510), the AF carrier (300) can also move with the OIS carrier (200) so that the distance between the AF magnet (620) and the AF coil (610) can be changed. When the OIS carrier (200) is moved by the OIS-y magnet (520) and the OIS-y coil (510), the AF carrier (300) can also move with the OIS carrier (200) so that the distance between the AF magnet (620) and the AF coil (610) can be changed. When the OIS-y magnet (520) and the OIS-y coil (510) move the OIS-y carrier (220), the AF carrier (300) also moves with the OIS-y carrier (220), and the distance between the AF magnet (620) and the AF coil (610) may change. When the OIS-y magnet (520) and the OIS-y coil (510) move the OIS-y carrier (220), the AF carrier (300) also moves with the OIS-y carrier (220), and the distance between the AF magnet (620) and the AF coil (610) in the y-axis direction may change.

In the first embodiment of the present invention, the AF function can be performed without any problems through the controller that applies a current to the AF coil (610) even if the distance between the AF coil (610) and the AF magnet (620) changes. For example, the controller may have a preset AF drive current depending on the distance between the AF coil (610) and the AF magnet (620), so that the AF drive current may be controlled differently depending on the distance between the AF coil (610) and the AF magnet (620).

When the AF carrier (300) moves in the optical axis direction, the distance between the AF magnet (620) and the AF coil (610) can be maintained.

When the AF carrier (300) moves in the x-axis direction, the distance between the AF magnet (620) and the AF coil (610) can be maintained. When the AF carrier (300) moves in the y-axis direction, the distance between the AF magnet (620) and the AF coil (610) can be varied.

When the AF carrier (300) moves by the AF magnet (620) and the AF coil (610), the distance between the AF magnet (620) and the AF coil (610) in the y-axis direction can be kept constant. When OIS-x magnet (420) and OIS-x coil (410) move OIS carrier (200) and AF carrier (300) together, the distance between AF magnet (620) and AF coil (610) in the y-axis direction can be kept constant.

The lens driving device (10) may comprise an AF magnet (620). The AF drive part may comprise an AF magnet (620). The AF magnet (620) may be disposed on the AF carrier (300). The AF magnet (620) may be disposed on the outer surface of the AF carrier (300). The AF magnet (620) can be fixed to the AF carrier (300). The AF magnet (620) can be coupled to the AF carrier (300). The AF magnet (620) can be bonded to the AF carrier (300) with an adhesive. The AF magnet (620) may be disposed within the cover (150). The AF magnet (620) can interact with the AF coil (610). The AF magnet (620) can interact with the AF coil (610) electromagnetically. The AF magnet (620) may be disposed in a position corresponding to the AF coil (610). The AF magnet (620) may face the AF coil (610). The AF magnet (620) may be opposite to the AF coil (610). The AF magnet (620) may overlap the AF coil (610) in a direction perpendicular to the optical axis.

AF magnet (620) may be a 4-pole magnet. AF magnet (620) may comprise a 4-pole magnetized magnet. The AF magnet (620) may comprise a first magnet part comprising an N pole and an S pole, and a second magnet part comprising an N pole and an S pole. The first magnet part and the second magnet part may be disposed in a vertical direction. The first magnet part and the second magnet part are spaced apart in the vertical direction, and a neutral zone may be disposed between the first magnet part and the second magnet part.

In a variant example, the AF magnet (620) may comprise a shape to minimize magnetic field interference with adjacent magnets. The AF magnet (620) may comprise a chamfer surface (625) connecting the outer surface facing the AF coil (610), the inner surface on the opposite side of the outer surface, the upper surface and the lower surface, the two sides, and the inner surface and the two sides. In this case, the magnetic field interference with the magnet placed adjacent to the chamfer surface (625) can be minimized. The chamfer surface (625) may be an inclined surface. In a variant example, the chamfer surface (625) may be formed on only one side of the AF magnet (620). The chamfer surface (625) may connect the inner surface with one side of the AF magnet (620).

Another variant example may comprise a yoke that is disposed on an AF magnet (620). The AF magnet (620) may comprise an outer surface facing the AF coil (610), an inner surface on the opposite side of the outer surface, an upper surface, a lower surface, and both sides. In this case, yokes may be disposed on both sides of the AF magnet (620). In this case, magnetic field interference between the AF magnet (620) and the magnet disposed adjacent to the AF magnet (620) can be minimized by the yoke. As a variant example, the yoke may be disposed on only one side of the AF magnet (620).

The yoke may be formed to a size corresponding to one side of the AF magnet (620). The yoke may be fixed to one side of the AF magnet (620) with an adhesive.

The lens driving device (10) may comprise an AF sensor (630). The AF drive part may comprise an AF sensor (630). The AF sensor (630) may be a Hall sensor. The AF sensor (630) may be disposed on the AF substrate (140). The AF sensor (630) may be disposed on the inner side of the AF substrate (140). The AF sensor (630) can detect the AF magnet (620). The AF sensor (630) can detect the movement of the AF magnet (620). The amount or position of movement of the AF magnet (620) detected by the AF sensor (630) can be used for feedback in the operation of the autofocus.

The AF sensor (630) may be a driver IC. The driver IC may comprise a sensing part. The sensing part may comprise a Hall IC. The driver IC may be electrically connected to the AF coil (610). The driver IC can supply current to the AF coil (610).

The AF sensor (630) may be disposed within the AF coil (610). The AF sensor (630) may overlap with the neutral zone of the AF magnet (620) in a direction perpendicular to the optical axis. In a variant example, the AF sensor (630) may be disposed on the outside of the AF coil (610).

The lens driving device (10) may comprise an AF yoke (640). The AF yoke (640) may be disposed on the AF substrate (140). The AF yoke (640) may be disposed on the outer surface of the AF substrate (140). An attraction force may act between the AF magnet (620) and the AF yoke (640). The AF magnet (620) can be pressed in the direction facing the AF yoke (640). The AF carrier (300) can be pressed in the direction of the first side plate of the housing (120).

At this time, the AF yoke (640) may be disposed in a position corresponding to the first side plate of the housing (120).

The AF carrier (300) can be pressed in the direction facing the first side plate of the housing (120) with the AF guide ball (730) located between the first side plate of the housing (120) and the AF carrier (300). This allows the AF guide ball (730) to remain in contact with the AF carrier (300) and the first side plate of the housing (120).

The lens driving device (10) may comprise a guide member. The guide member may comprise a ball. The guide member may comprise a pin. The guide member may comprise a cylindrical member. The guide member can guide the movement of the movable part in a specific direction relative to the stationary part (100).

The lens driving device (10) may comprise an OIS-x guide ball (710). The OIS-x guide ball (710) can guide the movement of the OIS-x carrier (210) in the x-axis direction relative to the housing (120). The OIS-x guide ball (710) may be disposed between the housing (120) and the OIS-x carrier (210). The OIS-x guide ball (710) may be in contact with the housing (120) and the OIS-x carrier (210). The OIS-X guide ball (710) may be disposed between the groove (123) of the lower plate (122) of the housing (120) and the groove (211) of the lower surface of the OIS-X carrier (210). The OIS-x guide ball (710) may come into contact with the groove (123) of the lower plate (122) of the housing (120) and the groove (211) of the lower surface of the OIS-x carrier (210). The OIS-x guide ball (710) may comprise a first ball that contacts the OIS-x carrier (210) and the housing (120) at four points, and a second ball that contacts the OIS-x carrier (210) and the housing (120) at three points.

The OIS-x guide ball (710) may be spherical. The OIS-x guide ball (710) may be formed of metal. Grease may be applied to the surface of the OIS-x guide ball (710).

The OIS-x guide ball (710) may comprise multiple balls. The OIS-x guide ball (710) may comprise four balls. OIS-x guide ball (710) may comprise four balls spaced apart from each other.

The lens driving device (10) may comprise an OIS guide ball (720). The OIS-y guide ball (720) can guide the movement of the OIS-x carrier (210) relative to the OIS-y carrier (220) in the y-axis direction. The OIS-y guide ball (720) may be disposed between the OIS-x carrier (210) and the OIS-y carrier (220).

The OIS-y guide ball (720) may be in contact with the OIS-x carrier (210) and the OIS-y carrier (220). The OIS-y guide ball (720) may be disposed between the groove (212) on the upper surface of the OIS-x carrier (210) and the groove (222) on the lower surface of the OIS-y carrier (220). The OIS-y guide ball (720) may come into contact with the groove (212) on the upper surface of the OIS-x carrier (210) and the groove (222) on the lower surface of the OIS-y carrier (220). The OIS-y guide ball (720) may comprise a first ball that contacts the OIS-x carrier (210) and the OIS-y carrier (220) at four points, and a second ball that contacts the OIS-x carrier (210) and the OIS-y carrier (220) at three points. The OIS-y guide ball (720) may be spherical. The OIS-y guide ball (720) may be formed of metal. Grease may be applied to the surface of the OIS-y guide ball (720).

The OIS-y guide ball (720) may comprise multiple balls. OIS-y guide ball (720) may comprise four balls. The OIS-y guide ball (720) may comprise four balls spaced apart from each other.

As a variant example, the OIS guide ball may comprise a common ball that guides in both the x-axis and y-axis directions. The common ball may be dispose between the OIS-y carrier (220) and the housing (120). At this time, one of the four OIS-y guide balls (720) may be replaced by one common ball.

The lens driving device (10) may comprise an AF guide ball (730). The AF guide ball (730) can guide the movement of the OIS-y carrier (220) of the AF carrier (300) in the optical axis direction. The AF guide ball (730) may be disposed between the OIS-y carrier (220) and the AF carrier (300). The AF guide ball (730) may be disposed between the OIS-y carrier (220) and the AF carrier (300) in a direction perpendicular to the optical axis. The AF guide ball (730) may be disposed in the groove (221) of the OIS-y carrier (220). The AF guide ball (730) may be disposed in the groove (310) of the AF carrier (300). The AF guide ball (730) may comprise a first ball that contacts the OIS-y carrier (220) and the AF carrier (300) at four points, and a second ball that contacts the OIS-y carrier (220) and the AF carrier (300) at three points. The AF guide ball (730) may be spherical. The AF guide ball (730) may be formed of metal. Grease may be applied to the surface of the AF guide ball (730).

The AF guide ball (730) may comprise multiple balls. AF guide ball (730) may comprise six balls. Three AF guide balls (730) may be disposed on one side of the AF magnet (620), and the remaining three AF guide balls (730) may be disposed on the other side of the AF magnet (620).

The following describes the autofocus (AF) drive (operation) of the lens driving device according to the first embodiment of the present invention, referring to the drawings.

FIGS. 26 to 28 are drawings for explaining the autofocus operation of the lens driving device according to the first embodiment of the present invention. FIG. 26 is a cross-sectional view showing the state of the movable part in the initial state when no current is applied to the AF coil. FIG. 27 is a cross-sectional view showing that the movable part moves upward in the optical axis direction when a forward current is applied to the AF coil. FIG. 28 shows a cross-sectional view of the movable part moving to the lower side of the optical axis when the reverse current is applied to the AF coil.

The movable part may be disposed at a position separated from both the upper plate (151) of the cover (150) and the base (110) in the initial position where no current is applied to the AF coil (610). In this case, the movable part may be the AF movable part. The movable part may comprise an AF carrier (300).

When a forward current is applied to the AF coil (610), the AF magnet (620) can move upward in the optical axis direction due to the electromagnetic interaction between the AF coil (610) and the AF magnet (620) (see A in FIG. 27). At this time, the AF carrier (300) can move upward in the optical axis direction along with the AF magnet (620). Furthermore, the lens can move upward in the optical axis direction along with the AF carrier (300). As a result, the distance between the lens and the image sensor is changed, and the focus of the image that is projected onto the image sensor through the lens can be adjusted.

When a reverse current is applied to the AF coil (610), the AF magnet (620) can move downwards in the optical axis direction due to the electromagnetic interaction between the AF coil (610) and the AF magnet (620) (see FIG. 28B). At this time, the AF carrier (300) can move downward in the optical axis direction along with the AF magnet (620). Furthermore, the lens can move downwards in the optical axis direction along with the AF carrier (300). As a result, the distance between the lens and the image sensor is changed, and the focus of the image projected onto the image sensor through the lens can be adjusted.

Meanwhile, during the movement of the AF magnet (620), the AF sensor (630) can detect the strength of the magnetic field of the AF magnet (620) and detect the amount of movement or position of the lens in the optical axis direction. The amount of movement or position of the lens in the optical axis direction detected by the AF sensor (630) can be used for autofocus feedback control.

The following describes the optical image stabilization (OIS) operation of the lens driving device according to the first embodiment of the present invention, referring to the drawings.

FIGS. 29 to 32 are drawings for explaining the image stabilization drive of the lens driving device according to the first embodiment of the present invention. FIGS. 29 and 31 are cross-sectional views showing the state of the movable part in the initial state when no current is applied to the OIS-x coil and the OIS-y coil. FIG. 30 is a cross-sectional view showing that the OIS-x coil is energized and the OIS-x carrier and the OIS-y carrier move in the x-axis direction perpendicular to the optical axis. FIG. 32 is a cross-sectional view showing the movement of the OIS-y carrier in the y-axis direction, which is perpendicular to both the optical axis and the x-axis, when current is applied to the OIS-y coil.

As shown in FIGS. 29 and 31, the movable part may be disposed in the initial position where no current is applied to the OIS-x coil (410) and the OIS-y coil (510). In this case, the movable part may be an OIS movable part.

In addition, the movable part may comprise an OIS movable part and an AF movable part. The movable part may comprise an OIS-x carrier (210), an OIS-y carrier (220), and an AF carrier (300).

When a current is applied to the OIS-x coil (410), the OIS-x magnet (420) can move in the x-axis direction perpendicular to the optical axis due to the electromagnetic interaction between the OIS-x coil (410) and the OIS-x magnet (420) (see A in FIG. 30). At this time, the OIS-x carrier (210) can move in the x-axis direction along with the OIS-x magnet (420). Furthermore, the OIS-y carrier (220), AF carrier (300), and lens can move in the x-axis direction along with the OIS-x carrier (210). When a forward current is applied to the OIS-x coil (410), the OIS-x magnet (420), OIS-x carrier (210), OIS-y carrier (220), AF carrier (300), and lens can move in one direction on the x-axis. In addition, when a reverse current is applied to the OIS-x coil (410), the OIS-x magnet (420), OIS-x carrier (210), OIS-y carrier (220), AF carrier (300), and lens can move in the other direction on the x-axis.

When a current is applied to the OIS-y coil (510), the OIS-y magnet (520) can move in the y-axis direction perpendicular to the optical axis due to the electromagnetic interaction between the OIS-y coil (510) and the OIS-y magnet (520) (see A in FIG. 32). At this time, the OIS-y carrier (220) can move in the y-axis direction along with the OIS-y magnet (520). Furthermore, the AF carrier (300) and the lens can move in the y-axis direction along with the OIS-y carrier (220). When a forward current is applied to the OIS-y coil (510), the OIS-y magnet (520), OIS-y carrier (220), AF carrier (300), and lens can move in one direction on the y-axis. In addition, when a reverse current is applied to the OIS-y coil (510), the OIS-y magnet (520), OIS-y carrier (220), AF carrier (300), and lens can move in the other direction on the y-axis.

Meanwhile, the OIS-x sensor (430) can detect the amount of movement or position of the OIS-x magnet (420) by detecting the strength of the magnetic field of the OIS-x magnet (420). The amount of movement or position detected by the OIS-x sensor (430) can be used for x-axis-oriented image stabilization feedback control. The OIS-y sensor (530) can detect the amount of movement or position of the OIS-y magnet (520) by detecting the strength of the magnetic field of the OIS-y magnet (520). The amount of movement or position detected by the OIS-y sensor (530) can be used for y-axis image stabilization feedback control.

The camera device according to the first embodiment of the present invention is described below with reference to the drawings.

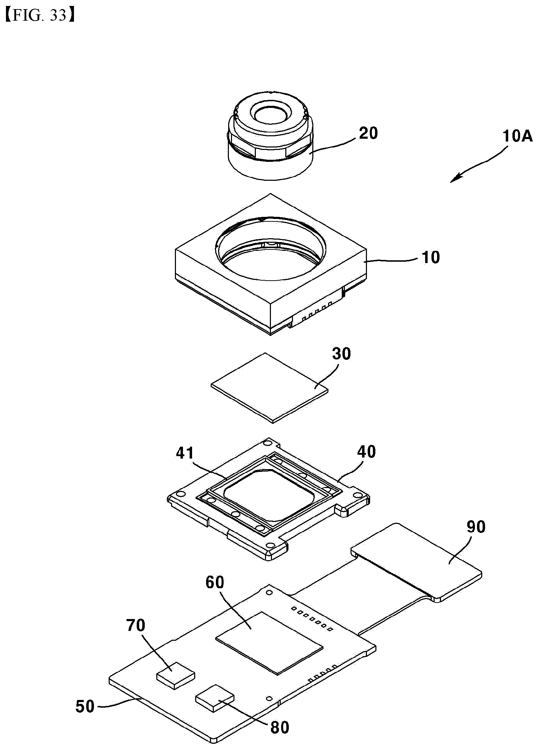

FIG. 33 is an exploded perspective view of the camera device according to a first embodiment of the present invention.

A camera device (10A) may comprise a camera module.

The camera device (10A) may comprise a lens module (20). The lens module (20) may comprise at least one lens. The lens may be disposed in a position corresponding to the image sensor (60). The lens module (20) may comprise a lens and a barrel. The lens module (20) can be coupled to the holder (210) of the lens driving device (10). The lens module (20) may be screwed and/or bonded to the holder (210). The lens module (20) can move integrally with the holder (210).

The camera device (10A) may comprise a filter (30). The filter (30) may serve to block the incidence of light in a specific frequency band from light passing through the lens module (20) onto the image sensor (60). The filter (30) may be disposed parallel to the x-y plane. The filter (30) may be disposed between the lens module (20) and the image sensor (60). The filter (30) may be disposed in the sensor base (40). In a variant example, the filter (30) may be disposed on the base (110). The filter (30) may comprise an infrared filter. The infrared filter can block the incidence of light in the infrared region on the image sensor (60).

The camera device (10A) may comprise a sensor base (40). The sensor base (40) may be disposed between the lens driving device (10) and the printed circuit board (50). The sensor base (40) may comprise a projection (41) in which a filter (30) is placed. An opening may be formed in the portion of the sensor base (40) where the filter (30) is located so that light passing through the filter (30) can be incident on the image sensor (60). An adhesive member may bond or adhere the base (310) of the lens driving device (10) to the sensor base (40). The adhesive member may additionally serve to prevent foreign matter from entering the interior of the lens driving device (10). The adhesive member may comprise one or more of epoxy, thermosetting adhesive, and ultraviolet curing adhesive.

The camera device (10A) may comprise a printed circuit board (PCB, 50). The printed circuit board (50) may be a substrate or a circuit board. A lens driving device (10) may be disposed on the printed circuit board (50). A sensor base (40) may be disposed between the printed circuit board (50) and the lens driving device (10). The printed circuit board (50) may be electrically connected to the lens driving device (10). An image sensor (60) may be disposed on the printed circuit board (50). The printed circuit board (50) may be equipped with various circuits, elements, and controllers to convert the image captured by the image sensor (60) into an electrical signal and transmit it to an external device.

The camera device (10A) may comprise an image sensor (60). The image sensor (60) may be configured so that an image is formed by the incident of light passing through the lens and filter (30). The image sensor (60) can be mounted on a printed circuit board (50). The image sensor (60) can be electrically connected to the printed circuit board (50). For example, the image sensor (60) can be bonded to the printed circuit board (50) by surface mounting technology (SMT).

In another example, the image sensor (60) can be coupled to the printed circuit board (50) by flip chip technology.

The image sensor (60) may be disposed so that the lens and the optical axis are aligned. In other words, the optical axis of the image sensor (60) and the optical axis of the lens can be aligned. The image sensor (60) can convert the light irradiated on the effective image area of the image sensor (60) into an electrical signal. The image sensor (60) may be any one of a CCD (charge coupled device), MOS (metal oxide semiconductor), CPD, and CID.

The camera device (10A) may comprise a motion sensor (70). The motion sensor (70) can be mounted on a printed circuit board (50). The motion sensor (70) can be electrically connected to the controller (80) through the circuit pattern provided on the printed circuit board (50). The motion sensor (70) can output angular velocity information of rotation caused by the movement of the camera device (10A). The motion sensor (70) may comprise a two-axis or three-axis gyro sensor, or an angular velocity sensor.

The camera device (10A) may comprise a controller (80). The controller (80) may be disposed on a printed circuit board (50). The controller (80) may be electrically connected to the coil (330) of the lens driving device (10). The controller (80) can individually control the direction, strength, and amplitude of the current supplied to the coil (330). The controller (80) can control the lens driving device (10) to perform an autofocus function and/or an image stabilization (shake-compensation) function. Furthermore, the controller (80) can perform autofocus feedback control and/or image stabilization feedback control for the lens driving device (10).

The camera device (10A) may comprise a connector (90). The connector (90) may be electrically connected to a printed circuit board (50). The connector (90) may comprise a port for electrically connecting to an external device.

The optical device according to the first embodiment of the present invention is described below with reference to the drawings.

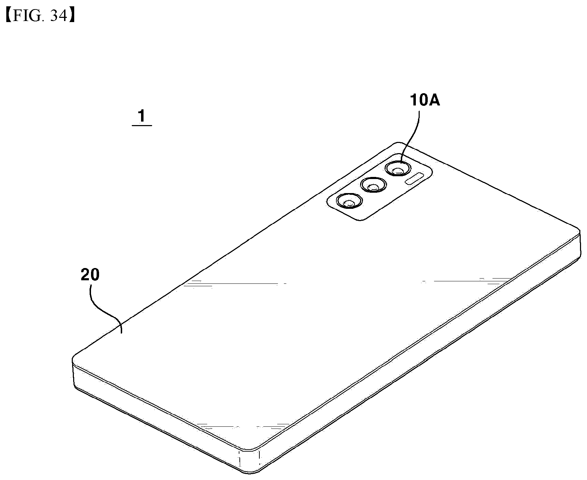

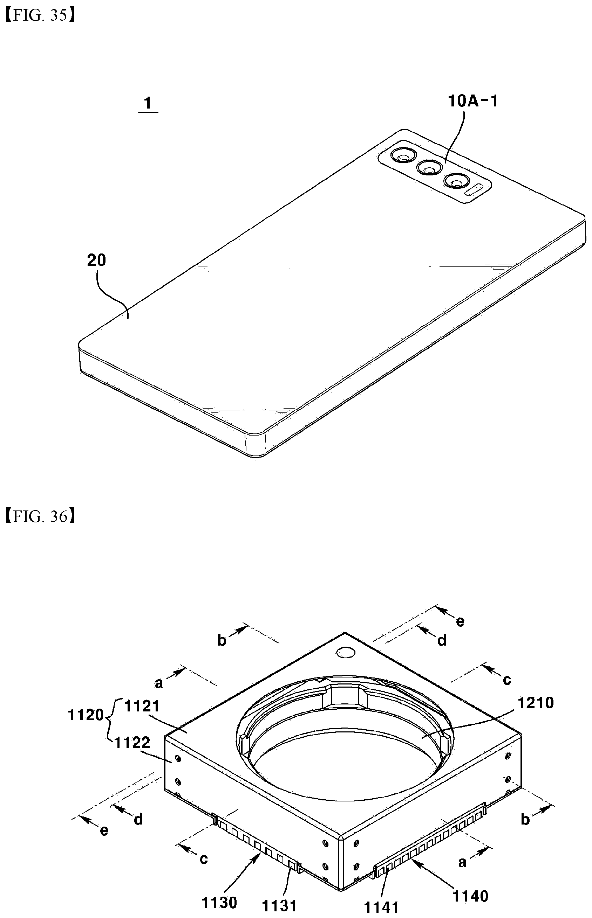

FIG. 34 is a perspective view of an optical device according to a first embodiment of the present invention, and FIG. 35 is a perspective view of an optical device according to a variant example.

Optical device (1) may comprise one or more of a mobile phone, cellular phone, portable terminal, mobile terminal, smart phone, smart pad, portable smart device, digital camera, laptop computer, digital broadcasting terminal, personal digital assistant (PDA), portable multimedia player (PMP), and navigation device. Optical device (1) may comprise any device for taking pictures or videos.

The optical device (1) may comprise a main body (20). The optical device (1) may comprise a camera device (10A). The camera device (10A) may be disposed in the main body (20)..

The camera device (10A) can photograph a subject. The optical device (1) may comprise a display. The display may be disposed in the main body (20). The display can output one or more of the images and videos captured by the camera device (10A). The display may be placed on the first surface of the main body (20). The camera device (10A) can be placed on one or more of the first surface of the main body (20) and the second surface opposite to the first surface. As shown in FIG. 34, the camera device (10A) can be arranged with the triple camera in a vertical direction. As shown in FIG. 35, a camera device (10A-1) may have the triple camera arranged in a horizontal direction.

The following describes the configuration of the lens driving device according to the second embodiment of the present invention with reference to the drawings.

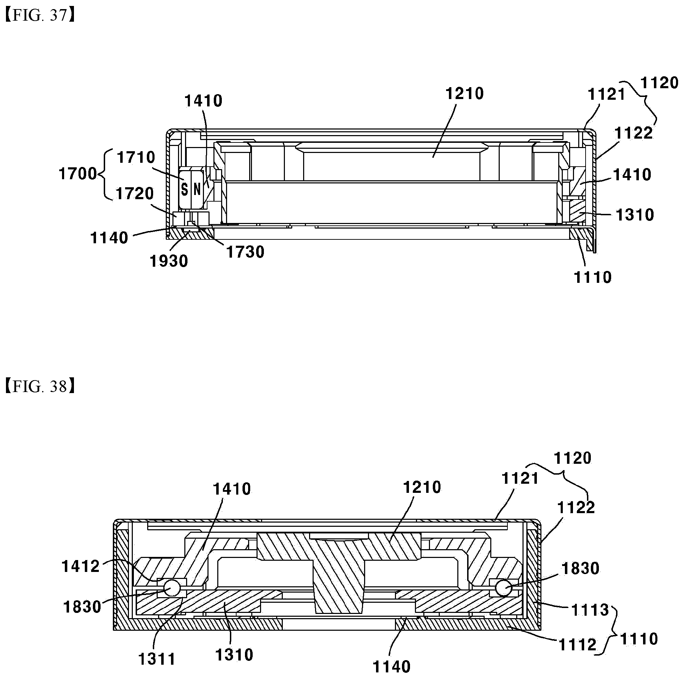

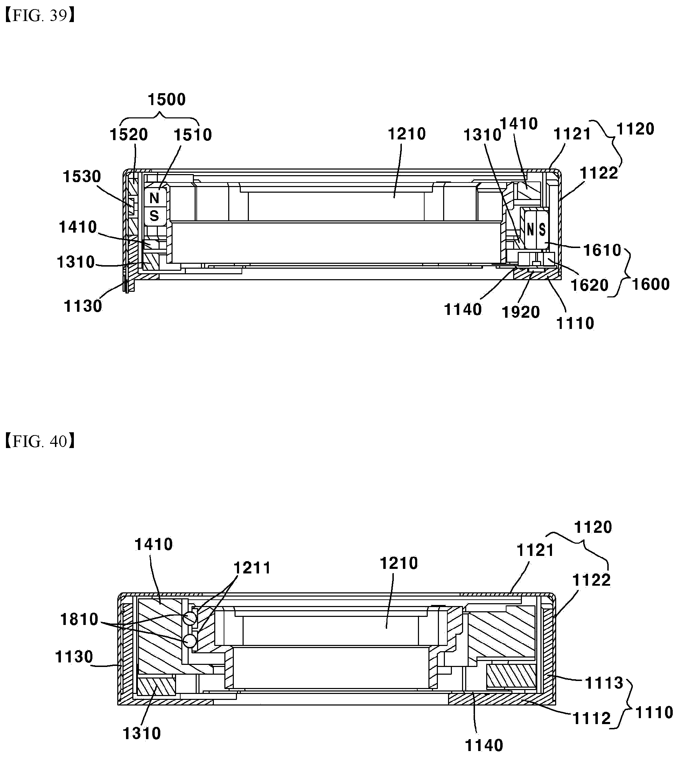

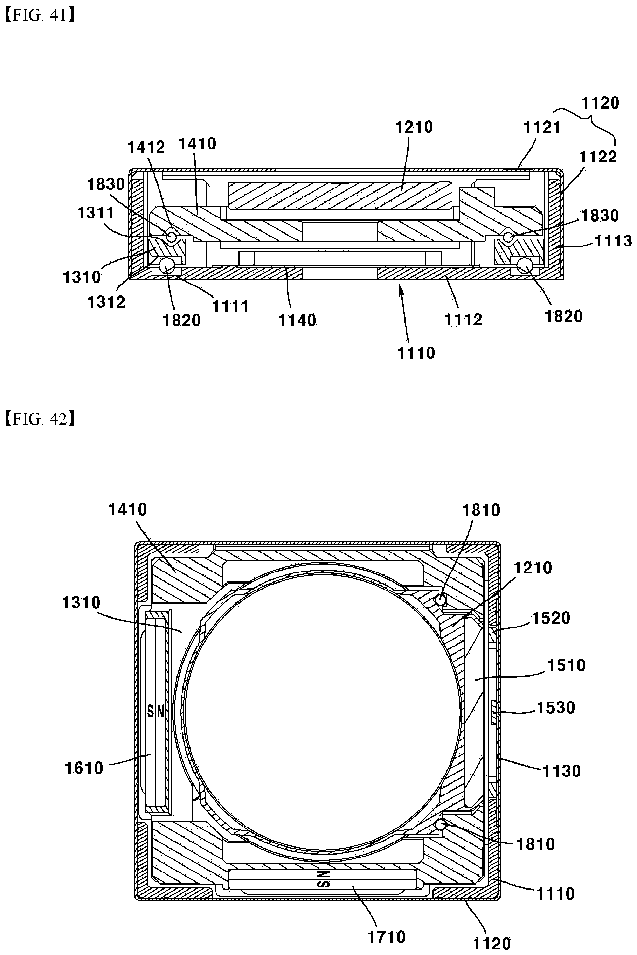

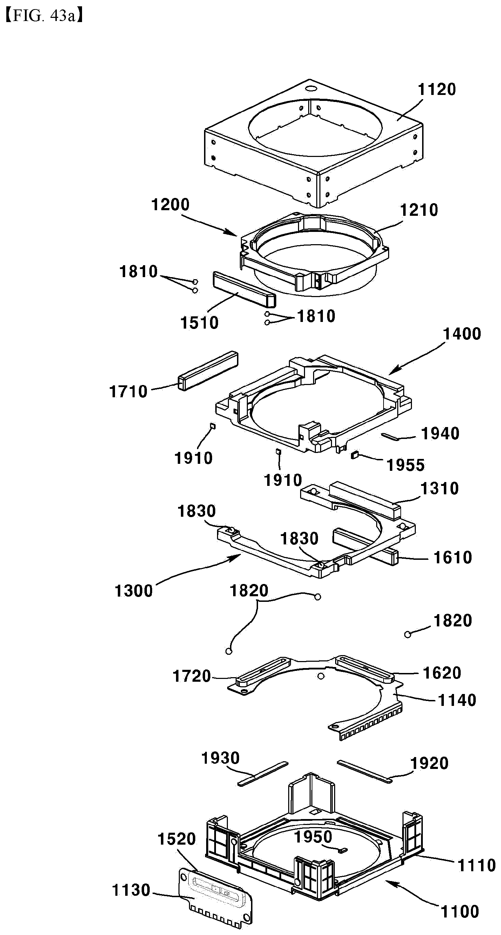

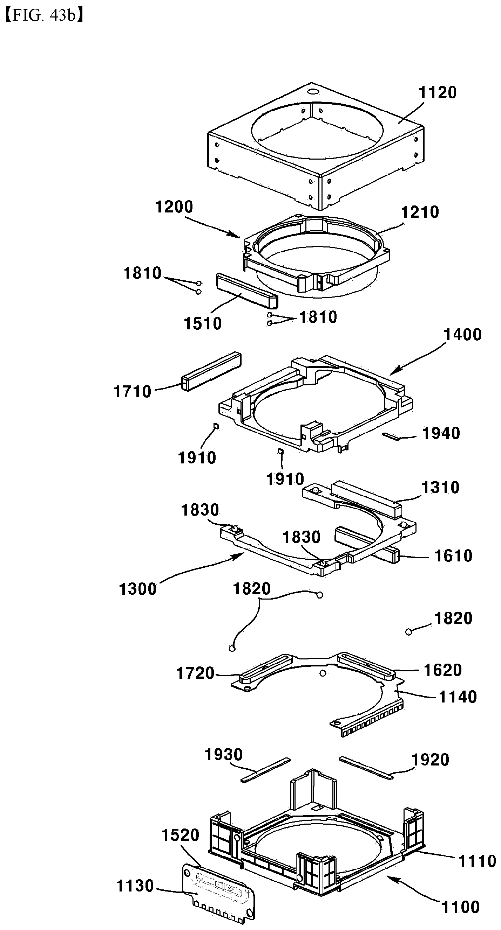

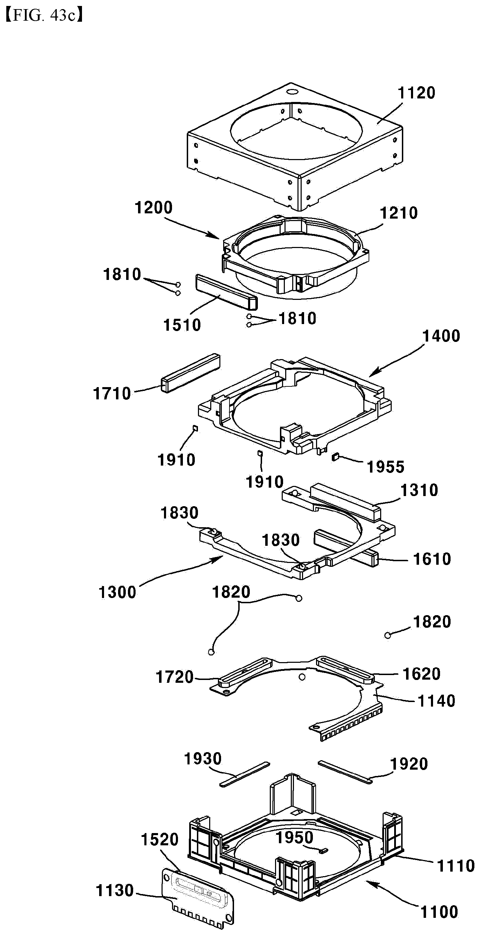

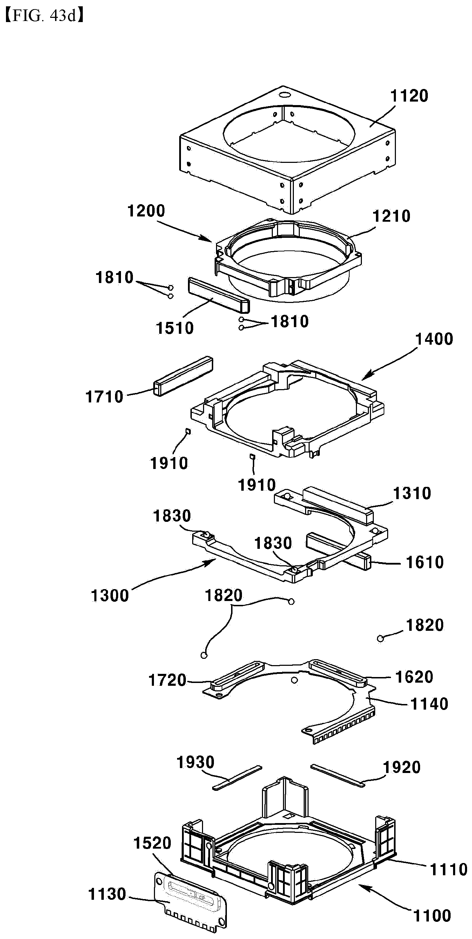

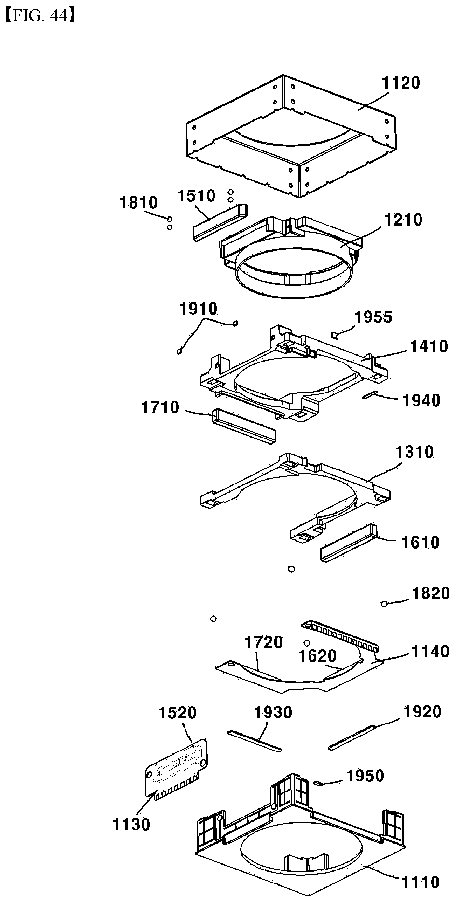

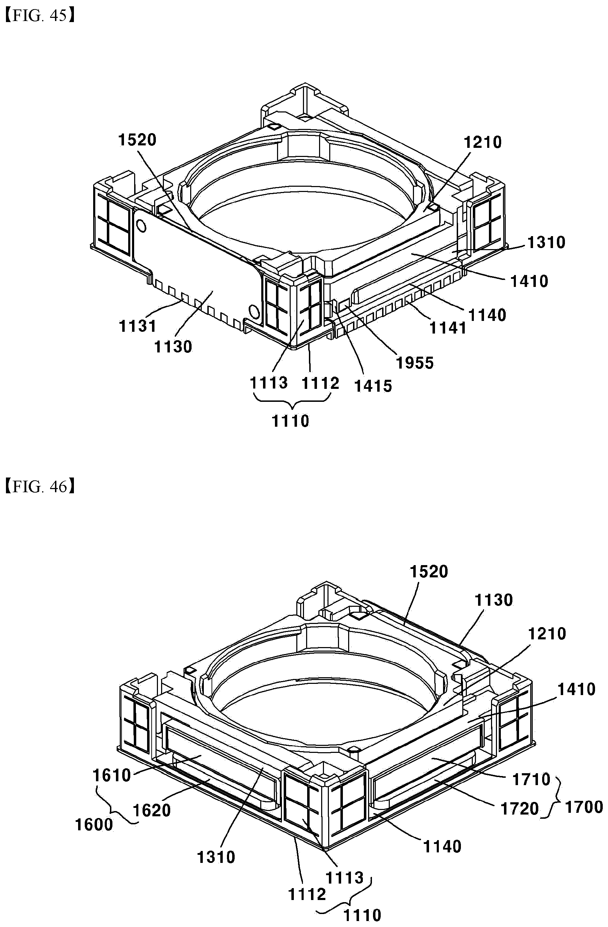

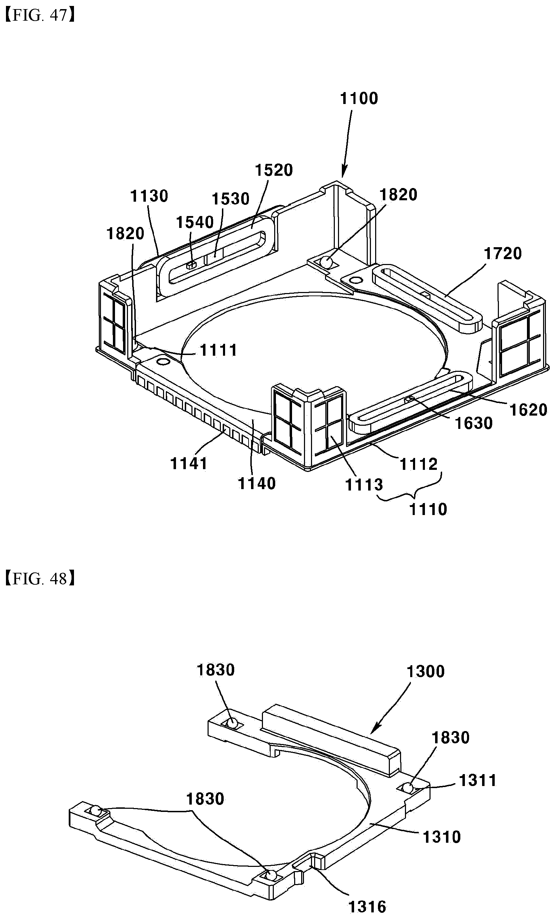

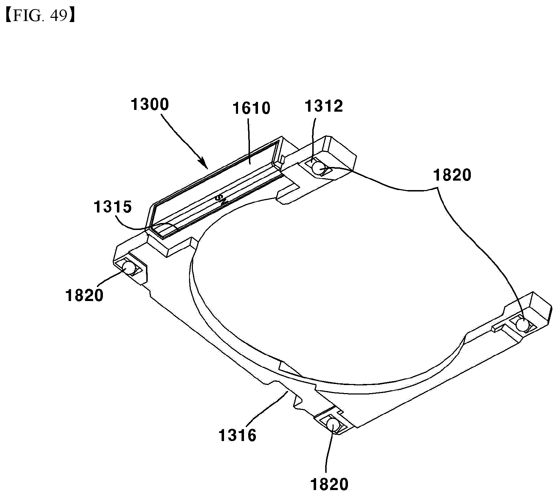

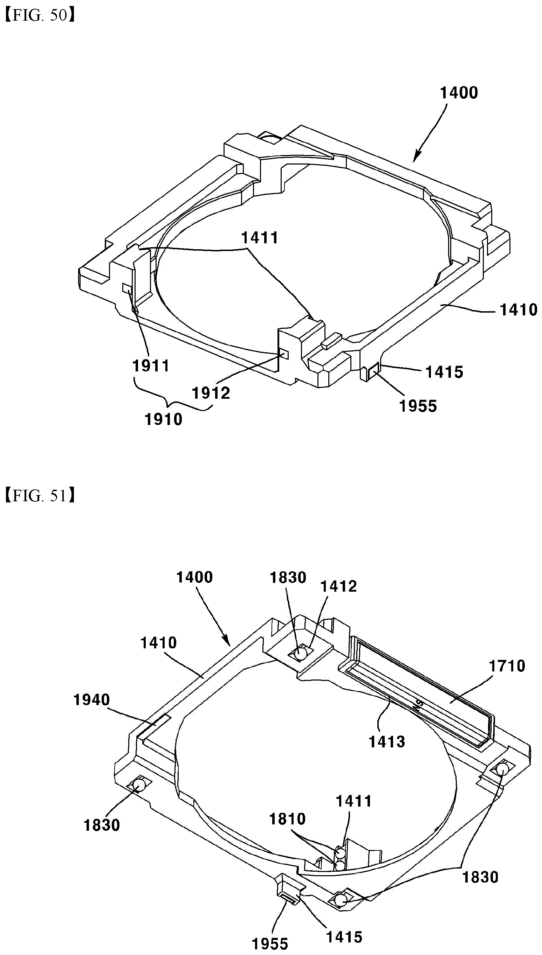

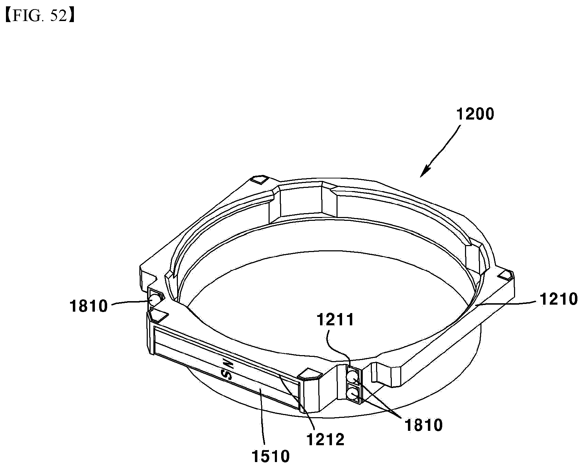

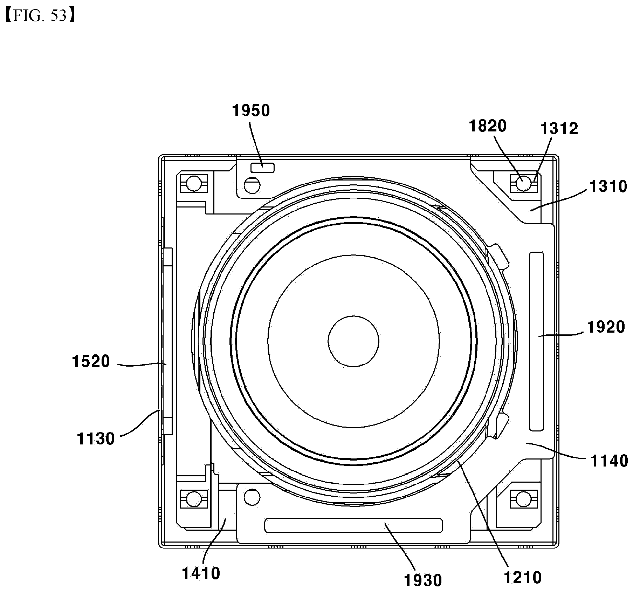

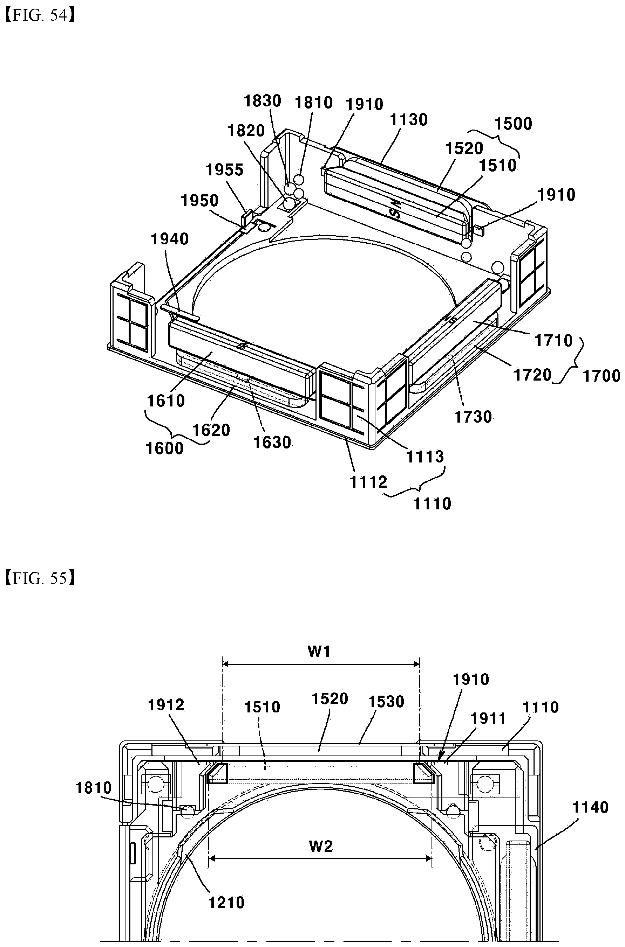

FIG. 36 is a perspective view of the lens driving device according to a second embodiment of the present invention, FIG. 37 is a cross-sectional view of FIG. 36 from a-a, FIG. 38 is a cross-sectional view of FIG. 36 from b-b, FIG. 39 is a cross-sectional view of FIG. 36 from c-c, FIG. 40 is a cross-sectional view of FIG. 36 from d-d, FIG. 41 is a cross-sectional view of FIG. 36 from E-E, FIG. 42 is a cross-sectional perspective view of a lens driving device according to a second embodiment of the present invention, cut in a direction perpendicular to the optical axis, FIG. 43a is an exploded perspective view of the lens driving device according to a second embodiment of the present invention, FIG. 43b is an exploded perspective view of the lens driving device according to a first variant example, FIG. 43c is an exploded perspective view of the lens driving device according to a second variant example, FIG. 43d is an exploded perspective view of the lens driving device according to a third variant example, FIG. 44 is an exploded perspective view of the lens driving device according to a second embodiment of the present invention, viewed from a different direction to that of FIG. 43a, FIG. 45 is a perspective view of the lens driving unit of the second embodiment of the present invention with the cover removed, FIG. 46 is a perspective view of the lens driving device of the second embodiment of the present invention in a state in which the cover is removed, viewed from a different direction to that of FIG. 45, FIG. 47 is a perspective view showing a stationary part and related configuration of the lens driving device according to the second embodiment of the present invention, FIG. 48 is a perspective view showing the OIS-x movable part of the lens driving device according to the second embodiment of the present invention and the related configuration, FIG. 49 is a bottom perspective view of the OIS-x movable part and related configuration of the lens driving device according to the second embodiment of the present invention, FIG. 50 is a perspective view showing the OIS-y movable part and related configuration of the lens driving device according to the second embodiment of the present invention, FIG. 51 is a bottom perspective view showing the OIS-y movable part and related configuration of the lens driving device according to the second embodiment of the present invention, FIG. 52 is a perspective view showing the AF movable part of the lens driving device and the related configuration according to the second embodiment of the present invention, FIG. 53 is a bottom view of the lens driving device of the second embodiment of the present invention with the base and cover removed, FIG. 54 is a perspective view showing a drive part and a guide member and related configuration of the lens driving device according to the second embodiment of the present invention, together with a base, FIG. 55 is a partial perspective plan view showing the arrangement of the AF magnet and the AF attraction yoke of the lens driving device according to the second embodiment of the present invention, and FIG. 56 is a front view showing the arrangement of the AF magnet and the AF attraction yoke of the lens driving device according to the second embodiment of the present invention..

A lens driving device (1010) may be a voice coil motor (VCM). The lens driving device (1010) may be a lens driving motor. The lens driving device (1010) may be a lens driving actuator. The lens driving device (1010) may comprise an AF module. The lens driving device (1010) may comprise an OIS module.

The lens driving device (1010) may comprise a stationary part (1100). The stationary part (1100) may be a relatively fixed portion when the movable part moves. The movable part can move relative to the stationary part. The stationary part (1100) may be disposed on the outside of the movable part. The stationary part (1100) can accommodate the movable part on the inside.

The lens driving device (1010) may comprise a base (1110). The stationary part (1100) may comprise a base (1110). The base (1110) may be disposed below an AF carrier (1210). The base (1110) may be disposed under an OIS-x carrier (1310). The base (1110) may be disposed under an OIS-y carrier (1410). The base (1110) may be coupled with the cover (1120). The AF carrier (1210), the OIS-x carrier (1310), and the OIS-y carrier (1410) may be disposed on the base (1110). AF Carrier (1210), OIS-x Carrier (1310) and OIS-y Carrier (1410) may be disposed on a lower plate (1112) of the base (1110). The AF carrier (1210), OIS-x carrier (1310) and OIS-y carrier (1410) may be disposed within the base (1110). The AF Carrier (1210), OIS-x Carrier (1310) and OIS-y Carrier (1410) may be disposed within a side plate (1113) of the base (1110).

The base (1110) may comprise a groove (1111). The groove (1111) may be an 'OIS-x guide ball receiving groove'. The groove (1111) may be formed concave to the base (1110). The groove (1111) may be formed by recessing one side of the base (1110). The groove (1111) may be formed in the lower plate (1112) of the base (1110). The groove (1111) may be formed on the upper surface of the base (1110). An OIS-x guide ball (1820) may be disposed in the groove (1111). The groove (1111) may be in direct contact with the OIS-x guide ball (1820). The groove (1111) may be disposed in the x-axis direction perpendicular to the optical axis. The groove (1111) may comprise multiple grooves. The groove (1111) may comprise four grooves. The four grooves may be arranged in parallel with each other. The groove (1111) may comprise a first groove that is in contact with the OIS-X guide ball (1820) at two points, and a second groove that is in contact with the OIS-X guide ball (1820) at one point. In a variant example, both the first groove and the second groove may be in contact with the OIS-x guide ball (1820) at two points.

The base (1110) may comprise a lower plate (1112). The base (1110) may comprise a side plate (1113). The side plate (1113) of the base (1110) may be a 'side part'. The side plate (1113) of the base (1110) may extend from the upper surface of the lower plate (1112). The side plate (1113) of the base (1110) may comprise multiple side plates. The side plate (1113) of the base (1110) may comprise four side plates. The base (1110) may comprise a first side part and a second side part arranged on opposite sides of each other, and a third side part and a fourth side part arranged on opposite sides of each other. The AF coil (1520) may be disposed on the side of the first side part of the base (1110). An OIS-x coil (1620) may be disposed on the side of the second side part of the base (1110). An OIS-y coil (1720) may be disposed on the side of the third side part of the base (1110).

The base (1110) may comprise a groove. The groove may be a 'yoke receiving groove'. The groove may be formed in the lower plate (1112) of the base (1110). The groove may be formed on the upper surface of the lower plate (1112) of the base (1110). The grooves may be disposed with OIS-x attraction yoke (1920) and OIS-y attraction yoke (1930).

The lens driving device (1010) may comprise a cover (1120). The stationary part (1100) may comprise a cover (1120). The cover (1120) may be disposed at the base (1110). The cover (1120) may be disposed on the base (1110). The cover (1120) can be coupled to the base (1110). The cover (1120) can be fixed to the base (1110). The cover (1120) can be bonded to the base (1110) with an adhesive. The cover (1120) can accommodate the AF carrier (1210) inside. The cover (1120) can accommodate the OIS-x carrier (1310) inside. The cover (1120) can accommodate the OIS-y carrier (1410) inside. The cover (1120) may be a shield member. The cover (1120) may be a shield can.

The cover (1120) may comprise an upper plate (1121). The upper plate (1121) may be disposed on a movable part. The upper side movement of the movable part may be limited by the movable part contacting the upper plate (1121). The upper plate (1121) may comprise a hole through which light passes.

The cover (1120) may comprise a side plate (1122). The side plate (1122) may extend from the upper plate (1121). The side plate (1122) may be disposed on the base (1110). The side plate (1122) may be disposed in a staircase part that protrudes at the lower portion of the outer side of the base (1110). The side plate (1122) may comprise multiple side plates. The side plate (1122) may comprise four side plates. The side plate (1122) may comprise a first side plate and a second side plate arranged on opposite sides of each other, and a third side plate and a fourth side plate arranged on opposite sides of each other.

The AF magnet (1510) may be disposed between the AF carrier (1210) and the first side plate of the cover (1120). An OIS-x magnet (1610) may be disposed between the AF carrier (1210) and the second side plate of the cover (1120). OIS-y magnet (1710) may be disposed between the third side plate of cover (1120) and the AF carrier (1210).

The lens driving device (1010) may comprise a side substrate (1130). The stationary part (1100) may comprise a side substrate (1130). The side substrate (1130) may be disposed on the base (1110). The side substrate (1130) may be disposed on the side plate (1113) of the base (1110). The side substrate (1130) may be disposed on the outer side of the side plate (1122) of the cover (1120). The side substrate (1130) may be disposed parallel to the optical axis. The side substrate (1130) may be a circuit board. The side substrate (1130) may be a printed circuit board. The side substrate (1130) may comprise a flexible printed circuit board (FPCB). The side substrate (1130) may be flexible. The side substrate (1130) can be bent. AF coil (1520) may be disposed on the side substrate (1130). The AF coil (1520) may be disposed on the inner surface of the side substrate (1130). The AF sensor (1530) may be disposed on the side substrate (1130). The AF sensor (1530) may be disposed on the inner surface of the side substrate (1130). A capacitor (1540) may be disposed on the side substrate (1130). The capacitor (1540) may be disposed on the inner surface of the side substrate (1130). The side substrate (1130) may comprise a body part. An AF coil (1520) may be disposed in the body part. The side substrate (1130) may comprise a terminal (1131). The terminal (1131) may be disposed on the terminal part extending downward from the body part. The terminal (1131) may be formed at the lower end of the side substrate (1130). The terminal (1131) may protrude below the base (1110).

The terminal (1131) may comprise a plurality of terminals. The terminal (1131) of the side substrate (1130) can be electrically connected to the AF coil (1520). The terminal (1131) of the side substrate (1130) can be electrically connected to the AF sensor (1530). The terminal (1131) can be coupled with the printed circuit board (1050). The terminal (1131) can be coupled to the printed circuit board (1050) via solder. The terminal (1131) can be connected to the printed circuit board (1050) through a conductive member.

The lens driving device (1010) may comprise a lower substrate (1140). The stationary part (1100) may comprise a lower substrate (1140). The lower substrate (1140) may be disposed on the base (1110). The lower substrate (1140) may be disposed on the lower plate (1112) of the base (1110). The lower substrate (1140) may be disposed on the upper surface of the lower plate (1112) of the base (1110). The lower substrate (1140) may be disposed perpendicular to the optical axis. The lower substrate (1140) may be a circuit board. The lower substrate (1140) may be a printed circuit board. The lower substrate (1140) may comprise a flexible printed circuit board (FPCB). The lower substrate (1140) may be flexible. The lower substrate (1140) can be bent. An OIS-x coil (1620) may be disposed on a lower substrate (1140). The OIS-x coil (1620) may be disposed on the upper surface of the lower substrate (1140).The OIS-y coil (1720) may be disposed on the lower substrate (1140). The OIS-y coil (1720) may be disposed on the upper surface of the lower substrate (1140). The OIS-y sensor (1730) may be disposed on the lower substrate (1140). The OIS-y sensor (1730) may be placed on the upper surface of the lower substrate (1140).

The lower substrate (1140) may comprise a body part. The body part may be disposed with an OIS-x coil (1620) and an OIS-y coil (1720). The lower substrate (1140) may comprise a terminal (1141). The terminal (1141) may be disposed in the terminal part that is bent downward from the body part and extended. The terminal (1141) may be formed at the lower end of the lower substrate (1140). The terminal (1141) may protrude below the base (1110).

The terminal (1141) may comprise a plurality of terminals. The terminal (1141) of the lower substrate (1140) may comprise a first terminal electrically connected to the OIS-x coil (1620). The terminal (1141) of the lower substrate (1140) may comprise a second terminal electrically connected to the OIS-x sensor (1630). The terminal (1141) of the lower substrate (1140) may comprise a third terminal electrically connected to the OIS-y coil (1720). The terminal (1141) of the lower substrate (1140) may comprise a fourth terminal electrically connected to the OIS-y sensor (1730). The terminal (1141) may be coupled with a printed circuit board (1050). The terminal (1141) may be coupled to the printed circuit board (1050) via solder. The terminal (1141) may be coupled to the printed circuit board (1050) via a conductive member.

The lens driving device (1010) may comprise a movable part. The movable part may be disposed in a stationary part (1100). The movable part may be disposed within the stationary part (1100). The movable part may be disposed on the stationary part (1100). The movable part may be disposed movably in the stationary part (1100). The movable part can be moved relative to the stationary part (1100) by the drive part. The movable part can be moved when the AF is driven. The movable part can be moved when the OIS is driven. A lens may be coupled to the movable part.

The lens driving device (1010) may comprise an AF movable part (1200). The AF movable part (1200) may be disposed on the stationary part (1100). The AF movable part (1200) may be disposed within the stationary part (1100). The AF movable part (1200) may be disposed on the stationary part (1100). The AF movable part (1200) may be disposed within the OIS-x movable part (1300). AF movable part (1200) may be disposed on OIS-x movable part (1300). AF movable part (1200) may be disposed within OIS-y movable part (1400). AF movable part (1200) may be disposed on OIS-y movable part (1400). AF movable part (1200) may be disposed movably. AF movable part (1200) can be moved. AF movable part (1200) can be moved in the optical axis direction. AF movable part (1200) can be moved in the optical axis direction by AF drive part (1500) with respect to stationary part (1100) and OIS-x movable part (1300) and OIS-y movable part (1400). The AF movable part (1200) can be moved when the AF is driven.

When current is applied to the OIS-y coil (1720), the AF movable part (1200) can move together with the OIS-y movable part (1400). When current is applied to the OIS-x coil (1620), the AF movable part (1200) and the OIS-y movable part (1400) can move together with the OIS-x movable part (1300).

The lens driving device (1010) may comprise an AF carrier (1210). The AF movable part (1200) may comprise an AF carrier (1210). The AF carrier (1210) may be a 'bobbin'. The AF carrier (1210) may be an 'AF holder'. The AF carrier (1210) may be disposed within the base (1110). The AF carrier (1210) may be disposed on the base (1110). The AF carrier (1210) may be disposed within the OIS-x carrier (1310). The AF carrier (1210) may be disposed on the OIS-x carrier (1310). AF carrier (1210) may be disposed within OIS-y carrier (1410). AF carrier (1210) may be disposed on OIS-y carrier (1410). The AF carrier (1210) may be disposed within the cover (1120). The AF carrier (1210) may be movably disposed in the optical axis direction. The AF carrier (1210) can be moved. The AF carrier (1210) can be moved in the optical axis direction.

The AF carrier (1210) may comprise a groove (1211). The groove (1211) may be an 'AF guide ball receiving groove'. AF guide ball (1810) may be disposed in the groove (1211). The groove (1211) may be in direct contact with the AF guide ball (1810). The groove (1211) may comprise multiple grooves. The groove (1211) may comprise four grooves. The number of grooves (1211) can be the same as the number of AF guide balls (1810). One AF guide ball (1810) can be placed in each of multiple grooves. The groove (1211) may comprise a first groove in which the AF guide ball (1810) makes contact at two points and a second groove in which the AF guide ball (1810) makes contact at one point. In a variant example, both the first groove and the second groove may contact the AF guide ball (1810) at two points.

The AF carrier (1210) may comprise a groove (1212). The groove (1212) may be an 'AF magnet receiving groove.' The groove (1212) may be formed on the outer surface of the AF carrier (1210). An AF magnet (1510) may be disposed in the groove (1212). The groove (1212) may be formed in a shape corresponding to the AF magnet (1510).

The lens driving device (1010) may comprise an OIS-x movable part (1300). The OIS-x movable part (1300) may be disposed in the stationary part (1100). The OIS-x movable part (1300) may be disposed within the stationary part (1100). The OIS-x movable part (1300) may be disposed on the stationary part (1100). OIS-x movable part (1300) may be disposed below OIS-y movable part (1400). OIS-x movable part (1300) may be disposed between the stationary part (1100) and AF movable part (1200). OIS-x movable part (1300) may be disposed between the stationary part (1100) and OIS-y movable part (1400). The OIS-x movable part (1300) can be disposed movably. The OIS-x movable part (1300) can be moved in the x-axis direction with respect to the stationary part (1100) by the OIS-x drive part (1600).

The OIS-x movable part (1300) can be moved when the OIS is driven. When the OIS-x movable part (1300) moves in the x-axis direction, the OIS-y movable part (1400) and the AF movable part (1200) can also move together.

The lens driving device (1010) may comprise an OIS-x carrier (1310). The OIS-x movable part (1300) may comprise an OIS-x carrier (1310). The OIS-x carrier (1310) may be an 'OIS-x holder'. The OIS-x carrier (1310) may be disposed within the base (1110). The OIS-x carrier (1310) may be disposed on the base (1110). The OIS-x carrier (1310) may be disposed below the OIS-y carrier (1410). The OIS-x carrier (1310) may be disposed within the cover (1120). The OIS-x carrier (1310) may be disposed between the base (1110) and OIS-y carrier (1410). The OIS-x carrier (1310) may be placed between the base (1110) and OIS-y carrier (1410). The OIS-x carrier (1310) may be disposed so that it can move in the x-axis direction.

The OIS-x carrier (1310) may comprise a groove (1311). The groove (1311) may be an 'OIS-y guide ball receiving groove.' The groove (1311) may be disposed on the upper surface of the OIS-x carrier (1310). An OIS-y guide ball (1830) may be placed in the groove (1311). The groove (1311) may be in direct contact with the OIS-y guide ball (1830). The groove (1311) may be disposed in the y-axis direction. The groove (1311) may comprise multiple grooves. The groove (1311) may comprise four grooves. The groove (1311) may comprise a first groove that contacts the OIS-y guide ball (1830) at two points and a second groove that contacts the OIS-y guide ball (1830) at one point. As a variant example, both the first groove and the second groove may contact the AF guide ball (1810) at two points.

The OIS-x carrier (1310) may comprise a groove (1312). The groove (1312) may be an 'OIS-x guide ball receiving groove.' The groove (1312) may be disposed in the OIS-x carrier (1310). The groove (1312) may be disposed on the lower surface of the OIS-x carrier (1310). The OIS-x guide ball (1820) may be disposed in the groove (1312). The groove (1312) can be in direct contact with the OIS-x guide ball (1820). The groove (1312) may be disposed in the x-axis direction. The groove (1312) may comprise multiple grooves. The groove (1312) may comprise four grooves. The groove (1312) may comprise a first groove that contacts the OIS-x guide ball (1820) at two points and a second groove that contacts the OIS-x guide ball (1820) at one point. In a variant example, both the first and second grooves may be in contact with the OIS-x guide ball (1820) at two points.

The OIS-x carrier (1310) may comprise a groove (1315). The groove (1315) may be an 'OIS-x magnet receiving groove.' The groove (1315) may be formed on the side of the OIS-x carrier (1310). The OIS-x magnet (1610) may be placed in the groove (1315). The groove (1315) may comprise a shape corresponding to the OIS-x magnet (1610).

The OIS-x carrier (1310) may comprise a groove (1316). The groove (1316) may be a 'attraction magnet avoidance groove.' The groove (1316) may be formed concave on the side of the OIS-x carrier (1310). The groove (1316) may be formed in a position corresponding to the protrusion (1415) of the OIS-y carrier (1410).

The lens driving device (1010) may comprise an OIS-y movable part (1400). The OIS-y movable part (1400) may be dispose in a stationary part (1100). The OIS-y movable part (1400) may be disposed within the stationary part (1100). The OIS-y movable part (1400) may be placed on the stationary part (1100). The OIS-y movable part (1400) may be disposed on the OIS-x movable part (1300). The OIS-y movable part (1400) may be disposed on the OIS-x movable part (1300). The OIS-y movable part (1400) may be disposed between the stationary part (1100) and the AF movable part (1200). The OIS-y movable part (1400) may be disposed between the stationary part (1100) and the AF movable part (1200) in a direction perpendicular to the optical axis. The OIS-y movable part (1400) may be disposed between the stationary part (1100) and the AF movable part (1200) in the x-axis direction. The OIS-y movable part (1400) may be disposed movably on the stationary part (1100). The OIS-y movable part (1400) can be moved in the y-axis direction with respect to the stationary part (1100) by the OIS-y drive part (1700). The OIS-y movable part (1400) can be moved in the y-axis direction with respect to the OIS-x movable part (1300) by the OIS-y drive part (1700). The OIS-y movable part (1400) can move when OIS is driven. When OIS-y movable part (1400) moves, AF movable part (1200) can move together.

The lens driving device (1010) may comprise an OIS-y carrier (1410). The OIS-y movable part (1400) may comprise an OIS-y carrier (1410). The OIS-y carrier (1410) may be an 'OIS-y holder'. The OIS-y carrier (1410) may be disposed on the base (1110). The OIS-y carrier (1410) may be disposed within the base (1110). The OIS-y carrier (1410) may be disposed on the base (1110). The OIS-y carrier (1410) may be disposed within the cover (1120). The OIS-y carrier (1410) may be disposed in OIS-x carrier (1310). The OIS-y carrier (1410) may be disposed on OIS-x carrier (1310). The OIS-y carrier (1410) may be disposed between base (1110) and AF carrier (1210). The OIS-y carrier (1410) may be disposed between the base (1110) and the AF carrier (1210) in a direction perpendicular to the optical axis. The OIS-y carrier (1410) may be disposed between the side plate (1113) of the base (1110) and the AF carrier (1210) in the x-axis direction. The OIS-y carrier (1410) may be disposed in a manner that allows it to move in the y-axis direction. The OIS-y carrier (1410) may be disposed between the base (1110) and the OIS-x carrier (1310).

The OIS-y carrier (1410) may comprise a groove (1411). The groove (1411) may be an 'AF guide ball receiving groove'. The groove (1411) can be formed in the OIS-y carrier (1410) in a concave manner. The groove (1411) may be disposed on the inner surface of the OIS-y carrier (1410). An AF guide ball (1810) may be disposed in the groove (1411). The groove (1411) can come into direct contact with the AF guide ball (1810). The groove (1411) may be disposed in the optical axis direction. The groove (1411) may comprise multiple grooves. The groove (1411) may comprise two grooves. The groove may comprise a first groove that contacts the AF guide ball (1810) at two points and a second groove that contacts the AF guide ball (1810) at one point. As a variant example, both the first and second grooves can make contact with the AF guide ball (1810) at two points.

The OIS-y carrier (1410) may comprise a groove (1412). The groove may be an 'OIS-y guide ball receiving groove'. The groove (1412) may be formed in the OIS-y carrier (1410) in a concave manner. The groove (1412) may be disposed on the lower surface of the OIS-y carrier (1410). An OIS-y guide ball (1830) may be disposed in the groove (1412). The groove (1412) can come into direct contact with the OIS-y guide ball (1830). The groove (1412) may be disposed in the y-axis direction. The groove (1412) may comprise multiple grooves. The groove (1412) may comprise four grooves. The four grooves can be arranged in parallel with each other. The groove (1412) may comprise a first groove that contacts the OIS-y guide ball (1830) at two points and a second groove that contacts the OIS-y guide ball (1830) at one point. As a variant, both the first and second grooves can make contact with the OIS-y guide ball (1830) at two points.

The OIS-y carrier (1410) may comprise a groove (1413). The groove (1413) may be an 'OIS-y magnet receiving home'. The groove (1413) may be formed on the outer side of the OIS-y carrier (1410). An OIS-y magnet (1710) may be disposed on the groove (1413). The groove (1413) may comprise a shape corresponding to the OIS-y magnet (1710).

The OIS-y carrier (1410) may comprise a groove. The groove may be an 'AF attraction-yoke receiving groove'. The groove may be formed on the outer surface of the OIS-y carrier (1410). The AF attraction yoke (1910) may be disposed on the groove. The groove may comprise a shape corresponding to the AF attraction yoke (1910). The groove may comprise multiple grooves. The groove may comprise two grooves. The groove may be formed with the number of AF attraction yokes (1910) corresponding to the number of yokes.

The OIS-y carrier (1410) may comprise a protrusion (1415). The protrusion (1415) may protrude downward. The protrusion (1415) of the OIS-y carrier (1410) can be overlapped with the OIS-x carrier (1310) in a direction perpendicular to the optical axis. An attraction magnet (1955) may be disposed on the protrusion (1415) of the OIS-y carrier (1410).

The lens driving device (1010) may comprise a drive part. The drive part can move the movable part relative to the stationary part. The drive part may comprise an AF drive part (1500). The drive part may comprise an OIS drive part (1600, 1700). The drive part may comprise a coil and a magnet.

The lens driving device (1010) may comprise an AF drive part (1500). The AF movable part (1200) can be moved in the optical axis direction by the AF movable part (1500). The AF drive part (1500) can move the AF carrier (1210) in the optical axis direction. The AF drive part (1500) can move the AF carrier (1210) in the optical axis direction through electromagnetic force. The AF drive part (1500) may comprise a coil and a magnet. The AF drive part (1500) may comprise coils and magnets that interact with each other. The AF coil (1520) and the AF magnet (1510) can move the AF movable part (1200) in the optical axis direction.

When the OIS-x movable part (1300), the OIS-y movable part (1400), and the AF movable part (1200) are moved by the OIS-x drive part (1600), the distance between the facing surfaces of the AF coil (1520) and the AF magnet (1510) may vary. When the OIS-y movable part (1400) and the AF movable part (1200) are moved by the OIS-y drive part (1700), the distance between the opposing faces of the AF coil (1520) and the AF magnet (1510) does not change, and the AF magnet (1510) can be eccentric with respect to the AF coil (1520).

The lens driving device (1010) may comprise an AF magnet (1510). The AF drive part (1500) may comprise an AF magnet (1510). The AF magnet (1510) may be disposed on the AF movable part (1200). The AF magnet (1510) may be disposed on the AF carrier (1210). The AF magnet (1510) may be disposed in the groove (1212) of the AF carrier (1210). The AF magnet (1510) may be disposed on the outer side of the AF carrier (1210). The AF magnet (1510) may be fixed to the AF carrier (1210). The AF magnet (1510) can be coupled to the AF carrier (1210). The AF magnet (1510) can be bonded to the AF carrier (1210) with adhesive. The AF magnet (1510) may be disposed within the cover (1120). The AF magnet (1510) can interact with the AF coil (1520). The AF magnet (1510) can interact with the AF coil (1520) electromagnetically. The AF magnet (1510) may be disposed in a position corresponding to the AF coil (1520). The AF magnet (1510) faces the AF coil (1520). The AF magnet (1510) can be opposed to the AF coil (1520). The AF magnet (1510) may be overlapped in a direction perpendicular to the optical axis with the AF coil (1520). The AF magnet (1510) can be overlapped with the AF coil (1520) in the x-axis direction. In the x-axis direction, the AF magnet (1510) can be overlapped with the OIS-x magnet (1610).

The AF magnet (1510) can be applied with a C-cut for greater attraction force than with AF attraction Yoke (1910). A structure can be applied to the AF magnet (1510) to send magnetic force in the direction of the AF magnet yoke (1910). The AF magnet (1510) may comprise a first surface facing the AF coil (1520) and a second surface opposite the first surface. In the y-axis direction, the width of the first surface of the AF magnet (1510) (see W1 in FIG. 55) may be smaller than the width of the second surface of the AF magnet (1510) (see W2 in FIG. 55). The AF magnet (1510) may comprise a chamfered shape at the corners.

The AF magnet (1510) may be a two-pole magnet. The AF magnet (1510) may comprise an N pole and an S pole. The upper surface of the AF magnet (1510) may have an N pole, and the lower surface of the AF magnet (1510) may have an S pole.

As a variant example, the AF magnet (1510) may be a four-pole magnet. The AF magnet (1510) may comprise a four-pole magnetized magnet. The AF magnet (1510) may comprise a first magnet part comprising an N pole and an S pole, and a second magnet part comprising an N pole and an S pole. The first and second magnet parts may be arranged in a vertical direction. The first and second magnet parts may be spaced apart in a vertical direction, and a neutral zone may be disposed between the first and second magnet parts.

The lens driving device (1010) may comprise an AF coil (1520). The AF drive part (1500) may comprise an AF coil (1520). The AF coil (1520) can interact with the AF magnet (1510). The AF coil (1520) can move the AF magnet (1510) in the optical axis direction. The AF coil (1520) can move the AF magnet (1510) in the optical axis direction through interaction with the AF magnet (1510). The AF coil (1520) can be opposed to the AF magnet (1510). The AF coil (1520) faces the AF magnet (1510). The AF coil (1520) may be disposed in a position corresponding to the AF magnet (1510). The AF coil (1520) can overlap with the AF magnet (1510) in the x-axis direction. The AF coil (1520) may be disposed on the side substrate (1130). The AF coil (1520) may be disposed on the side substrate (1130) in a position corresponding to the AF magnet (1510). The AF coil (1520) may be disposed on the base (1110). The AF coil (1520) may be disposed on the side plate (1122) of the cover (1120). The AF coil (1520) may be disposed between the AF magnet (1510) and the cover (1120). The AF coil (1520) may be disposed in the stationary part (1100). The AF coil (1520) may be disposed on the first side plate of the cover (1120). The AF coil (1520) may be disposed on the first side plate of the base (1110).

The lens driving device (1010) may comprise an AF sensor (1530). The AF drive part (1500) may comprise an AF sensor (1530). The AF sensor (1530) may be disposed on the side substrate (1130). The AF sensor (1530) may comprise a Hall IC. The AF sensor (1530) may have a Hall sensor. The AF sensor (1530) can detect the AF magnet (1510). The AF sensor (1530) can detect the magnetic force of the AF magnet (1510). The AF sensor (1530) can detect the movement of the AF magnet (1510). The amount or position of movement of the AF magnet (1510) detected by the AF sensor (1530) can be used for feedback of the autofocus (AF).

The AF sensor (1530) may be disposed within the AF coil (1520). The AF sensor (1530) may overlap with the AF coil (1520) in the optical axis direction. The AF sensor (1530) can overlap with the AF magnet (1510) in the x-axis direction. As a variant example, the AF sensor (1530) may be disposed on the outside of the AF coil (1520). The AF sensor (1530) may face the AF magnet (1510). The AF sensor (1530) may be disposed in a position corresponding to the AF magnet (1510).

The AF sensor (1530) may comprise a drive IC. In this case, the drive IC can be electrically connected to the AF coil (1520). The drive IC can apply a current to the AF coil (1520).

The lens driving device (1010) may comprise a capacitor (1540). The capacitor (1540) may be disposed on the side substrate (1130). The capacitor (1540) may be disposed next to the AF sensor (1530). The capacitor (1540) may be disposed within the AF coil (1520). The capacitor (1540) can remove noise related to the data and current transmitted and received by the AF sensor (1530).

The lens driving device (1010) may comprise an OIS-x drive part (1600). The OIS-x drive part (1600) can move the OIS-x movable part (1300) in the x-axis direction perpendicular to the optical axis direction and the y-axis direction. The OIS-x drive part (1600) can move the OIS-x carrier (1310) in the x-axis direction. The OIS-x drive part (1600) can move the OIS-x carrier (1310) in the x-axis direction through electromagnetic force. The OIS-x drive part (1600) may comprise a coil and a magnet. The OIS-x coil (1620) and the OIS-x magnet (1610) can move the OIS-x movable part (1300) in the x-axis direction perpendicular to the optical axis direction and the y-axis direction.

When the OIS-x movable part (1300) is moved by the OIS-x drive part (1600), the AF movable part (1200) and the OIS-y movable part (1400) can move together with the OIS-x movable part (1300). The AF movable part (1200) and the OIS-y movable part (1400) can move together with the OIS-x movable part (1300) in the x-axis direction.

The lens driving device (1010) may comprise an OIS-x magnet (1610). The OIS-x drive part (1600) may comprise an OIS-x magnet (1610). The OIS-x magnet (1610) may be disposed on the OIS-x movable part (1300). The OIS-x magnet (1610) may be disposed on the OIS-x carrier (1310). The OIS-x magnet (1610) may be disposed in the groove (1315) of the OIS-x carrier (1310). The OIS-x magnet (1610) can be fixed to the OIS-x carrier (1310). The OIS-x magnet (1610) can be coupled to the OIS-x carrier (1310). The OIS-x magnet (1610) can be bonded to the OIS-x carrier (1310) with an adhesive. The OIS-x magnet (1610) may be disposed within the cover (1120). The OIS-x magnet (1610) can interact with the OIS-x coil (1620). The OIS-x magnet (1610) can interact electromagnetically with the OIS-x coil (1620). The OIS-x magnet (1610) may be disposed in a position corresponding to the OIS-x coil (1620). The OIS-x magnet (1610) may be disposed opposite the OIS-x coil (1620). The OIS-x magnet (1610) may be opposed to the OIS-x coil (1620). The OIS-x magnet (1610) can be overlapped on the OIS-x coil (1620) in the optical axis direction.

The OIS-x magnet (1610) may be a two-pole magnet. An OIS-x magnet (1610) may comprise an N pole and an S pole. The inside of the OIS-x magnet (1610) may have an N pole, and the outside of the OIS-x magnet (1610) may have an S pole.

As a variant example, the OIS-x magnet (1610) can be a 4-pole magnet. The OIS-x magnet (1610) may comprise a 4-pole magnetized magnet. The OIS-x magnet (1610) may comprise a first magnet part comprising an N pole and an S pole, and a second magnet part comprising an N pole and an S pole. The first and second magnet parts may be disposed in a horizontal direction. The first and second magnet parts may be disposed horizontally apart, and a neutral zone may be placed between the first and second magnet parts.

In the second embodiment of the present invention, the distance between the OIS-x coil (1620) and the OIS-x magnet (1610) can be maintained constant even when the OIS-x magnet (1610) moves due to the interaction between the OIS-x coil (1620) and the OIS-x magnet (1610).

The lens driving device (1010) may comprise an OIS-x coil (1620). The OIS-x drive part (1600) may comprise an OIS-x coil (1620). The OIS-x coil (1620) can interact with the OIS-x magnet (1610). The OIS-x coil (1620) can move the OIS-x magnet (1610) in the x-axis direction. The OIS-x coil (1620) can move the OIS-x magnet (1610) in the x-axis direction through interaction with the OIS-x magnet (1610). The OIS-x coil (1620) can be opposed to the OIS-x magnet (1610). The OIS-x coil (1620) faces the OIS-x magnet (1610). The OIS-x coil (1620) may be disposed in the position corresponding to the OIS-x magnet (1610). The OIS-x coil (1620) may be disposed on the lower substrate (1140). The OIS-x coil (1620) may be disposed on the lower substrate (1140) in a position corresponding to the OIS-x magnet (1610). The OIS-x coil (1620) may be disposed on the base (1110). The OIS-x coil (1620) may be disposed in the stationary part (1100).

The lens driving device (1010) may comprise an OIS-x sensor (1630). The OIS-x drive part (1600) may comprise an OIS-x sensor (1630). The OIS-x sensor (1630) may be disposed on the lower substrate (1140). The OIS-x sensor (1630) may comprise a Hall IC. The OIS-x sensor (1630) may have a Hall sensor. The OIS-x sensor (1630) can detect the OIS-x magnet (1610). The OIS-x sensor (1630) can detect the magnetic force of the OIS-x magnet (1610). The OIS-x sensor (1630) can detect the movement of the OIS-x magnet (1610). The amount of movement or position of the OIS-x magnet (1610) detected by the OIS-x sensor (1630) can be used for feedback of the optical image stabilization (OIS) drive in the x-axis direction.

The OIS-x sensor (1630) may be disposed within the OIS-x coil (1620). The OIS-x sensor (1630) can overlap with the OIS-x coil (1620) in a direction perpendicular to the optical axis. The OIS-x sensor (1630) can overlap with the OIS-x magnet (1610) in the optical axis direction. As a variant example, the OIS-x sensor (1630) may be disposed on the outside of the OIS-x coil (1620). The OIS-x sensor (1630) may be opposed to the OIS-x magnet (1610). The OIS-x sensor (1630) may be disposed in the corresponding position to the OIS-x magnet (1610).

The lens driving device (1010) may comprise an OIS-y drive part (1700). The OIS-y drive part (1700) can move the OIS-y movable part (1400) in the y-axis direction perpendicular to the optical axis direction and the x-axis direction. The OIS-y drive part (1700) can move the OIS-y carrier (1410) in the y-axis direction. The OIS-y drive part (1700) can move the OIS-y carrier (1410) in the y-axis direction through electromagnetic force. The OIS-y drive part (1700) may comprise a coil and a magnet. The OIS-y coil (1720) and the OIS-y magnet (1710) can move the OIS-y movable part (1400) in the y-axis direction perpendicular to the optical axis.

When the OIS-y movable part (1400) is moved by the OIS-y drive part (1700), the AF movable part (1200) can move together with the OIS-y movable part (1400). The AF movable part (1200) can move together with the OIS-y movable part (1400) in the y-axis direction.

The lens driving device (1010) may comprise an OIS-y magnet (1710). The OIS-y drive part (1700) may comprise an OIS-y magnet (1710). The OIS-y magnet (1710) may be disposed on the OIS-y movable part (1400). The OIS-y magnet (1710) may be disposed on the OIS-y carrier (1410). The OIS-y magnet (1710) may be disposed in the groove (1413) of the OIS-y carrier (1410). The OIS-y magnet (1710) may be disposed on the outer side of the OIS-y carrier (1410). The OIS-y magnet (1710) can be fixed to the OIS-y carrier (1410). The OIS-y magnet (1710) can be coupled to the OIS-y carrier (1410). The OIS-y magnet (1710) can be bonded to the OIS-y carrier (1410) with an adhesive. The OIS-y magnet (1710) may be disposed within the cover (1120). The OIS-y magnet (1710) can interact with the OIS-y coil (1720). The OIS-y magnet (1710) can interact electromagnetically with the OIS-y coil (1720). The OIS-y magnet (1710) may be disposed in the corresponding position to the OIS-y coil (1720). The OIS-y magnet (1710) may face the OIS-y coil (1720). The OIS-y magnet (1710) may be opposed to the OIS-y coil (1720). The OIS-y magnet (1710) may be overlapped on the OIS-y coil (1720) in the optical axis direction.

The OIS-y magnet (1710) may be a two-pole magnet. An OIS-y magnet (1710) may comprise an N pole and an S pole. The inside of the OIS-y magnet (1710) may have an N pole, and the outside of the OIS-y magnet (1710) may have an S pole.

As a variant example, the OIS-y magnet (1710) may be a four-pole magnet. An OIS-y magnet (1710) may comprise a four-pole magnetized magnet. An OIS-y magnet (1710) may comprise a first magnet part comprising an N pole and an S pole, and a second magnet part comprising an N pole and an S pole. The first and second magnet parts may be disposed in a horizontal direction. The first and second magnet parts may be disposed horizontally apart, and a neutral zone may be placed between the first and second magnet parts.

The lens driving device (1010) may comprise an OIS-y coil (1720). The OIS-y drive part (1700) may comprise an OIS-y coil (1720). The OIS-y coil (1720) can interact with the OIS-y magnet (1710). The OIS-y coil (1720) can move the OIS-y magnet (1710) in the y-axis direction. The OIS-y coil (1720) can move the OIS-y magnet (1710) in the y-axis direction through interaction with the OIS-y magnet (1710). The OIS-y coil (1720) may be opposed to the OIS-y magnet (1710). The OIS-y coil (1720) may face the OIS-y magnet (1710). The OIS-y coil (1720) may be disposed in a position corresponding to the OIS-y magnet (1710). The OIS-y coil (1720) may be placed on the lower substrate (1140). The OIS-y coil (1720) may be disposed on the lower substrate (1140) in a position corresponding to the OIS-y magnet (1710). The OIS-y coil (1720) may be disposed on the base (1110). The OIS-y coil (1720) may be disposed in the stationary part (1100).

The lens driving device (1010) may comprise an OIS-y sensor (1730). The OIS-y drive part (1700) may comprise an OIS-y sensor (1730). The OIS-y sensor (1730) may be disposed on the lower substrate (1140). The OIS-y sensor (1730) may comprise a Hall IC. The OIS-y sensor (1730) may have a Hall sensor. The OIS-y sensor (1730) can detect the OIS-y magnet (1710). The OIS-y sensor (1730) can detect the magnetic force of the OIS-y magnet (1710). The OIS-y sensor (1730) can detect the movement of the OIS-y magnet (1710). The amount of movement or position of the OIS-y magnet (1710) detected by the OIS-y sensor (1730) can be used for feedback of the OIS (Optical Image Stabilization) drive in the y-axis direction.

The OIS-y sensor (1730) may be disposed within the OIS-y coil (1720). The OIS-y sensor (1730) can overlap with the OIS-y coil (1720) in a direction perpendicular to the optical axis. The OIS-y sensor (1730) can overlap with the OIS-y magnet (1710) in the optical axis direction. As a variant example, the OIS-y sensor (1730) may be disposed on the outside of the OIS-y coil (1720). The OIS-y sensor (1730) may be opposed to the OIS-y magnet (1710). The OIS-y sensor (1730) may be disposed in a position corresponding to the OIS-y magnet (1710).

The lens driving device (1010) may comprise a guide member. The guide member may comprise a ball. The guide member may comprise pins. The guide may comprise a cylindrical member. The guide member can guide the movement of the movable part relative to the stationary part (1100) in a specific direction.

The lens driving device (1010) may comprise a support member. The support member may comprise a ball.

The lens driving device (1010) may comprise an AF guide ball (1810).

The AF guide ball (1810) can guide the movement of the AF movable part (1200) in the optical axis direction. The AF guide ball (1810) can guide the movement of the AF carrier (1210) in the optical axis direction. The AF guide ball (1810) can guide the movement of the OIS-y carrier (1410) of the AF carrier (1210) in the optical axis direction. The AF guide ball (1810) may be disposed between the AF movable part (1200) and the OIS-y movable part (1400). The AF movable part (1200) and the OIS-y movable part (1400) may comprise grooves (1211, 1411) extending in the optical axis direction. The AF guide ball (1810) may be disposed between the groove (1211) of the AF movable part (1200) and the groove (1411) of the OIS-y movable part (1400). The AF guide ball (1810) may be disposed between the OIS-y carrier (1410) and the AF carrier (1210). The AF guide ball (1810) may be dispose between the OIS-y carrier (1410) and the AF carrier (1210) in the x-axis direction. The AF guide ball (1810) may be disposed between the inner side of the OIS-y carrier (1410) and the outer side of the AF carrier (1210). When viewed from the outside of the AF carrier (1210), the AF guide ball (1810) can overlap the AF magnet (1510) in a horizontal direction.

The AF guide ball (1810) may be disposed between the groove (1411) of the OIS-y movable part (1400) and the groove (1211) of the AF movable part (1200). At least one of the grooves (1411) of the OIS-y movable part (1400) and the groove (1211) of the AF movable part (1200) can be extended in the optical axis direction to be longer than the diameter of the AF guide ball (1810).

The AF guide ball (1810) may be disposed in the groove (1411) of the OIS-y carrier (1410). The AF guide ball (1810) may be disposed in the groove (1211) of the AF carrier (1210). AF guide ball (1810) may comprise first-1 ball which contacts OIS-y carrier (1410) and AF carrier (1210) at four points, and first-2 ball which contacts OIS-y carrier (1410) and AF carrier (1210) at three points. The AF guide ball (1810) may be spherical. The AF guide ball (1810) may be formed from metal. Grease can be applied to the surface of the AF guide ball (1810).

The AF guide ball (1810) may comprise multiple balls. The AF guide ball (1810) may comprise four balls. Two AF guide balls (1810) may be placed on one side of the AF magnet (1510), and the remaining two AF guide balls (1810) may be placed on the other side of the AF magnet (1510). The AF guide ball (1810) may comprise multiple unit balls. The AF guide ball (1810) may comprise a ball part containing a plurality of unit balls.

The lens driving device (1010) may comprise an OIS-x guide ball (1820). The OIS-x guide ball (1820) can guide the movement of the OIS-x movable part (1300) in the x-axis direction. The OIS-x guide ball (1820) can guide the movement of the OIS-x carrier (1310) in the x-axis direction. The OIS-x guide ball (1820) can guide the movement of the OIS-x carrier (1310) with respect to the base (1110) in the x-axis direction. The OIS-x guide ball (1820) may be disposed between the OIS-x movable part (1300) and the stationary part (1100). The OIS-x movable part (1300) and the stationary part (1100) may comprise grooves (1111, 1312) extending in the x-axis direction. The OIS-x guide ball (1820) may be disposed between the groove (1312) of the OIS-x movable part (1300) and the groove (1111) of the stationary part (1100). The OIS-x guide ball (1820) may be disposed between the base (1110) and the OIS-x carrier (1310). The OIS-x guide ball (1820) may be disposed between the base (1110) and the OIS-x carrier (1310) in the optical axis direction.

The OIS-x guide ball (1820) may be disposed between the groove (1111) of the base (1110) and the groove (1312) of the OIS-x movable part (1300). At least one of the groove (1111) of the base (1110) and the groove (1312) of the OIS-x movable part (1300) can be extended in the x-axis direction to be longer than the diameter of the OIS-x guide ball (1820).

The OIS-x guide ball (1820) may be disposed in the groove (1111) of the base (1110). The OIS-x guide ball (1820) may be disposed in the groove (1312) of the OIS-x carrier (1310). The OIS-x guide ball (1820) may comprise a first-1 ball that contacts the base (1110) and the OIS-x carrier (1310) at four points and a first-2 ball that contacts the base (1110) and the OIS-x carrier (1310) at three points. The OIS-x guide ball (1820) may be spherical. The OIS-x guide ball (1820) can be formed of metal. Grease can be applied to the surface of the OIS-X guide ball (1820).

The OIS-x guide ball (1820) may comprise multiple balls. The OIS-x guide ball (1820) may comprise four balls. The four balls may be disposed in the four corner areas of the upper surface of the base (1110). The OIS-x guide ball (1820) may comprise multiple unit balls. The OIS-x guide ball (1820) may comprise a ball part comprising a plurality of unit balls.

The lens driving device (1010) may comprise an OIS-y guide ball (1830). The OIS-y guide ball (1830) can guide the movement of the OIS-y movable part (1400) in the y-axis direction. The OIS-y guide ball (1830) can guide the movement of the OIS-y carrier (1410) in the y-axis direction. The OIS-y guide ball (1830) can guide the movement of the OIS-x carrier (1310) of the OIS-y carrier (1410) in the y-axis direction. The OIS-y guide ball (1830) may be disposed between the OIS-y movable part (1400) and the OIS-x carrier (1310). The OIS-y guide ball (1830) may be disposed between the OIS-y movable part (1400) and the OIS-x carrier (1310) in the optical axis direction. The OIS-y movable part (1400) and the OIS-x movable part (1300) may comprise grooves (1311, 1412) extending in the y-axis direction. The OIS-y guide ball (1830) may be disposed between the groove (1412) of the OIS-y movable part (1400) and the groove (1311) of the OIS-x movable part (1300). The OIS-y guide ball (1830) may be disposed between the OIS-x carrier (1310) and the OIS-y carrier (1410). The OIS-y guide ball (1830) may be disposed between the OIS-x carrier (1310) and the OIS-y carrier (1410) in the optical axis direction. The OIS-y guide ball (1830) may be disposed in the groove (1311) of the OIS-x carrier (1310). The OIS-y guide ball (1830) may be disposed between the upper surface of the OIS-x carrier (1310) and the lower surface of the OIS-y carrier (1410).

The OIS-y guide ball (1830) may be disposed between the groove (1311) of the OIS-x movable part (1300) and the groove (1412) of the OIS-y movable part (1400). At least one of the grooves (1311) of the OIS-x movable part (1300) and the groove (1412) of the OIS-y movable part (1400) may be extended in the y-axis direction to be longer than the diameter of the OIS-y guide ball (1830).

The OIS-y guide ball (1830) may be disposed in the groove (1311) of the OIS-x carrier (1310). The OIS-y guide ball (1830) may be disposed in the groove (1412) of the OIS-y carrier (1410). The OIS-y guide ball (1830) may comprise a first-1 ball that contacts the OIS-x carrier (1310) and the OIS-y carrier (1410) at four points and a first-2 ball that contacts the OIS-x carrier (1310) and the OIS-y carrier (1410) at three points. The OIS-y guide ball (1830) may be spherical. OIS-y guide balls (1830) can be formed from metal. Grease can be applied to the surface of the OIS-y guide ball (1830).

The OIS-y guide ball (1830) may comprise multiple balls. The OIS-y guide ball (1830) may comprise four balls. The four balls may be disposed in the four corner areas on the upper surface of the OIS-x carrier (1310). The OIS-y guide ball (1830) may comprise a plurality of unit balls. The OIS-y guide ball (1830) may comprise a ball part comprising a plurality of unit balls.

The lens driving device (1010) may comprise a ball pressure member. The ball pressure member may comprise a yoke. A yoke may be an 'attraction yoke'. The york may be an 'attraction member'. The yoke may be formed of metal. An attraction force may be generated between the yoke and the magnet (1510, 1610, 1710). The ball (1810, 1820, 1830) can be pressed by the attraction force of the yoke and magnet (1510, 1610, 1710).

The lens driving device (1010) may comprise a magnetic member. The magnetic member may comprise a yoke.

A yoke may comprise multiple yokes. A yoke may comprise three yokes. The yoke may comprise an AF attraction yoke (1910), an OIS-x attraction yoke (1920) and an OIS-y attraction yoke (1930). AF attraction yoke (1910), OIS-x attraction yoke (1920) and OIS-y attraction yoke (1930) may be spaced apart from each other.

The lens driving device (1010) may comprise an AF attraction yoke (1910). The AF attraction yoke (1910) may be disposed on OIS-y movable part (1400). The AF attraction yoke (1910) may be disposed on the OIS-y carrier (1410). The AF attraction yoke (1910) can be coupled with OIS-y carrier (1410). The AF attraction yoke (1910) can be fixed to OIS-y carrier (1410). The AF attraction yoke (1910) can be bonded to OIS-y carrier (1410) with adhesive. AF attraction yoke (1910) may be disposed on the outer surface of OIS-y carrier (1410).

The AF attraction yoke (1910) may be disposed in the position corresponding to the AF magnet (1510). The AF attraction yoke (1910) can act on the AF magnet (1510) with attraction force. An attraction force may be generated between the AF attraction yoke (1910) and the AF magnet (1510). The AF guide ball (1810) can be pressurized by the attraction force of the AF magnet (1510) and the AF magnet (1910). The AF guide ball (1810) can be pressed between the AF carrier (1210) and the OIS-y carrier (1410) by the attraction force between the AF magnet (1510) and the AF magnet (1510). The AF guide ball (1810) can be pressed between the AF movable part (1200) and the OIS-y movable part (1400) by the attraction force between the AF magnet (1510) and the AF attraction yoke (1910). The AF guide ball (1810) can be closely fitted between the AF movable part (1200) and the OIS-y movable part (1400).

When viewed from the outside, the AF attraction yoke (1910) and the AF magnet (1510) can be seen. The AF attraction yoke (1910) and AF-magnet (1510) may be disposed on the outer surface facing the same direction. When viewed from the outside, the AF magnet (1510) can be seen between the AF attraction yoke (1910).

The AF attraction yoke (1910) may comprise multiple yokes. The AF attraction yoke (1910) may comprise a first unit yoke (1911) and a second unit yoke (1912). The AF attraction yoke (1910) may comprise a first unit yoke (1911) and a second unit yoke (1912) that are spaced apart from each other. The first unit yoke (1911) and the second unit yoke (1912) may be disposed on either side of the AF magnet (1510). The first unit yoke (1911) may be disposed on one side of the AF magnet (1510), and the second unit yoke (1912) may be disposed on the other side of the AF magnet (1510). The first unit yoke (1911) and the second unit yoke (1912) may be disposed to extend in the optical axis direction.

The AF magnet (1510) may be overlapped with the AF attraction yoke (1910) in the y-axis direction. The AF magnet (1510) may be disposed between the first unit yoke (1911) and the second unit yoke (1912) in the y-axis direction. The AF magnet (1510) may be disposed between the first unit yoke (1911) and the second unit yoke (1912). When viewed from the outside, the AF magnet (1510) may be disposed between the first unit yoke (1911) and the second unit yoke (1912). The AF magnet (1510) may not overlap with the AF attraction yoke (1910) in the x-axis direction. However, as a variant example, the AF magnet (1510) can be overlapped with the AF attraction yoke (1910) in the x-axis direction. As the corner area of the AF magnet (1510) is omitted, space can be made for the placement of the AF attraction yoke (1910). As a variant example, the AF attraction yoke (1910) may be disposed outside the AF magnet (1510) so that it does not overlap with the AF magnet (1510) in the y-axis direction.

An upper end of the AF magnet (1510) may be disposed higher than an upper end of the AF attraction yoke (1910). When the AF movable part (1200) is moved as far as possible in the optical axis direction to the lower side, the upper end of the AF magnet (1510) may be disposed at the same height as the upper end of the AF attraction yoke (1910). As a variant example, when the AF movable part (1200) is moved as far as possible in the direction of the optical axis to the lower side, the upper end of the AF magnet (1510) may be disposed higher than the upper end of the AF attraction yoke (1910). When the AF movable part (1200) is moved as far as possible in the optical axis direction to the lower side, the upper end of the AF magnet (1510) may be disposed lower than the upper end of the AF attraction yoke (1910).

A lower end of the AF magnet (1510) may be disposed lower than a lower end of the AF attraction yoke (1910). When the AF movable part (1200) is moved as far as possible in the optical axis direction, the lower end of the AF magnet (1510) may be disposed at the same height as the lower end of the AF attraction yoke (1910). As a variant example, when the AF movable part (1200) is moved as far as possible in the direction of the optical axis, the lower end of the AF magnet (1510) may be disposed higher than the lower end of the AF attraction yoke (1910). When the AF movable part (1200) is moved as far as possible in the optical axis direction, the lower end of the AF magnet (1510) may be disposed lower than the lower end of the AF attraction yoke (1910).

In the second embodiment of the present invention, the AF movable part (1200) may comprise the first surface. The OIS-y movable part (1400) may comprise a first surface facing the same direction as the first surface. The AF magnet (1510) may be disposed on the first surface of the AF movable part (1200). The AF attraction yoke (1910) may be disposed on the first surface of OIS-y movable part (1400). At this time, the first surface of the AF movable part (1200) may be the outer side surface. The first surface of the OIS-y movable part (1400) may be the outer side surface. The OIS-y movable part (1400) may comprise a groove formed in a concave manner on the first surface of the OIS-y movable part (1400). The AF attraction yoke (1910) may be disposed in the groove (1414) of OIS-y movable part (1400).

In the second embodiment of the present invention, the OIS-x drive may not be affected as the AF attraction yoke (1910) is placed on the OIS-y carrier (1410). If, for a comparative example, the AF attraction yoke (1910) is placed on a side substrate (1130), i.e. a stationary part (1100), the OIS-x drive may be interfered by the attraction force between the AF attraction yoke (1910) and the AF magnet (1510).

The lens driving device (1010) may comprise an OIS-x attraction yoke (1920). The OIS-x attraction yoke (1920) may be disposed on the stationary part (1100). The OIS-x attraction yoke (1920) may be disposed on the base (1110). The OIS-x attraction yoke (1920) may be coupled with the base (1110). The OIS-x attraction yoke (1920) may be fixed to the base (1110). The OIS-x attraction yoke (1920) may be glued to the base (1110). The OIS-x attraction yoke (1920) may be disposed on the lower substrate (1140). The OIS-x attraction yoke (1920) may be coupled to the lower substrate (1140). The OIS-x attraction yoke (1920) may be fixed to the lower substrate (1140). The OIS-x attraction yoke (1920) may be bonded to the lower substrate (1140) with an adhesive. The OIS-x attraction yoke (1920) may be disposed between the base (1110) and the lower substrate (1140). The OIS-x attraction yoke (1920) may be disposed in the groove of the base (1110).

The OIS-x attraction yoke (1920) may be disposed in a position corresponding to the OIS-x magnet (1610). The OIS-x magnet (1610) can work with the OIS-x attraction yoke (1920) with the attraction force. An attraction force may occur between the OIS-x attraction yoke (1920) and the OIS-x magnet (1610). The OIS-x guide ball (1820) can be pressed by the attraction force between the OIS-x yoke (1920) and the OIS-x magnet (1610). The OIS-x guide ball (1820) can be pressed between the OIS-x carrier (1310) and the base (1110) by the attraction force between the OIS-x attraction yoke (1920) and the OIS-x magnet (1610). The OIS-x guide ball (1820) can be closely fitted between the OIS-x carrier (1310) and the base (1110).

The lens driving device (1010) may comprise an OIS-y attraction yoke (1930). The OIS-y attraction yoke (1930) may be disposed on the stationary part (1100). The OIS-y attraction yoke (1930) may be disposed on the base (1110). The OIS-y attraction yoke (1930) may be coupled to the base (1110). The OIS-y attraction yoke (1930) may be fixed to the base (1110). The OIS-y attraction yoke (1930) may be glued to the base (1110) with adhesive. The OIS-y attraction yoke (1930) may be disposed on the lower substrate (1140). The OIS-y attraction yoke (1930) may be coupled to the lower substrate (1140). The OIS-y attraction yoke (1930) may be fixed to the lower substrate (1140). The OIS-y attraction yoke (1930) may be bonded to the lower substrate (1140) with adhesive. The OIS-y attraction yoke (1930) may be disposed between the base (1110) and the lower substrate (1140). The OIS-y attraction yoke (1930) may be disposed in the groove of the base (1110).

The OIS-y attraction yoke (1930) may be disposed in the position corresponding to the OIS-y magnet (1710). The OIS-y magnet (1710) can work on the OIS-y magnet (1930) with the attraction force. An attraction force may be generated between the OIS-y attraction yoke (1930) and the OIS-y magnet (1710). The OIS-y guide ball (1830) can be pressurized by the attraction force of the OIS-y magnet (1710) and the OIS-y attraction yoke (1930). The OIS-y guide ball (1830) can be pressurized between the OIS-y carrier (1410) and the OIS-x carrier (1310) by the attraction force of the OIS-y magnet (1710) and the OIS-y attraction yoke (1930). The OIS-y guide ball (1830) can be closely fitted between the OIS-y carrier (1410) and the OIS-x carrier (1310).

The lens driving device (1010) may comprise a first additional pressure attraction member (1940). The first additional pressure attraction yoke (1940) can work on the OIS-x magnet (1610) with the attraction force. The first additional pressure attraction yoke (1940) may be disposed on the OIS-y movable part (1400). This allows the OIS-y movable part (1400) to be pressed downwards. The first additional pressure attraction yoke (1940) may be disposed on the opposite side of the OIS-x attraction yoke (1920). This allows both sides of the OIS-y movable part (1400) to be pressed downwards.

The lens driving device (1010) may comprise a second additional pressure attraction yoke (1950). The second additional pressure attraction yoke (1950) can work on an attraction magnet (1955) with the attraction force. The second additional pressure attraction yoke (1950) may be disposed on the stationary part (1100). The second additional pressure attraction yoke (1950) may be disposed on the base (1110). The second additional pressure attraction yoke (1950) may be disposed on the lower substrate (1140). A second additional pressure attraction yoke (1950) may be disposed between the lower substrate (1140) and the base (1110). The second additional pressure attraction yoke (1950) can pull the attraction magnet (1955) downwards. This allows the OIS-y movable part (1400) on which the attraction magnet (1955) is placed to be pressed downwards.

The lens driving device (1010) may comprise an attraction magnet (1955). The attraction magnet (1955) may be disposed on the OIS-y movable part (1400). The attraction magnet (1955) may be disposed on the protrusion (1415) of the OIS-y movable part (1400). The attraction magnet (1955) can overlap with the second additional pressure attraction yoke (1950) in the optical axis direction. The attraction magnet (1955) may be disposed in a position corresponding to the second additional pressure attraction yoke (1950). The attraction magnet (1955) may be formed in a smaller size than the drive magnet (1510, 1610, 1710).

The lens driving device according to a variant example is described with reference to the drawings below.

FIG. 43b is an exploded perspective view of the lens driving device according to the first variant example.

In the lens driving device according to the first variant example, the second additional pressure attraction yoke (1950) and the attraction magnet (1955) may be omitted.

FIG. 43c is an exploded perspective view of the lens driving device according to the second variant example.

In the lens driving device according to the second variant example, the first additional pressure attraction yoke (1940) may be omitted.

FIG. 43d is an exploded perspective view of the lens driving device according to the third variant example.

In the lens driving device according to the third variant example, the first additional pressure attraction yoke (1940), the second additional pressure attraction yoke (1950), and the attraction magnet (1955) may be omitted.

The following describes the autofocus (AF) operation of the lens driving device according to the second embodiment of the present invention, referring to the drawings.

FIGS. 57 to 59 are drawings for explaining the autofocus operation of the lens driving device according to the second embodiment of the present invention. FIG. 57 is a cross-sectional view showing the AF movable part in the initial state when no current is applied to the AF coil. FIG. 58 is a cross-sectional view showing that the AF movable part has moved upward in the optical axis direction when a forward current is applied to the AF coil. FIG. 59 is a cross-sectional view showing that the AF movable part moves to the lower side of the optical axis when the reverse current is applied to the AF coil.

A movable part may, in an initial position where no current is applied, be disposed at a position where both an upper plate (1121) of cover (1120) and the base (1110) are spaced apart. At this time, the movable part may be the AF movable part (1200).

When a forward current is applied to the AF coil (1520), the AF magnet (1510) can move upward in the optical axis direction due to the electromagnetic interaction between the AF coil (1520) and the AF magnet (1510) (see A in FIG. 58). At this time, the AF carrier (1210) can be moved upward in the optical axis direction along with the AF magnet (1510). Furthermore, the lens can be moved upward in the optical axis direction with the AF carrier (1210). Accordingly, the distance between the lens and the image sensor can be changed to adjust the focus of the image that is projected onto the image sensor through the lens.

When a reverse current is applied to the AF coil (1520), the AF magnet (1510) can move downwards in the optical axis direction due to the electromagnetic interaction between the AF coil (1520) and the AF magnet (1510) (see B in FIG. 59). At this time, the AF carrier (1210) can be moved to the lower side of the optical axis along with the AF magnet (1510). Furthermore, the lens can be moved to the lower side of the optical axis with the AF carrier (1210). Accordingly, the distance between the lens and the image sensor can be changed to adjust the focus of the image that is projected onto the image sensor through the lens.

Meanwhile, during the movement of the AF magnet (1510), the AF sensor (1530) can detect the strength of the magnetic field of the AF magnet (1510) and thus detect the amount of movement or position of the AF magnet (1510). The amount of movement or position of the AF magnet (1510) detected by the AF sensor (1530) can be used for auto focus feedback control.

The following describes the operation of the optical image stabilization (OIS) of the lens driving device according to the second embodiment of the present invention, referring to the drawings.

FIGS. 60 to 62 are drawings for explaining the image stabilization drive of the lens driving device according to the second embodiment of the present invention. FIG. 60 is a cross-sectional view showing the state of the movable part in the initial state when no current is applied to the OIS-x coil and the OIS-y coil. FIG. 61 is a cross-sectional view showing that the OIS-x coil is energized and the OIS-x movable part, the OIS-y movable part and the AF movable part move in the x-axis direction perpendicular to the optical axis. FIG. 62 is a cross-sectional view that shows the movement of the OIS-y movable part and the AF movable part in the y-axis direction perpendicular to the optical axis when current is applied to the OIS-y coil.

As shown in FIG. 60, the movable part may be disposed in the initial position where no current is applied to the OIS-x coil (1620) and the OIS-y coil (1720). At this time, the movable part may be the OIS-x movable part (1300) and the OIS-y movable part (1400). In addition, the movable part may comprise an AF movable part (1200), an OIS-x movable part (1300), and an OIS-y movable part (1400).

When an electric current is applied to the OIS-x coil (1620), the OIS-x magnet (1610) can move in the x-axis direction perpendicular to the optical axis due to the electromagnetic interaction between the OIS-x coil (1620) and the OIS-x magnet (1610) (see A in FIG. 61). At this time, the OIS-x carrier (1310) can move in the x-axis direction along with the OIS-x magnet (1610). Furthermore, the OIS-x carrier (1310) together with the OIS-y carrier (1410), AF carrier (1210) and lens may move in the x-axis direction. More specifically, when a forward current is applied to the OIS-x coil (1620), the OIS-x magnet (1610), the OIS-x carrier (1310), the OIS-y carrier (1410), the AF carrier (1210), and the lens can move in one direction along the x-axis. In addition, when a reverse current is applied to the OIS-x coil (1620), the OIS-x magnet (1610), OIS-x carrier (1310), OIS-y carrier (1410), AF carrier (1210) and lens can move in the other direction on the x-axis.

When current is applied to the OIS-y coil (1720), the OIS-y magnet (1710) can move in the y-axis direction perpendicular to the optical axis due to the electromagnetic interaction between the OIS-y coil (1720) and the OIS-y magnet (1710) (see B in FIG. 62). At this time, the OIS-y magnet (1710) and the OIS-y carrier (1410) can move in the y-axis direction. Furthermore, the AF carrier (1210) and lens can move in the y-axis direction with the OIS-y carrier (1410). More specifically, when a forward current is applied to the OIS-y coil (1720), the OIS-y magnet (1710), the OIS-y carrier (1410), the AF carrier (1210), and the lens can move in one direction along the y-axis. In addition, when a reverse current is applied to the OIS-y coil (1720), the OIS-y magnet (1710), the OIS-y carrier (1410), the AF carrier (1210), and the lens can move in the other direction on the y-axis.

Meanwhile, the OIS-x sensor (1630) can detect the amount of movement or position of the OIS-x magnet (1610) by detecting the strength of the magnetic field of the OIS-x magnet (1610). The amount of movement or position of the OIS-x magnet (1610) detected by the OIS-x sensor (1630) can be used for x-axis-direction image stabilization feedback control. The OIS-y sensor (1730) can detect the amount of movement or position of the OIS-y magnet (1710) by detecting the strength of the magnetic field of the OIS-y magnet (1710). The amount of movement or position of the OIS-y magnet (1710) detected by the OIS-y sensor (1730) can be used for y-axis image stabilization feedback control.

The camera device according to the second embodiment of the present invention is described below with reference to the drawings.

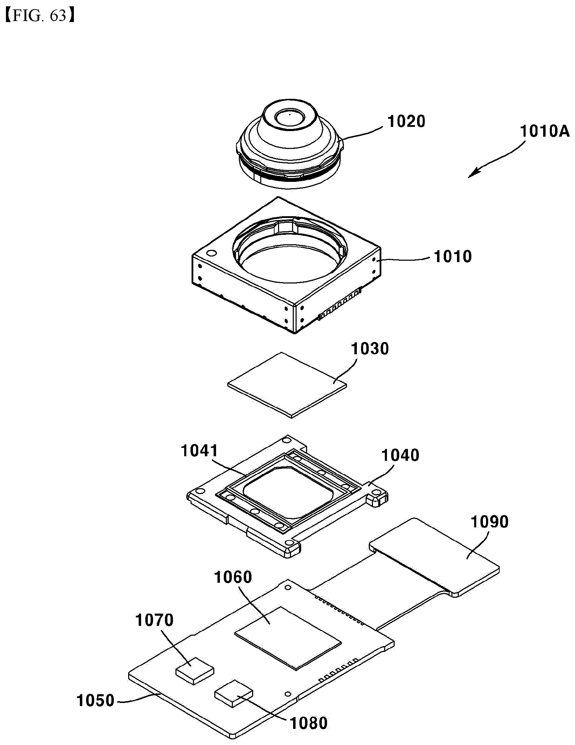

FIG. 63 is an exploded perspective view of the camera device according to a second embodiment of the present invention.

A camera device (1010A) may comprise a camera module. The camera device (1010A) may comprise a lens module (1020). The lens module (1020) may comprise at least one lens. The lens may be disposed in a position corresponding to the image sensor (1060). The lens module (1020) may comprise a lens and a barrel. The lens module (1020) can be coupled to the AF carrier (1210) of the lens driving device (1010). The lens module (1020) can be screwed and/or bonded to the AF carrier (1210). The lens module (1020) can be moved as a unit with the AF carrier (1210).

The camera device (1010A) may comprise a filter (1030). The filter (1030) can serve to block the incidence of light in a specific frequency band from passing through the lens module (1020) into the image sensor (1060). The filter (1030) may be disposed parallel to the x-y plane. The filter (1030) may be disposed between the lens module (1020) and the image sensor (1060). The filter (1030) may be disposed on the sensor base (1040). As a variant example, the filter (1030) may be disposed on the base (1110). The filter (1030) may comprise an infrared filter. The infrared filter can block the incidence of light in the infrared region on the image sensor (1060).

The camera device (1010A) may comprise a sensor base (1040). The sensor base (1040) may be disposed between the lens driving device (1010) and a printed circuit board (1050). The sensor base (1040) may comprise a protrusion (1041) in which the filter (1030) is placed. An opening may be formed in the portion of the sensor base (1040) in which the filter (1030) is placed so that light passing through the filter (1030) can be incident on the image sensor (1060). An adhesive member can bond or glue the base (1110) of the lens driving device (1010) to the sensor base (1040). The adhesive member can additionally serve to prevent foreign matter from entering the interior of the lens driving device (1010). The adhesive member may comprise one or more of epoxy, thermosetting adhesive, and UV curing adhesive.

The camera device (1010A) may comprise a printed circuit board (PCB, 1050). A printed circuit board (1050) may be a substrate or a circuit board. A lens driving device (1010) may be disposed on the printed circuit board (1050). A sensor base (1040) may be disposed between the printed circuit board (1050) and the lens driving device (1010). The printed circuit board (1050) can be electrically connected to the lens driving device (1010). An image sensor (1060) may be disposed on the printed circuit board (1050). The printed circuit board (1050) may be equipped with various circuits, elements, and controllers to convert the image captured by the image sensor (1060) into an electrical signal and transmit it to an external device.

The camera device (1010A) may comprise an image sensor (1060). The image sensor (1060) may be configured so that the light that passes through the lens and filter (1030) is incident on the image. The image sensor (1060) can be mounted on a printed circuit board (1050). The image sensor (1060) can be electrically connected to the printed circuit board (1050). For example, an image sensor (1060) can be coupled to a printed circuit board (1050) by surface mounting technology (SMT). As another example, an image sensor (1060) can be coupled to a printed circuit board (1050) by flip chip technology. The image sensor (1060) may be disposed so that the lens and the optical axis are aligned. In other words, the optical axis of the image sensor (1060) and the optical axis of the lens can be aligned. The image sensor (1060) can convert the light irradiated on the effective image area of the image sensor (1060) into an electrical signal. The image sensor (1060) may be any one of a CCD (charge coupled device), a MOS (metal oxide semiconductor), a CPD, and a CID.

The camera device (1010A) may comprise a motion sensor (1070). The motion sensor (1070) may be mounted on a printed circuit board (1050). The motion sensor (1070) can be electrically connected to a controller (1080) through the circuit pattern provided on the printed circuit board (1050). The motion sensor (1070) can output rotational angular velocity information based on the movement of the camera device (1010A). The motion sensor (1070) may comprise a two-axis or three-axis gyro sensor, or an angular velocity sensor.

The camera device (1010A) may comprise a controller (1080). The controller (1080) may be disposed on the printed circuit board (1050). The controller (1080) can be electrically connected to the coils (1520, 1620, 1720) of the lens driving device (1010) and the sensors (1530, 1630, 1730). The controller (1080) can individually control the direction, strength, and amplitude of the current supplied to the coil (1330). The controller (1080) can control the lens driving device (1010) to perform the autofocus function and/or the image stabilization function. Furthermore, the controller (1080) can perform autofocus feedback control and/or image stabilization feedback control for the lens driving device (1010).

The camera device (1010A) may comprise a connector (1090). The connector (1090) can be electrically connected to the printed circuit board (1050). The connector (1090) may comprise a port for electrically connecting to an external device.

The following describes an optical device according to a second embodiment of the present invention, referring to the drawings.

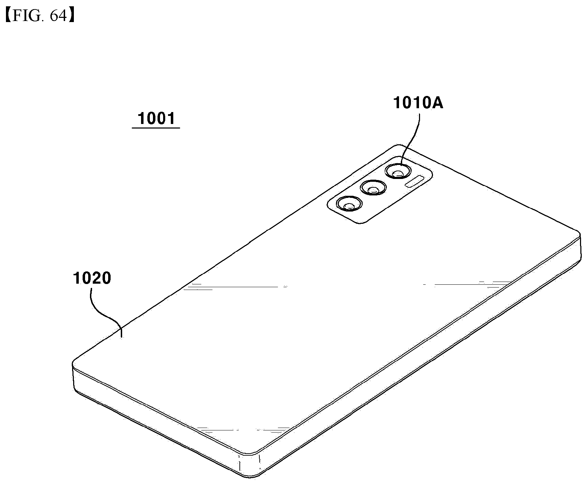

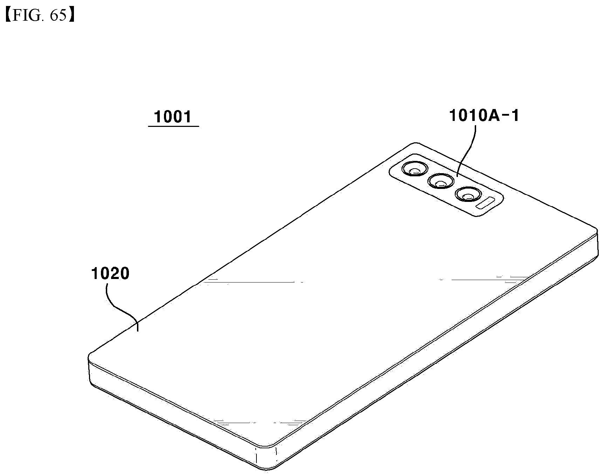

FIG. 64 is a perspective view of an optical device according to a second embodiment of the present invention, and FIG. 65 is a perspective view of an optical device according to a variant example.

Optical device (1001) may comprise one or more of a mobile phone, cellular phone, portable terminal, mobile terminal, smart phone, smart pad, portable smart device, digital camera, laptop computer, digital broadcasting terminal, personal digital assistant (PDA), portable multimedia player (PMP), and navigation device. The optical device (1001) may comprise any device for taking images or photographs.

The optical device (1001) may comprise a main body (1020). The optical device (1001) may comprise a camera device (1010A). The camera device (1010A) may be disposed in the main body (1020). The camera device (1010A) can photograph a subject. The optical device (1001) may comprise a display. The display may be disposed in the main body (1020). The display can output one or more of the videos and images captured by the camera device (1010A). The display may be disposed on the first surface of the main body (1020). The camera device (1010A) may be disposed on one or more of the first surface of the main body (1020) and the second surface opposite the first surface. As shown in FIG. 64, the camera device (1010A) may be disposed with a triple camera in a vertical direction. As shown in FIG. 65, a camera device (1010A-1) may be disposed with a triple camera in a horizontal direction.

Although the first embodiment and the second embodiment are distinguished in the above, some configurations of the first embodiment and some configurations of the second embodiment can be mixed. In other words, some configurations of the first embodiment can be replaced by corresponding configurations of the second embodiment. In addition, some configurations of the second embodiment may be replaced by corresponding configurations of the first embodiment. In addition, the third embodiment of the present invention may comprise both some configurations of the first embodiment and some configurations of the second embodiment.

The above-described embodiments of the present invention have been described with reference to the accompanying drawings, and those skilled in the art will understand that the present invention can be implemented in other specific forms without changing its technical ideas or essential features. Therefore, the embodiments described above should be understood as exemplary in all respects and not as limiting.

## Claims

1. A lens driving device comprising:
a coil part;
a housing disposed on the coil part;
a first carrier movable in an x-axis perpendicular to an optical axis direction;
a second carrier movable in a y-axis perpendicular to the optical axis direction;
a bobbin disposed in the second carrier;
a first magnet disposed on the bobbin;
a second magnet disposed on the first carrier;
a third magnet disposed on the second carrier;
a first ball disposed between the housing and the first carrier; and
a second ball disposed between the first carrier and the second carrier,
wherein the coil part comprises a second coil disposed to face the second magnet in the optical axis direction and a third coil disposed to face the third magnet in the optical axis direction.

2. The lens driving device of claim 1, wherein the third magnet is disposed between the second carrier and the third coil, and disposed lower than the second ball.

3. The lens driving device of claim 1, wherein the housing does not move.

4. The lens driving device of claim 1, comprising a first coil disposed on the housing and disposed to face the first magnet.

5. The lens driving device of claim 1, comprising a third ball disposed between the bobbin and the second carrier.

6. The lens driving device of claim 1, wherein the second carrier comprises a protrusion protruding in a direction of the third coil, and
wherein the third magnet is disposed on the protrusion.

7. The lens driving device of claim 6, wherein the first carrier comprises a groove into which the protrusion is inserted.

8. The lens driving device of claim 1, wherein the second magnet and the third magnet are overlapped on a virtual plane perpendicular to the optical axis direction.

9. The lens driving device of claim 8, wherein the virtual plane and the first magnet are not overlapped.

10. A lens driving device comprising:
a stationary part;
a first movable part disposed in the stationary part;
a second movable part disposed in the first movable part;
a first drive part configured to move the first movable part in a direction perpendicular to an optical axis; and
a second drive part configured to move the second movable part in an optical axis direction,
wherein the second drive part comprises a first magnet disposed on the second movable part and a first coil disposed to face the first magnet and disposed on the stationary part.
